# EUROPEAN PATENT APPLICATION

(11) **EP 4 550 773 A1**
(43) Date of publication of application: **07.05.2025**
(21) Application number: 23830901.7
(22) Date of filing: 24.05.2023
(51) Int. Cl.: H04N 5/92, H04N 19/20, H04N 19/70, H04N 21/433, H04N 21/44, H04N 21/84, H04N 21/845

(54) **INFORMATION PROCESSING DEVICE, INFORMATION PROCESSING METHOD, AND COMPUTER PROGRAM**

(30) Priority: 29.06.2022 JP 2022104896; 02.11.2022 JP 2022176531
(71) Applicant: CANON KABUSHIKI KAISHA, Tokyo 146-8501 (JP)
(72) Inventor: FUKADA Masanori, Tokyo 146-8501 (JP); DENOUAL Franck, Tokyo 146-8501 (JP); MAZE Frédéric, Tokyo 146-8501 (JP); RUELLAN Hervé, Tokyo 146-8501 (JP)
(74) Representative: Canon Europe Limited
(86) International application number: PCT/JP2023/019253
(87) International publication number: WO 2024/004449

(57) **Abstract**

At least one piece of region information that describes at least one piece of shape information for identifying a substance included in the image is generated, and association information that associates the image with the region information is generated. Combination type information that combines the region information is generated. Combined region information for identifying a region combined in accordance with the combination type information is generated. In an image file, the at least one piece of region information, the association information, the combination type information, and the combined region information are stored.

## Description

### TECHNICAL FIELD

The present invention relates to an information processing apparatus, an information processing method, and a computer program.

### BACKGROUND ART

Recent cameras, smartphones, and image analysis services can generate an annotation (metadata that is readable by a human or a computer and enables to identify, for example, what an object is or, metadata concerning an image) associated with a portion or an object in an image. For example, it is possible to detect a subject person, a face, a substance, or the like captured in an image. This can manually be done, but recognition and the like by AI is usable because of the development of deep learning technologies. At this time, information identifying a region or annotation information can be added as metadata indicating a recognized object.

An image captured by a camera or a smartphone or an image processed by an image analysis service is stored in a storage device such as a memory card. The image is normally encoded to reduce its data size on the storage device. In encoding, many codec standards such as JPEG, H.264 (AVC), H.265 (HEVC), H.266 (VVC), and AV1 can be used. To store these encoded images in files, a normative structure including metadata is defined, and a method of associating stored images and a metadata configuration of a specific format are defined. As a file format of this type, the ISO base media file format (ISOBMFF, ISO/IEC 14496-12) is defined.

The ISOBMFF is used for transmission via a local storage, a network, or another bitstream distribution mechanism. The ISOBMFF is a well-known flexible and extendable file format that encapsulates and describes encoded media data or bitstream with time or without time. This file format has several extensions. For example, ISO/IEC 14496-15 defines an encapsulation tool of a video encode format of various NAL (Network Abstraction Layer) units base. Examples of such an encoding format are AVC (Advanced Video Coding), SVC (Scalable Video Coding), HEVC (High Efficiency Video Coding), L-HEVC (Layered HEVC), and VVC (Versatile Video Coding).

Another example of file format extension is ISO/IEC 23090-2 that defines Omnidirectional Media Application Format (OMAF). Still other examples of file format extension are ISO/IEC 23090-10 and ISO/IEC 23090-18, which define transmission of Visual Volumetric Video-based Coding (V3C) media data and Geometry-based Point Cloud Compression (G-PCC) media data.

Another example of file format extension is High Efficiency Image File Format (ISO/IEC 23008-12, HEIF) that defines an encapsulation tool for a still image sequence such as a still image or an HEVC still image.

These file formats are standards developed by the Moving Picture Experts Group (MPEG) to store and share images and image sequences, and define structures with object orientation.

PTL 1 discloses a method of identifying a region in an image stored in a HEIF as a Region item, making an intra-image region identifiable in association with the stored image, and adding annotation information to the identified intra-image region.

PTL 2 disclose a method for extracting a plurality of spatial portions of an image to be stored in a HEIF and storing these and reconstructing one image data by combining these extracted portions. This can record, as an image file, one image expression formed by a plurality of still images called derived images.

### CITATION LIST

### PATENT LITERATURE

PTL 1: International Publication No. 2021/204526
PTL 2: Japanese Patent Laid-Open No. 2021-119713

### SUMMARY OF INVENTION

### TECHNICAL PROBLEM

In the method of PTL 1, a Region item identified as a region defines the region using a predetermined shape and, therefore, it cannot flexibly define the region. As a flexible shape description, a Mask shape is defined. However, the description data size of the Mask data is large. That is, a flexible description using a predetermined shape increases the description data size, or the shape needs to be expressed using a defined specific shape, a flexible shape designation, that is, an expression obtained by combining regions is not taken into consideration.

In addition, although the structure can add annotation information to an identified region, it is impossible to show the association between regions or add another annotation by combining regions. Identifying as a group using metadata described as an annotation can be considered. However, these cannot be identified without analyzing all of an enormous amount of annotation information. Furthermore, it is impossible to identify whether a common annotation is added for grouping or the same annotation is added to regions not belonging to a group.

On the other hand, the method described in PTL 2 makes it possible to express a combination of data units of an image but not to express a combination of identification regions according to a subject in an image. The present invention provides a technique of generating an image file having a structure capable of flexibly designating a region in an image and identifying association of each region.

### SOLUTION TO PROBLEM

An information processing apparatus as an aspect of the present invention is an information processing apparatus for generating a media file, characterized by comprising acquisition means for acquiring an image, first acquisition means for acquiring at least one piece of region information that describes at least one piece of shape information for identifying a substance included in the image, second acquisition means for acquiring association information that associates the image with the region information, third acquisition means for acquiring combination type information that combines the region information, fourth acquisition means for acquiring combined region information for identifying a region combined in accordance with the combination type information, and storage means for storing, in a media file, the at least one piece of region information, the association information, the combination type information, the combined region information, and the image.

### ADVANTAGEOUS EFFECTS OF INVENTION

According to the present invention, it is possible to generate an image file having a structure capable of flexibly designating a region in an image and identifying association of each region.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram showing an example of the hardware configuration of an image file storage apparatus 100;
Fig. 2 is a view showing the structure of an HEIF file;
Fig. 3A is a view showing an example of the definition of the structure of region information;
Fig. 3B is a view showing an example of the definition of the structure of region information;
Fig. 4 is a view showing the structure of EntityToGroupBox;
Fig. 5 is a view showing an example of the definition of the structure of annotation information;
Fig. 6 is a view showing the structure of CombinedRegionEntityGroupBox;
Fig. 7 is a view showing the structure of MultiplyRegionEntityGroupBox;
Fig. 8 is a view showing the structure of InverseRegionEntityGroupBox;
Fig. 9 is a view showing the structure of LogicalOperateRegionEntityGroupBox;
Fig. 10 is a view showing the structure of InclusionRelationRegionEntityGroupBox;
Fig. 11 is a view showing the structure of TouchRelationRegionEntityGroupBox;
Fig. 12 is a view showing the structure of DepthOrderRelationRegionEntityGroupBox;
Fig. 13 is a view showing the structure of ForbidRelationRegionEntityGroupBox;
Fig. 14 is a view showing the structure of InvereRegionProperty;
Fig. 15 is a view showing the structure of Logical OperateRegionProperty;
Fig. 16A is a view showing an example of the configuration of an image file;
Fig. 16B is a view showing an example of the configuration of an image file;
Fig. 16C is a view showing an example of the configuration of an image file;
Fig. 17 is a flowchart of HEIF file generation processing;
Fig. 18 is a flowchart of reproduction processing concerning reproduction (display) of an HEIF file;
Fig. 19 is a view showing an example of display of region information and region annotation information;
Fig. 20 is a view showing an example of display of region information and region annotation information;
Fig. 21 is a view showing an example of display of region information and region annotation information;
Fig. 22 is a view showing the structure of an HEIF file;
Fig. 23 is a view showing the structure of RegionLogicalDerivation;
Fig. 24A is a view showing an example of the configuration of an image file;
Fig. 24B is a view showing an example of the configuration of an image file;
Fig. 24C is a view showing an example of the configuration of an image file;
Fig. 25 is a view showing the data structure of a derived region item;
Fig. 26 is a view showing the definition of CombinedRegionItem;
Fig. 27 is a view showing the definition of CompoundEntityToGroupBox;
Fig. 28 is a view showing an example of presentation including region information stored in a media file;
Fig. 29 is a view showing an example of a region track 2920;
Fig. 30 is a view showing another example in the embodiment;
Fig. 31A is a view showing an example of a region track 3110, for example, 'rgan' track; and
Fig. 31B is a view showing an example in which a description of a combined region 3155 is included in the metadata portion of a combined region track 3150.

### DESCRIPTION OF EMBODIMENTS

Hereinafter, embodiments will be described in detail with reference to the attached drawings. Note, the following embodiments are not intended to limit the claimed invention. Multiple features are described in the embodiments, but limitation is not made to an invention that requires all of these features, and multiple such features may be combined as appropriate. Furthermore, in the attached drawings, the same reference numerals are given to the same or similar configurations, and redundant description thereof is omitted.

### [First Embodiment]

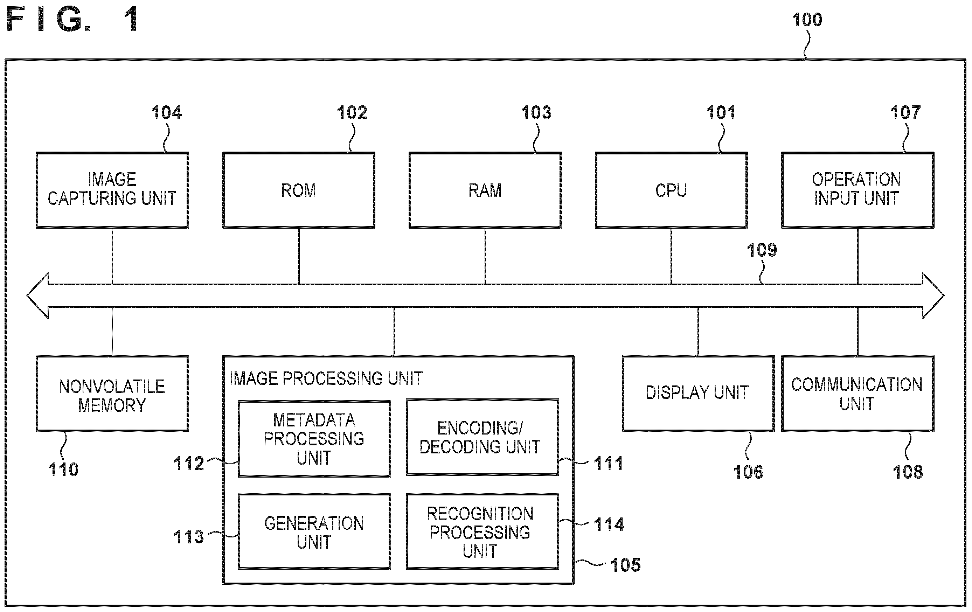

First, an example of the hardware configuration of an image file storage apparatus 100 that functions as an information processing apparatus according to this embodiment will be described with reference to the block diagram of Fig. 1. As shown in Fig. 1, the function units of the image file storage apparatus 100 are configured to be communicable with each other via a system bus 109. Note that in this embodiment, a case where the function units shown in Fig. 1 are implemented by hardware will be described, but some function units or function units that execute some functions of the functions of some function units may be implemented by software (computer program). In this case, the computer program is executed by a CPU 101 and, as a result, corresponding functions are implemented.

The CPU 101 executes various kinds of processing using computer programs and data stored in a RAM 103 or a ROM 102. The CPU 101 thus controls the operation of the entire image file storage apparatus 100 and executes or controls various kinds of processing to be described as processing to be performed by the image file storage apparatus 100.

The ROM 102 is an example of a nonvolatile storage device capable of permanently storing information. The setting data of the image file storage apparatus 100, a computer program and data associated with activation of the image file storage apparatus 100, a computer program and data associated with the basic operation of the image file storage apparatus 100, and the like are stored in the ROM 102. The data stored in the ROM 102 include, for example, parameters, display data, and the like necessary in the operation of each function unit.

The RAM 103 is an example of a volatile storage device capable of temporarily storing information. The RAM 103 includes an area configured to store computer programs and data loaded from the ROM 102 or a nonvolatile memory 110 and an area configured to store a captured image input from an image capturing unit 104. Also, the RAM 103 includes an area used when the image processing unit 105 executes various kinds of processing, an area used to store data that a communication unit 108 receives from the outside, and a work area used when the CPU 101 executes various kinds of processing. The RAM 103 can thus appropriately provide various kinds of areas.

For example, the RAM 103 is used not only as an area to expand a computer program but also as a storage area (output buffer) that temporarily stores data and the like output in the operations of various function units.

The image capturing unit 104 photoelectrically converts an optical image formed on the imaging plane of an image capturing element (for example, an image capturing element such as a CMOS sensor or a CCD) via an optical system (not shown), and performs various kinds of image processing (noise removal processing, gain processing, and the like) for an analog signal obtained by the photoelectric conversion. Then, the image capturing unit 104 A/D-converts the analog signal that has undergone the various kinds of image processing into a digital signal, and outputs the digital signal as a captured image.

The image processing unit 105 executes various kinds of image processing for an image. The image processing includes, for example, processing associated with development such as gamma conversion, color space conversion, white balance processing, and exposure correction. Also, the image processing unit 105 may be able to execute image analysis processing or composition processing of compositing two or more images.

The image processing unit 105 includes an encoding/decoding unit 111, a metadata processing unit 112, a generation unit 113, and a recognition processing unit 114. In this embodiment, to facilitate understanding, a description will be made assuming that hardware that is one image processing unit 105 executes processes by the function units (the encoding/decoding unit 111, the metadata processing unit 112, the generation unit 113, and the recognition processing unit 114). However, the processes by the function units (the encoding/decoding unit 111, the metadata processing unit 112, the generation unit 113, and the recognition processing unit 114) may be executed by a plurality of pieces of hardware.

The encoding/decoding unit 111 is a codec for a moving image or a still image complying with H.265 (HEVC), H.264 (AVC), H.266 (VVC), AV1, JPEG, and the like. The encoding/decoding unit 111 executes encoding or decoding of an image (a still image or a moving image (image sequence)) handled by the image file storage apparatus 100.

The metadata processing unit 112 acquires data (encoded data) of an image encoded by the image encoding/decoding unit 111. The metadata processing unit 112 generates an image file that complies with a predetermined file format (for example, HEIF) and includes the encoded data and metadata associated with the encoded data. More specifically, the metadata processing unit 112 executes analysis processing of encoded data stored in the image file including a still image, an image sequence, or the like, and generates information concerning the still image or the image sequence, and acquires parameters associated with the encoded data. The metadata processing unit 112 then executes processing of storing, in an image file, these pieces of information as metadata together with the encoded data. Note that the metadata processing unit 112 can generate not only an HEIF file but also, for example, an image file complying with another moving image file format defined by MPEG or a format such as JPEG. Note that the encoded data to be acquired may be data stored in the ROM 102 or the nonvolatile memory 110 in advance or data acquired via the communication unit 108 and stored in the RAM 103. Also, the metadata processing unit 112 performs generation and storage of metadata according to region information generated by the generation unit 113 and combination information of region information. Furthermore, the metadata processing unit 112 analyzes metadata stored in an image file and performs metadata processing at the time of reproduction of a still image or an image sequence. In addition, the metadata processing unit 112 performs processing such as generation of metadata associated with information identifying a region of an image to be stored in an image file based on region information generated by the generation unit 113 and combined region information thereof and generation of metadata that associates region information and an image. Generation processing of metadata concerning annotation information to be associated with an image or region information is also performed. The metadata processing unit 112 also performs analysis processing of these metadata at the time of image reproduction processing.

The generation unit 113 generates region information capable of identifying a subject object in accordance with the information of the subject object that the recognition processing unit 114 detects from an image, and generates type information indicating a combination of the region information. Furthermore, the generation unit 113 generates annotation information to be added to region information or combination information according to a combination of region information. Note that when generating region information or the like, not the subject object detection result by the recognition processing unit 114 but information of a region designated by a user operating an operation input unit 107 may be used.

The recognition processing unit 114 performs object recognition processing using, for example, AI for an image stored in an image file, and performs processing of detecting a subject object from the image. Note that in the object recognition processing, an object of a subject may be detected by content analysis, and this processing may be executed by, for example, an external device capable of performing communication with the image file storage apparatus 100 via the communication unit 108. In this case, the image file storage apparatus 100 acquires a subject object detection result from the external device. The recognition processing unit 114 acquires information such as the position of a subject object in the image or the region of a subject object in the image. Note that in the object recognition processing, various kinds of detection processing such as a plurality of objects and the association between the objects can be performed in accordance with a recognition algorithm.

The display unit 106 is a display device including a liquid crystal display (LCD), a touch panel screen, or the like, and it may be a display device detachably connected to the image file storage apparatus 100 or may be a display device integrated with the image file storage apparatus 100. The display unit 106 displays an image (a still image or a moving image) that is being captured by the image capturing unit 104 (live view display), or displays information such as various kinds of settings/GUI (Graphical User Interface). Also, the display unit 106 displays an image when a generated image file is reproduced.

The operation input unit 107 is a user interface including operation buttons, switches, a mouse, a keyboard, and the like, and the user can input various kinds of instructions to the CPU 101 by operating this. Note that in a mode in which the display unit 106 is a touch panel screen, the operation input unit 107 may include a touch panel sensor.

The communication unit 108 is a communication interface configured to perform data communication with an external device. The communication unit 108 may be, for example, a network interface that is connected to a network and transmits/receives a transmission frame. In this case, the communication unit 108 may be, for example, a PHY and MAC (transmission media control processing) capable of performing wired LAN connection by Ethernet^{®}. Alternatively, if the communication unit 108 can be connected to a wireless LAN, the communication unit 108 may include a controller that executes wireless LAN control such as IEEE 802.11a/b/g/n/ac/ax, an RF circuit, and an antenna.

The nonvolatile memory 110 is a nonvolatile information storage device having a large storage capacity, for example, an SD card, a compact flash^{®}, or a flash memory. For example, in the nonvolatile memory 110, an image file generated in this embodiment can be stored, or an image file acquired from an external device via the communication unit 108 can be stored.

Note that the hardware configuration shown in Fig. 1 is merely an example of a configuration capable of implementing the operation of the image file storage apparatus 100 to be described below, and changes/modifications can appropriately be made. For example, the image capturing unit 104 is integrated with the image file storage apparatus 100 in Fig. 1, but may detachably be connected to the image file storage apparatus 100. Also, the image processing unit 105 may be a device detachably attached to the image file storage apparatus 100, or may be an external device capable of communicating with the image file storage apparatus 100 via the communication unit 108.

Image file generation by the image file storage apparatus 100 will be described next. An image file generated by the image file storage apparatus 100 can store a plurality of images and is configured to include information attached to these. A mode in which HEIF is employed as the file format of the image file, necessary information is derived to generate an image file (HEIF file) complying with this, and metadata to be attached is formed will be described blow. However, the present invention is not limited to this and, for example, the file format employed for the image file to be generated may be a format such as, for example, another moving image file format defined by MPEG, an omnidirectional media application file format, a file format that handles 3D data such as point group data, or JPEG.

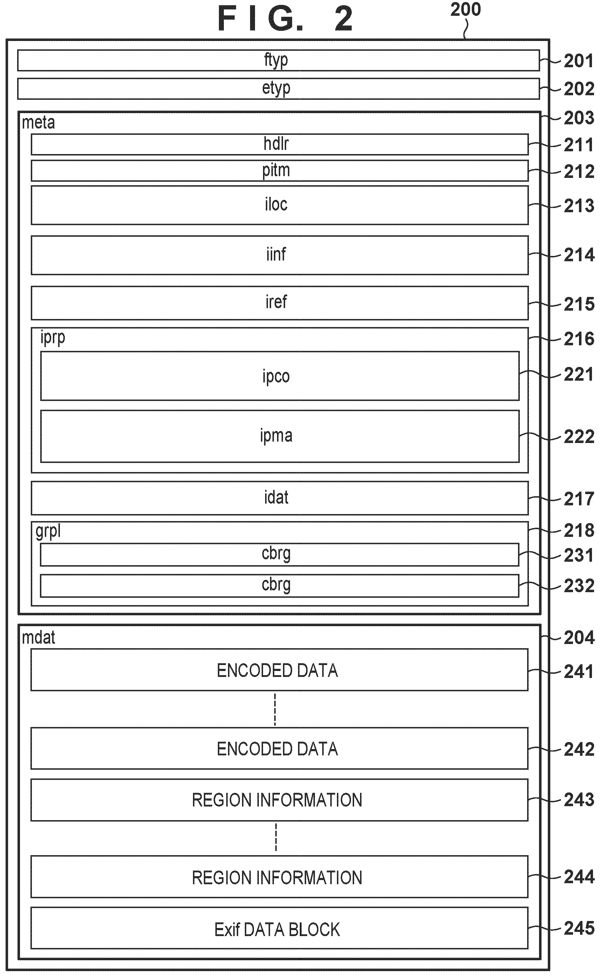

The file structure of the HEIF file will be described next with reference to Fig. 2. As shown in Fig. 2, an HEIF file 200 substantially includes following four boxes (storage areas).

A first box 201 is FileTypeBox ('ftyp'), and a brand name used by a reader (Reader) of the HEIF file 200 to identify the specifications of the HEIF file 200 is stored in the box 201.

A second box 202 is ExtendedTypeBox ('etyp'), and an extended brand name used by a reader (Reader) of the HEIF file 200 to identify the specifications of the HEIF file 200 is stored in the box 202. Here, a 'unif' brand definition and the like configured to make a track ID, an item ID, an entity group ID, or the like usable as a uniquely identifiable value at a file level is stored.

A third box 203 is MetaBox ('meta'). As shown in Fig. 2, in the box 203, a plurality of types of information associated with an image are stored separately in different boxes, as will be described below in detail.

A fourth box 204 is MediaDataBox ('mdat'), and encoded data (images) 241 to 242 are stored as encoded bitstreams in the box 204. Also, pieces of region information 243 to 244 indicating regions in an image are stored in the box 204. Furthermore, an Exif data block 245 that stores information at the time of image capturing by the image capturing unit 104 and the like is stored in the box 204. In this embodiment, a mode in which the box 204 is employed as an area to store the encoded data 241 to 242, the region information 243 to 244, and the Exif data block 245 will be described. However, as the area, for example, a box structure such as 'idat' or 'imda' may be employed. Note that in the following explanation, the encoded data 241 to 242 stored in the box 204 will appropriately be mentioned using different terms as "images" or "encoded data".

Note that when storing a moving image, audio, or an image sequence, MovieBox ('moov') (not shown) may be stored separately. In this box, metadata configured to describe various kinds of information concerning presentation of a moving image, audio, or the like stored in the image file is stored. Note that if stored data is an image sequence, metadata is stored using a mechanism that describes various kinds of information concerning a moving image, but time limit information is optional information, unlike a moving image.

A box 211 is HandlerReferenceBox ('hdlr'), and stores a declaration of a handler type used to analyze the structure of the box 203. In the HEIF file 200 generated by the image file storage apparatus 100 according to this embodiment, the target of metadata describing untimed data stored in the box 203 is a still image. For this reason, a handler type name 'pict' is set in the box 211 to identify that a still image is the target.

A box 212 is PrimaryItemBox ('pitm'), and an identifier (item ID) of image data, which is a representative item of image items stored in the HEIF file 200, is designated. Reproduction display is performed assuming that an image item designated as a first priority item is an image that is a normal display target.

A box 213 is ItemLocationBox ('iloc'), and stores information indicating the storage locations of information items including an image item in the HEIF file 200. The box 213 typically describes the storage location of an image item as a byte offset from the top of the HEIF file 200 and a data length from the top. That is, by the information in the box 213, the positions of the encoded data, the region information, and the Exif data block stored in the box 204 can be specified. For a derived item, the information in the box 213 indicates that no data exists in the box 204. In this case, it is indicated that there is no data structure, or the data of a derived item is stored in a box 217 in the box 203.

A box 214 is ItemInfoBox ('iinf'), and pieces of basic information (item information) such as an item ID and an item type indicating the type of an item are defined for all items included in the HEIF file 200. In the item information, not only image items such as an encoded image item and a derived image item but also a region item indicating a region in the image, an Exif information item indicating an Exif data block, and the like are designated.

A box 215 is ItemReferenceBox ('iref'), and stores information that describes association between the items included in the HEIF file 200. In a mode in which an image item is a captured image, the box 215 is used to describe the association between the image item and an item of image capturing information thereof (Exif data or the like). In a mode in which a plurality of image items have a relationship of derived images, the box 215 is used to describe the association between the image items. In a mode in which a region in an image item is indicated, the box 215 is used to describe the association between the image item and a region item. To associate items, an item reference type is designated, and the type of item reference can be identified. Also, the reference relationship between items is described by describing item IDs designated in from_item_ID and to_item_ID in the box 214.

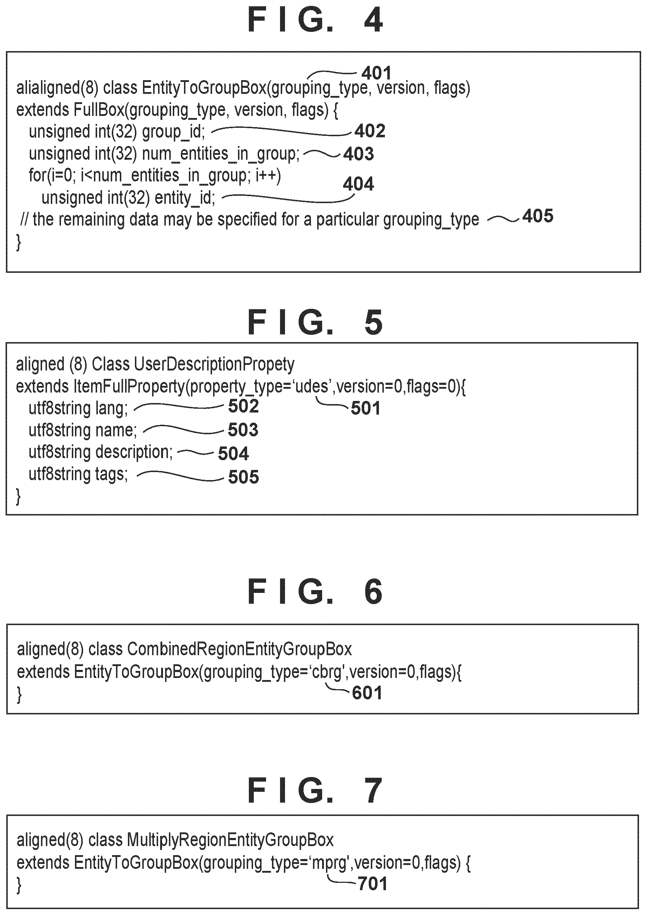

A box 216 is ItemPropertiesBox ('iprp'), and stores various kinds of attribute information (item properties) of an information item included in the HEIF file 200. More specifically, the box 216 includes ItemPropertyContainerBox ('ipco') that is a box 221 describing attribute information, and ItemPropertyAssociation ('ipma') that is a box 222 indicating association between attribute information and each item. The box 221 may store, for example, attribute information such as entry data indicating a HEVC parameter set that is necessary for decoding of an HEVC image item, and entry data indicating the width and height of an image item on a pixel basis. It is also possible to designate attribute information capable of designating arbitrary text information as an item property. UserDescriptionProperty ('udes') shown in Fig. 5 is an example of attribute information capable of storing arbitrary text information. UserDescriptionProperty shown in Fig. 5 includes a 4-character code 'udes' shown in a definition 501, and UserDescriptionProperty is identified using the 4-character code. The udes property includes user-defined name information (name) 503, annotation description information (description) 504, and tag information (tag) 505, and can be associated with an item or an entity group. The udes property further includes lang 502, and a language used in the udes property is indicated by a language tag character string based on IETF RFC5646. If a plurality of udes properties are associated with the same item or entity group, these indicate options designated by different languages, and the reader can select an appropriate one. Here, the name information 503 is information indicating, in a human-readable mode, the name of the item or entity group associated with the udes property. Also, the annotation description information 504 is information indicating, in a human-readable mode, a text presented as an explanation or an annotation concerning the item or entity group associated with the udes property. The tag information 505 is information indicating a tag defined by the user or automatically assigned and associated with the item or entity group associated with the udes property, and is configured to be capable of including a plurality of tags delimited by, for example, commas. When the udes property is associated with a region item, annotation information can be associated as a text description with a specific region indicated by the region item associated with the image item.

It is also possible to designate, as attribute information that can be designated as an item property, TransformativeProperty intended to convert an image and display it when outputting the image. This may store, for example, data indicating rotation information for rotating an image and displaying it, data indicating cutout information for cropping (cutting out) an image and displaying it, or the like.

Next, a box ('ipma') 222 stores, for each item, entry data indicating association with attribute information stored in the box 221 using the ID (item ID) of an information item. Note that if there is no attribute information to be associated with an item, like an Exif data block information item, entry data indicating association is not stored.

The box 217 is ItemDataBox ('idat'), and stores data concerning an item included in the HEIF file 200. In the box 217, for example, a data structure for describing a derived image item is stored. Here, for example, if the item type indicated by the box 214 is 'grid' item, the data structure of a grid derived image item that reconstructs an input image in a predetermined grid order and defines it is designated. For an input image of a derived image item, an item reference of dimg reference type is designated using the box 215. Note that if the derived item is, for example, an identity derived image item 'iden' that has no data structure, any data structure is not stored in the box 217.

A box 218 is GroupListBox ('grpl'), and stores metadata configured to group entities such as items or tracks included in the HEIF file 200 and store. In the box 218, a box that extends and defines EntityToGroupBox shown in Fig. 4 for each grouping type parameter is stored. EntityToGroupBox includes grouping_type indicated by a definition 401. The grouping_type includes a 4-character code defined for each grouping type, and the grouping type of EntityToGroupBox is identified using the 4-character code. The grouping type is a concept defining the relationship between a plurality of entities included in a group. EntityToGroupBox includes group_id 402 for uniquely identifying an entity group itself, and num_entities_in_group 403 indicating the number of entities included in the entity group. Also, EntityToGroupBox includes entity_id 404 as many as the number designated by num_entities_in_group. In entity_id 404, an item ID that identifies an item defined in the box 214 or a track ID that identifies a single track of presentation included in MovieBox (not shown) can be designated. In an entity group of a specific group type, group_id that identifies another entity group can be designated. Also, EntityToGroupBox is configured such that it can be extended and defined for each grouping type, and is defined as a structure capable of defining an extension parameter according to the grouping type in a portion 405. As described above, in EntityToGroupBox, entities such as image items or tracks included in a group can be handled as a meaningful group unit by the grouping type. In the box configuration shown in Fig. 2, boxes 231 and 232 (CombinedRegionEntigyGroupBox ('cbrg')) obtained by extending EntityToGroupBox to a grouping type 'cbrg' that is one of grouping types for grouping region information are stored. The boxes 231 and 232 are extension definitions of EntityToGroupBox, as described above, and therefore include the definitions 402 to 404 included in EntityToGroupBox, and grouping_type 401 includes 'cbrg' that is a 4-character code (4CC) for identifying CombinedRegionEntityGroupBox.

Also, in entity_id, an item ID indicating a region item is designated, and regions are combined. Note that in entity_id, the group ID of an entity group that puts separately defined regions into a group can be also designated. This makes it possible to combine a region item and a region item group or combine between region item groups. Note that detailed definition for the 'cbrg' entity group or other grouping types will be described later.

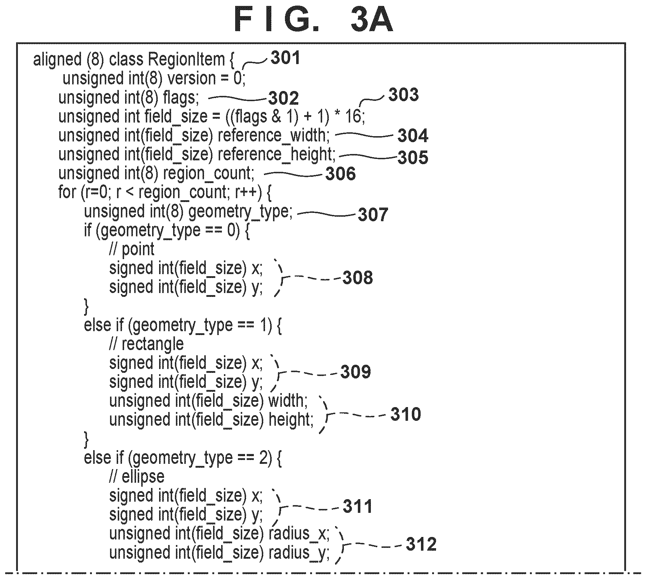

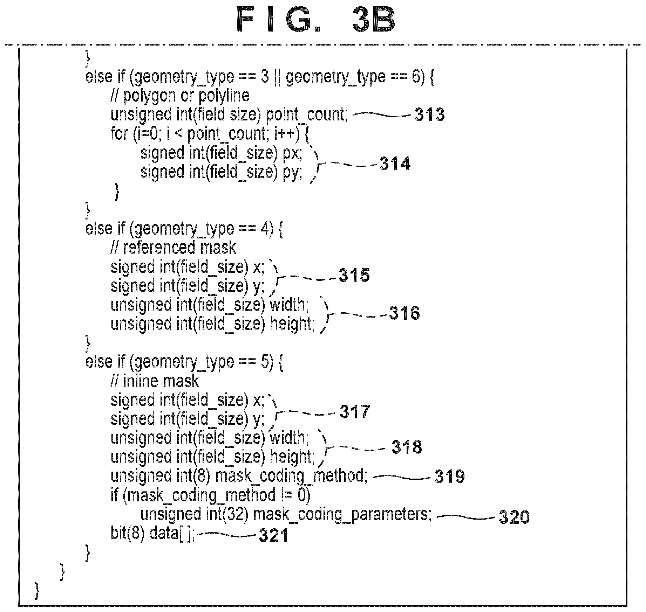

The structure of the region information 243 to 244 stored in the box 204 will be described next with reference to Figs. 3A and 3B showing the definition. An item whose item type shown in the iinf box is 'rgan' defines a region item intended to identify a region in an image. As for association between region information and encoded data, an item reference of cdsc reference type is designated using the iref box, and the region in the image is defined. As shown in Figs. 3A and 3B, the one region information 243 to 244 each include version information 301 of the data structure, and flags 302 used to selectively handle processing or the structure in accordance with the value. In this embodiment, the version information 301 is designated to 0. The region information also includes data size information 303 indicating the size (field_size) of a parameter handled in the data structure. In this embodiment, the size handled in the data structure of the region information 243 or the region information 244 is configured to be able to be switched between 16 bits and 32 bits, and one of the data sizes is decided based on the values of flags.

In addition, as shown in Figs. 3A and 3B, space size information indicating the two-dimensional size of a reference space used to define a region associated with the region information 243 or 244 is included. As shown in Figs. 3A and 3B, the space size information includes reference_width 304 indicating the width of the reference space, and reference_height 305 indicating the height of the reference space. Considering that a HEIF file can store images of a plurality of image sizes, and the image sizes can be changed by editing, it is not efficient to store the region information 243 or 244 for each of the image sizes of the stored images. Hence, in this embodiment, a reference space that assigns an image size handled by the region information 243 or 244 to the whole is introduced, and various kinds of information of a region are defined for the reference space, thereby relatively performing region definition independent of the image size of an image. For example, in a mode in which the reference space has a size of 1,024 pixels × 512 pixels, a region specified for an image of the same image size is defined, in the image, with values equal to a position, a width, and a height indicated by region shape information 307 to be described later. On the other hand, a region specified for an image having a size of 2,048 pixels × 1,024 pixels is defined, in the image, with values obtained by multiplying, by two, the position, the width, and the height indicated by the region shape information 307 to be described later. That is, the region information 243 and 244 each define a region as a relative position/shape in the entire image, and the space size information defines the two-dimensional size of the reference space assigned to the whole.

Also, as shown in Figs. 3A and 3B, region count information 306 indicating the number of regions (region_count) defined by the region information 243 or 244 and the region shape information 307 indicting the shape (geometry _type) of each of defined regions are included. In the region information 243 or 244 according to this embodiment, one of a point, a rectangle, an ellipse, a polygon, a polyline, a referenced mask, and an inline mask can be selected as the shape of a region, and the shape is specified by the value of geometry_type. Note that in this embodiment, a description will be made assuming that seven types of two-dimensional shapes can be selected as a region, but the present invention is not limited to this. That is, it can easily be understood that if an arbitrary space in an image can be specified, for example, a line, a triangle, a free curve, a 3D shape, or the like can be used as the region shape information 307.

Here, in the region shape information 307, the method of describing specific parameters for region specification changes depending on the shape. If the shape of a region is a point (geometry_type is 0), the region is specified by position information (x, y) 308 indicating the coordinates of the point in the reference space. If the shape of a region is a rectangle (geometry_typeis 1), the region is specified by position information (x, y) 309 indicating the coordinates of a point (reference point) at the upper left corner of the rectangle in the reference space, and shape definition information 310 indicating the width and the height of the rectangle. If the shape of a region is an ellipse (geometry_type is 2), the region is specified by position information (x, y) 311 indicating the coordinates of the center of the ellipse in the reference space, and shape definition information 312 indicating the length of the radius (radius_x) of the ellipse in the x-axis direction and the length of the radius (radius_y) in the y-axis direction. If the shape of a region is a polygon (geometry_type is 3) and a polyline (geometry_type is 6), the region is specified by vertex count information 313 indicating the number of vertices of the polygon in the reference space, and position information (px, py) 314 indicating the coordinates of the vertices. As for the shape difference between the polygon (geometry_type is 3) and the polyline (geometry_type is 6), a shape formed by connecting the start point and the end point of the position information indicating the coordinates of the vertices is a polygon (geometry_type is 3), and a shape in which the start point and the end point are not connected is a polyline (geometry_type is 6). If the shape of a region is a referenced mask (geometry_type is 4), another item defined as a mask image item is associated with an encoded image using a reference type mask in the iref box. The region is specified by position information (x, y) 315 indicating the coordinates of a point (reference point) at the upper left corner of the referenced mask in the reference space, and shape definition information 316 indicating the width and the height of the referenced mask. Note that if 0 is designated as the width and the height, the size information is associated as an item property with the referenced mask image item. If the shape of a region is an inline mask (geometry_type is 5), an image portion corresponding to pixels having a value of 1 in a mask image stored in data 321 indicates the region. The region is specified by position information (x, y) 317 indicating the coordinates of a point (reference point) at the upper left corner of the region (rectangle) in the reference space, and shape definition information 318 indicating the width and the height of the region. Additionally, as shown in Figs. 3A and 3B, mask_coding_method 319 indicating a coding method applied to the mask included in the data is included. If the value of mask _coding_method 319 is 0, encoding is not adapted to the mask. If the value of mask_coding_method 319 is 1, it indicates that deflate compression defined by RFC1951 is adapted. Other values are reserved and not defined. The mask_coding_parameters 320 indicates an additional encoding parameter necessary for normally processing encoded mask data. If the value of mask_coding_method 319 is 1, mask_coding_parameters 320 indicates the number of bytes of coded mask array data. The value of mask_coding_parameters is reserved when the value of mask_coding_method is larger than 1. In data 321, a coded expression of a mask including the pixels of an inline mask or a non-compressed expression is included in a raster scan order. Each pixel is represented by 1 bit, and 8 pixels are packed into 1 byte. Byte packing is done in a big-endian order. If the width of the mask is not a multiple of 8 pixels, padding is not done at the end of each line. Only the last data byte is padded by a bit set to 0.

Next, a definition of setting a region in one of image items stored in the HEIF file 200 using the region information 243 or 244 formed in accordance with the definition and storing a region annotation in association with the region will be described. A region annotation is formed by metadata associated with one or more regions in an image item or another image item. When region items are grouped into an entity group according to the grouping type in the box 218, the regions can be handled as a region entity group combined in accordance with the grouping type. The regions put into the group can uniquely be identified by a group ID.

In the image file storage apparatus 100 according to this embodiment, pieces of information associated with the region information 243 to 244 and the boxes 231 and 232 are added to the following boxes in the box 203, thereby associating a region annotation with a region and combined regions in a specific image item.

First, in the HEIF file 200 according to this embodiment, since the encoded data 241 to 242 and the region information 243 to 244 are stored in the box 204, an item type is set for each data in the box 214 to discriminate these. As for the item type, in a case of, for example, the encoded data 241, 'hvc1' is set, and in a case of the region information 243, 'rgan' is set. The storage locations of the region information 243 to 244, which are stored in the box 204, in the HEIF file 200 are stored in the box 213, like the encoded data 241 to 242. Also, since the region information 243 to 244 are information for relatively specifying regions in the reference space, as described above, an image item to set regions needs to be specified. Information indicating for which image item one piece of region information 243 sets a region is stored in the box 215. That is, since the box 215 describes association between items set in the box 214, for example, information for identifying an image item associated with the encoded data 241, for which a region is set using the region information 243 for a region item concerning the region information 243, is stored in the box. Also, when a region item is associated with a derived image item formed as a derived image, a region in the derived image can be set. When handling a region item as a region entity group, a grouping type for grouping regions is decided to decide grouping_type. To handle regions designated to region items as logically added regions, cbrg is designated as a group type. The ID of region item is designated as an entity forming an entity group. The logically added regions can thus be designated as one region group. Furthermore, to associate an image item and a grouped region group, information indicating for which image item one region group sets a region is stored in the box 215. Note that since each region item included in the entity group is associated with an image item, the region group may not be associated with the image item.

On the other hand, for a region set for a specific image item, a region annotation for the region can be set by associating one or all of the following data with a region item or a region entity group.

First, there exists a region annotation using an item property. The udes property stored in the box 221 in the box 216 is associated with a region item or a region entity group by the box 222. When the udes property is associated with the region item or the region entity group, the annotation information can be associated as a text description.

Second, there exists a region annotation using a metadata item. A metadata item such as Exif that stores metadata in mdat is associated with a region item or a region entity group by a reference type cdsc in the box 215.

Third, there exists a region annotation using another image item or entity group. A region item or a region entity group is associated with another image item or entity group by a reference type eroi. This can provide a different image expression or the like to a specific region. A region annotation can be set for a specific region in an image by the association.

Next, the definition of a method of designating a combined region of region items that can be stored in the HEIF file 200 will be described. Fig. 6 is a view showing the data structure of CombinedRegionEntityGroupBox that is an entity group for grouping regions that can be stored in the box 218 of the HEIF file 200. CombinedRegionEntityGroupBox is an extension of EntityToGroupBox and has grouping_type 'cbrg' 601. An additional parameter specific to the entity group type is not defined. CombinedRegionEntityGroup can be defined as follows. Note that it can easily be understood that the name of the entity group and the 4CC for identifying the entity group may be another name and different 4CC. For example, UnionOfRegionsEnityGroupBox may be used as another name indicating a combination and may be identified by 'unrg', or the like.

CombinedRegionEntityGroup is identified by 'cbrg' grouping_type, and indicates a set of regions to create a combined region formed by combining regions indicated by included entities by OR. For entity_id, if a unique ID is used by a region item, a region metadata track, or a unif brand, EntityToGroupBox indicating another combined region is designated. More flexible region designation can be performed by designating another combined region. A region is formed by OR of these regions. That is, all regions each indicated by one of the regions indicated by entity_id are identified as regions indicated by CombinedRegionEntityGroup. A plurality of CombiendRegionEntityGroup having different group_id values can be designated in the same file.

The number of regions indicated by one entity designated by entity_id is recommended to be one (for example, region_count in the region item is 1). In this case, the number of designated entities (num_entities_in_group) is recommended to be two or more. On the other hand, if the number of regions indicated by one entity is two or more (for example, region_count in the region item is 2 or more), the regions may be combined by OR of all regions together with regions indicated by other entities. In this case, the number of designated entities (num_entities_in_group) may be one. As another method, if the numbers of regions indicated by the entities designated in the group are equal (region_counts in all entities are equal), the regions may be combined in the order of indicating the regions. Various region combination methods according to the number of regions may separately be controlled by the value of flags included in the definition of CombinedRegionEntityGroupBox. Regions indicated by CombinedRegionEntityGroup and regions indicated by entities included in CombinedRegionEntityGroup can individually be associated with an image item, and the regions in the image can be identified. Also, different pieces of annotation information can be associated by the method defined in the region annotation.

Fig. 7 is a view showing the data structure of MultiplyRegionEntityGroupBox that is an entity group for grouping regions that can be stored in the box 218 of the HEIF file 200.
MultiplyRegionEntityGroupBox is an extension of EntityToGroupBox, and has grouping_type 'mprg' 701. A parameter specific to the entity group type is not defined. MultiplyRegionEntityGroup can be defined as follows. Note that it can easily be understood that the name of the entity group and the 4CC for identifying the entity group may be another name and another 4CC. For example, RegionsIntersectionEnityGroupBox may be used as another name indicating a combination and may be identified by 'isrg', or the like.

MultiplyRegionEntityGroup is identified by 'mprg' grouping_type, and indicates a set of regions to create a combined region formed by combining regions indicated by included entities by AND. For entity_id, if a unique ID is used by a region item, a region metadata track, or a unif brand, EntityToGroupBox indicating another combined region is designated. More flexible region designation can be performed by designating another combined region. A region is formed by AND of these regions. That is, a common region included in all regions indicated by entity_id is identified as a region indicated by MultiplyRegionEntityGroup. A plurality of MultiplyRegionEntityGroup having different group_id values can be designated in the same file.

The number of regions indicated by one entity designated by entity_id is recommended to be one (for example, region_count in the region item is 1). In this case, the number of designated entities (num_entities_in_group) is recommended to be two or more. On the other hand, if the number of regions indicated by one entity is two or more (for example, region_count in the region item is 2 or more), the regions may be combined by AND of all regions together with regions indicated by other entities. In this case, the number of designated entities (num_entities_in_group) may be one. As another method, if the number of regions indicated by one entity is two or more, these may be handled as one region and combined by AND together with regions indicated by other entities. That is, a common region between different region entities is designated as a combined region. As still another method, if the numbers of regions indicated by the entities designated in the group are equal (region_counts in all entities are equal), the regions may be combined in the order of indicating the regions. Various region combination methods according to the number of regions may separately be controlled by the value of flags included in the definition of MultiplyRegionEntityGroupBox. Regions indicated by MultiplyRegionEntityGroup and regions indicated by entities included in MultiplyRegionEntityGroup can individually be associated with an image item, and the regions in the image can be identified. Also, different pieces of annotation information can be associated by the method defined in the region annotation.

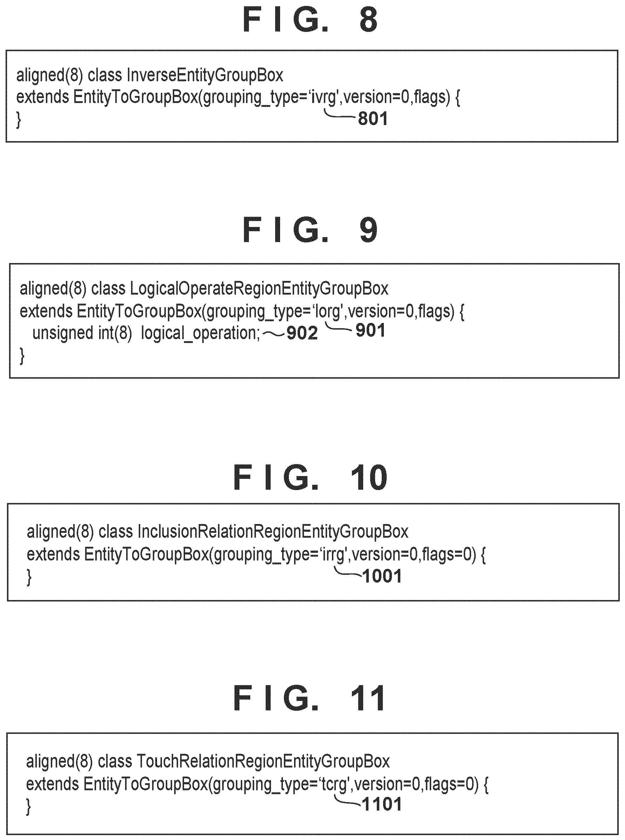

Fig. 8 is a view showing the data structure of InverseRegionEntityGroupBox that is an entity group for grouping regions that can be stored in the box 218 of the HEIF file 200.
InverseRegionEntityGroupBox is an extension of EntityToGroupBox, and has grouping_type 'ivrg' 801. An additional parameter specific to the entity group type is not defined. InverseRegionEntityGroup can be defined as follows. Note that it can easily be understood that the name of the entity group and the 4CC for identifying the entity group may be another name and another 4CC. For example, NegationRegionEnityGroupBox may be used as another name indicating a combination and may be identified by 'ngrg', or the like.

InverseRegionEntityGroup is identified by 'ivrg' grouping_type, and indicates a set of regions to create a combined region formed by combining regions indicated by included entities by NOT or NOR. For entity_id, if a unique ID is used by a region item, a region metadata track, or a unif brand, EntityToGroupBox indicating another combined region is designated. More flexible region designation can be performed by designating another combined region. A region is formed by NOT or NOR of these regions. That is, a region that is not included in any of regions indicated by entity_id is identified as a region indicated by InverseRegionEntityGroup. A plurality of InverseRegionEntityGroup having different group_id values can be designated in the same file.

The number of regions indicated by one entity designated by entity_id is recommended to be one (for example, region_count in the region item is 1). In this case, if the number of designated entities (num_entities_in_group) is one, a region obtained by NOT of the regions is designated as a combined region. That is, a region other than the regions indicated by included entities is the target region. On the other hand, if the number of designated entities is two or more, a region obtained by NOR of the regions indicated by included entities is designated as a combined region. That is, a region indicated by all entities and not designated in any region is the target region.

On the other hand, if the number of regions indicated by one entity is two or more (for example, region_count in the region item is 2 or more), the regions may be combined by NOR of all regions together with regions indicated by other entities. As another method, if the numbers of regions indicated by the entities designated in the group are equal (region_counts in all entities are equal), the regions may be combined in the order of indicating the regions. Various region combination methods according to the number of regions may separately be controlled by the value of flags included in the definition of InverseRegionEntityGroupBox. Regions indicated by InverseRegionEntityGroup and regions indicated by entities included in InverseRegionEntityGroup can individually be associated with an image item, and the regions in the image can be identified. Also, different pieces of annotation information can be associated by the method defined in the region annotation.

Similarly, to designate the combination of region information by another logical operation, the grouping type of individual EntityToGroupBox may be defined. For example, exclusive OR, NAND, exclusive NOR, or the like can be designated.

Fig. 9 is a view showing the data structure of LogicalOperateRegionEntityGroupBox that is an entity group for grouping regions that can be stored in the box 218 of the HEIF file 200. LogicalOperateRegionEntityGroupBox is an extension of EntityToGroupBox, and has grouping_type 'lorg' 901. LogicalOperateRegionEntityGroupBox includes logical_operation indicated by a definition 902 as an additional parameter specific to the group type. LogicalOperateEntityGroup can be defined as follows. Note that it can easily be understood that the name of the entity group and the 4CC for identifying the entity group may be another name and another 4CC.

LogicalOperateEntityGroup is identified by 'lorg' grouping_type, and indicates a set of regions to create a combined region formed by combining regions indicated by included entities by a logical operation. For entity_id, if a unique ID is used by a region item, a region metadata track, or a unif brand, EntityToGroupBox indicating another combined region is designated. More flexible region designation can be performed by designating another combined region. A region is formed by a logical operation of these regions. The operator of the logical operation is provided by a logical_operation parameter. That is, a region obtained as a result of performing a logical operation for regions indicated by entity_id using an operation method indicated by the logical_operation parameter is identified as a region indicated by LogicalOperateRegionEntityGroup. A plurality of LogicalOperateRegionEntityGroup having different group_id values can be designated in the same file.
logical_operation indicates the type of a logical operation, and is an unsigned integer indicating a logical operator adaptive to a region entity included in the group. A value 0 indicates a logical combination of regions by an OR operation. A value 1 indicates a logical combination of regions by an AND operation. A value 2 indicates a logical combination of regions by NOT or NOR. A value 3 indicates a logical combination of regions by exclusive OR. A value 4 indicates a logical combination of regions by NAND. A value 5 indicates a logical combination of regions by exclusive NOR. Other values are reserved.

As for the number of regions indicated by one entity designated by entity_id and the number of entities are handled in the same way as described above, and a method can be defined. Also, various region combination methods according to the number of regions may separately be controlled by the value of flags included in the definition of LogicalOperateRegionEntityGroupBox. This can decide a behavior by the combination of the value of logical_operation and the value of flags.

Regions indicated by LogicalOperateRegionEntityGroup and regions indicated by entities included in LogicalOperateRegionEntityGroup can individually be associated with an image item, and the regions in the image can be identified. Also, different pieces of annotation information can be associated by the method defined in the region annotation.

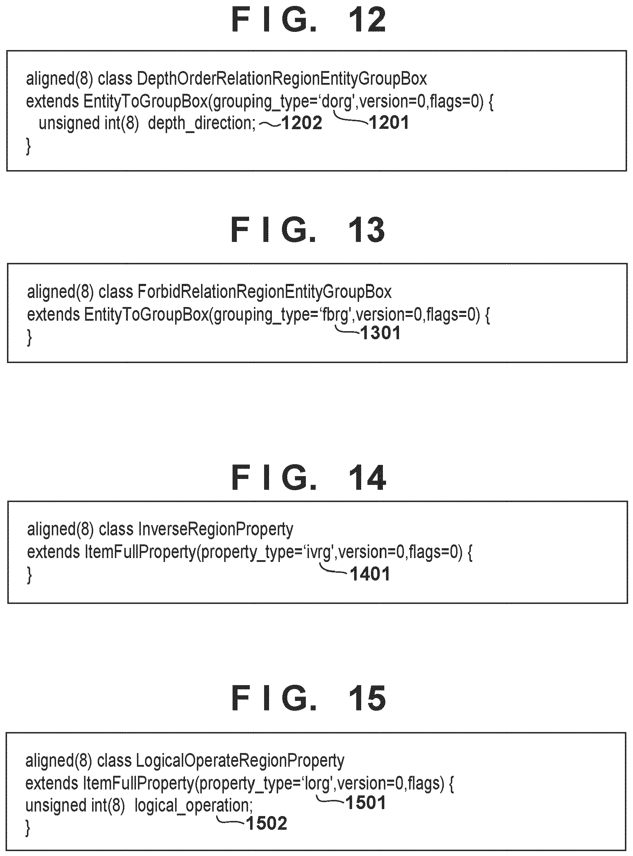

Note that in this embodiment, the operator of the logical operation is included in LogicalOperateRegionEntityGroupBox and a method provided by the logical_operation parameter has been described, but this may be controlled using flags. Furthermore, it may be associated as a property with the group of LogicalOperateRegionEntityGroup using the above-described associating structure of the item property. The data structure in this case will be described with reference to Fig. 15. LogicalOperateRegionProperty ('lorg') shown in Fig. 15 is an example of attribute information capable of storing logical operator information. LogicalOperateRegionProperty shown in Fig. 15 includes a 4-character code 'lorg' shown in a definition 1501, and LogicalOperateRegionProperty is identified using the 4-character code. The lorg property includes logical_operation 1502 that provides a logical operation method, and can be associated with a region item or a region entity group. The definition of logical_operation 1502 is the same as the definition described concerning LogicalOperateRegionEntityGroupBox. The region item or the region entity group associated with the lorg property uses a logical operation designated by logical_operation. Note that the region item may be a derived region item. In this embodiment, a logical operation adapted to a region item or a region entity group has been described. However, that may be adapted to a separately defined different item or entity type. For example, NOT may be adapted to a ster entity group indicating a stereo pair, thereby adapting an operation of replacing the left and right sides of a stereo. Also, that can directly be associated with a region item by defining it as an item property.

A group type that logically combines regions designated as an entity group has been described above. A grouping type for showing association of each entity included in a group will be described next.

Fig. 10 is a view showing the data structure of InclusionRelationRegionEntityGroupBox that is an entity group for grouping regions and can be stored in the box 218 of the HEIF file 200. The InclusionRelationRegionEntityGroupBox is an extension of EntityToGroupBox and has grouping_type 'irrg' 1001. An additional parameter specific to the entity group type is not defined. InclusionRelationRegionEntityGroup can be defined as follows. Note that it can easily be understood that the name of the entity group and the 4CC for identifying the entity group may be another name and another 4CC. For example, CompoundRegionEnityGroupBox may be used as another name indicating a combination and may be identified by 'corg', or the like.

InclusionRelationRegionEntityGroup is identified by 'irrg' grouping_type, and indicates a set of regions to create a combined region relationship for indicating the association between regions showing that included entities hold an inclusion relationship. For entity_id, if a unique ID is used by a region item, a region metadata track, or a unif brand, EntityToGroupBox indicating another combined region is designated. More flexible region designation can be performed by designating another combined region. It is identified as a region in which second or subsequent designated entity_id is included in a region indicated by first entity_id. A plurality of InclusionRelationRegionEntityGroup having different group_id values can be designated in the same file.

The number of regions indicated by one entity designated by entity_id is recommended to be one (for example, region_count in the region item is 1). In this case, the number of designated entities (num_entities_in_group) is recommended to be two or more. On the other hand, if the number of regions indicated by one entity is two or more (for example, region_count in the region item is 2 or more), and it is the first entity_id, the relationship may be defined that the first region designated as region information includes all the subsequent regions and regions indicated by the second and subsequent entity_id. In this case, the number of designated entities (num_entities_in_group) may be one. Alternatively, a definition may be made such that regions indicated by the first entity_id are handled as one region, and the second and subsequent entity_id are included. In this case, the number of designated entities (num_entities_in_group) is recommended to be two or more. In addition, if the numbers of regions indicated by the entities designated in the group are equal (region_counts in all entities are equal), each region may be defined such that each region designated by the first entity_id includes regions designated by the second and subsequent entity_id in the order of indicating the regions. Various region combination methods according to the number of regions may separately be controlled by the value of flags included in the definition of InclusionRelationRegionEntityGroupBox. Regions indicated by InclusionRelationRegionEntityGroup and regions indicated by entities included in InclusionRelationRegionEntityGroup can individually be associated with an image item. Also, different pieces of annotation information can be associated by the method defined in the region annotation. Note that since InclusionRelationRegionEntityGroup is a combination type indicating the association between regions, if each region indicated by the entity included in InclusionRelationRegionEntityGroup is associated with an image, InclusionRelationRegionEntityGroup may not be associated with the image.

Also, the entity group may be defined as follows. A compound region entity group (CompoundRegionEntityGroup) ('corg') associates one main region item with one or more region items. This indicates a logical configuration relationship between a main object covered by the region of a main entity and another object covered by a region described by one or more other entities, and the main object is logically formed by other objects. For example, a main region corresponding to a vehicle and regions corresponding to tires (wheels) can be associated using a compound region entity group, thereby indicating that the vehicle is logically formed by wheels.

An entity in the compound region entity group is a region item. The number of entities in the compound region entity group needs to be at least two. The first entity_id value indicates a main region item. Regions described by second and subsequent entity_ids indicate regions for a main object logically formed by target objects.

This logical configuration relationship does not transmit information at the geometry level. A main region notified to be formed by other regions by the compound entity group sometimes geometrically includes another region or sometimes not.

As an adaptation example of InclusionRelationRegionEntityGroup (or CompoundRegionEntityGroup), it can be adapted in a case where a tree is included as a subject in an image, the region of the subject is identified, a fruit thereof is included as a subject in the same image, and the region of the subject is identified as another region. This can indicate which tree includes the region identified as the fruit. Also, a whole region that identifies a person (a first region item designated in InclusionRelationRegionEntityGroup) and as a region included in this (a second or subseqjent region item designated in InclusionRelationRegionEntityGroup), shapes identifying a hand, a leg, a head, and the like are defined as region items, a skeleton is indicated, and a region item of a dot shape indicating a connecting point between joints is defined and included in the entity group. This makes it possible to describe information of person detection, skeleton estimation, posture estimation, action prediction detection, and the like, and also describe the relationship between regions. For example, for the region designated first, a person is simply detected, and a name or the like is associated as an annotation. Even for a skeleton or a connecting point between joints, the place of each joint or the body part is indicated, and an annotation about an action such as running or stretching a hand can be added to the group as an annotation for the relationship indicated using the EntityGroup. By combining these pieces of information, pieces of information detected by different AI algorithms or the like can be added as individual annotation.

Fig. 11 is a view showing the data structure of TouchRelationRegionEntityGroupBox that is an entity group for grouping regions that can be stored in the box 218 of the HEIF file 200. The TouchRelationRegionEntityGroupBox is an extension of EntityToGroupBox and has grouping_type 'tcrg' 1101. An additional parameter specific to the entity group type is not defined. TouchRelationRegionEntityGroup can be defined as follows. Note that it can easily be understood that the name of the entity group and the 4CC for identifying the entity group may be another name and another 4CC.

TouchRelationRegionEntityGroup is identified by 'tcrg' grouping_type, and indicates a set of regions to create a combined region relationship for indicating the association between regions showing that included entities hold a contact relationship. The number of entity_id is two, and if a unique ID is used by a region item, a region metadata track, or a unif brand, EntityToGroupBox indicating another combined region is designated. More flexible region designation can be performed by designating another combined region. Two regions in an image associated with the entity group indicate that subject objects hold the contact relationship. This does not simply indicates that the regions are in contact or overlap each other but indicates that the subject objects in the image hold the contact relationship. A plurality of TouchRelationRegionEntityGroup having different group_id values can be designated in the same file.

The number of regions indicated by one entity designated by entity_id is recommended to be one (for example, region_count in the region item is 1). On the other hand, if the number of regions included in entity_id is two, the number of designated entities (num_entities_in_group) may be one, and, in this case, this indicates that the two regions included in one entity hold the contact relationship.

If the number of regions indicated by one entity is two or more (for example, region_count in the region item is 2 or more), or if the number of entities is two or more, it may be defined that all regions of the first entity and all regions indicated by the second region hold the contact relationship. Furthermore, if the numbers of regions indicated by the entities designated in the group are equal (region_counts in all entities are equal), it may be defined such that each region indicates that the region designated by the first entity_id and the region indicated by the second entity_id or subsequent entity_id are hold the contact relationship in the order of indicating the regions. Various region combination methods according to the number of regions may separately be controlled by the value of flags included in the definition of TouchRelationRegionEntityGroupBox. Regions indicated by TouchRelationRegionEntityGroup and regions indicated by entities included in TouchRelationRegionEntityGroup can individually be associated with an image item. Also, different pieces of annotation information can be associated by the method defined in the region annotation. Note that since TouchRelationRegionEntityGroup is a combination type indicating the association between regions, if each region indicated by the entity included in TouchRelationRegionEntityGroup is associated with an image, TouchRelationRegionEntityGroup may not be associated with the image.

As an adaptation example of TouchRelationRegionEntityGroup, it can be adapted in a case where a person is included as a subject in an image, the region of the subject is identified, a ball held by the person is included as a subject in the same image, and the region of the subject is identified as another region. Region entities indicating the person and the ball are stored as a group. This makes it possible to identify that the person holds the ball. It is possible to identify whether, for example, it overlaps as a region after it was thrown, or whether it is held in a hand before it is thrown. In this embodiment, a grouping type indicating a contact relationship has been described. However, a grouping type indicating non-contact may be used. Also, both the contact relationship and a non-contact relationship may be defined by defining flags or an additional parameter in TouchRelationRegionEntityGroupBox. Fig. 12 is a view showing the data structure of DepthOrderRelationRegionEntityGroupBox that is an entity group for grouping regions that can be stored in the box 218 of the HEIF file 200. DepthOrderRelationRegionEntityGroupBox is an extension of EntityToGroupBox and has grouping_type 'dorg' 1201. DepthOrderRelationRegionEntityGroupBox includes depth_direction indicated by a definition 1202 as an additional parameter specific to the group type. DepthOrderRelationRegionEntityGroup can be defined as follows. Note that it can easily be understood that the name of the entity group and the 4CC for identifying the entity group may be another name and another 4CC.

DepthOrderRelationRegionEntityGroup is identified by 'dorg' grouping_type, and indicates a set of regions to create a combined region relationship for indicating the association between regions by the forward/backward relationship of foreground/background of included entities. For entity_id, if a unique ID is used by a region item, a region metadata track, or a unif brand, EntityToGroupBox indicating another combined region is designated. More flexible region designation can be performed by designating another combined region. Entity_id values indicating regions in DepthOrderRelationRegionEntityGroup are listed in the order of the depth_direction directions. A plurality of DepthOrderRelationRegionEntityGroup having different group_id values can be designated in the same file.

The depth_direction indicates the direction of depth (foreground/background), and is an unsigned integer indicating a direction in the depth direction of a region entity included in the group. A value 0 indicates that listed region entities are listed from the foreground to the background. A value 1 indicates that listed region entities are listed from the background to the foreground. Other values are reserved.

The number of regions indicated by one entity designated by entity_id is recommended to be one (for example, region_count in the region item is 1). Also, the number of designated entities (num_entities_in_group) is recommended to be two or more. On the other hand, if the number of regions indicated by one entity is two or more (for example, region_count in the region item is 2 or more), it indicates that a plurality of regions included in one entity are designated sequentially in a direction indicated by depth_direction in the storage order. As another method, a plurality of regions included in one entity may be defined as regions at the same position, that is, at the same depth. If a plurality of regions are included in one entity, the number of entities included in the group (num_entities_in_group) may be one. Alternatively, if the numbers of regions indicated by the entities designated in the group are equal (region_counts in all entities are equal), it may be defined such that the regions are arranged in a direction indicated by depth_direction sequentially for each region designated by entity_id in the region count order. Various region combination methods according to the number of regions may separately be controlled by the value of flags included in the definition of DepthOrderRelationRegionEntityGroupBox. In addition, an additional parameter may be defined and designated to indicate whether the individual regions have the same depth or the next depth. Regions indicated by DepthOrderRelationRegionEntityGroup and regions indicated by entities included in DepthOrderRelationRegionEntityGroup can individually be associated with an image item. Also, different pieces of annotation information can be associated by the method defined in the region annotation. Note that since DepthOrderRelationRegionEntityGroup is a combination type indicating the association between regions, if each region indicated by the entity included in DepthOrderRelationRegionEntityGroup is associated with an image, DepthOrderRelationRegionEntityGroup may not be associated with the image.

Fig. 13 is a view showing the data structure of ForbidRelationRegionEntityGroupBox that is an entity group for grouping regions that can be stored in the box 218 of the HEIF file 200. The ForbidRelationRegionEntityGroupBox is an extension of EntityToGroupBox and has grouping_type 'fbrg' 1301. An additional parameter specific to the entity group type is not defined. ForbidRelationRegionEntityGroup can be defined as follows. Note that it can easily be understood that the name of the entity group and the 4CC for identifying the entity group may be another name and another 4CC. For example, OclusionRegionEnityGroupBox may be used as another name indicating a combination and may be identified by 'ocrg', or the like.

ForbidRelationRegionEntityGroup is identified by 'fbrg' grouping_type, and indicates a set of regions to create a combined region relationship for indicating the association between regions showing a relationship in which a second designated entity is partially or wholly hidden by a first designated entity. The number of entity_id is two, and if a unique ID is used by a region item, a region metadata track, or a unif brand, EntityToGroupBox indicating another combined region is designated. More flexible region designation can be performed by designating another combined region. It is indicated that two regions in an image associated with the entity group have a relationship in which one region hides an object indicated by the other region. In this case, for example, if the object indicated by the other region is wholly hidden by the object indicated by the one region, the hidden object does not appear as a subject in the image. That is, this indicates that a hidden region is set based on information that can be estimated from another image or the like, and the region is hidden by an object indicated by another region. A plurality of ForbidRelationRegionEntityGroup having different group_id values can be designated in the same file.

The number of regions indicated by one entity designated by entity_id is recommended to be one (for example, region_count in the region item is 1). On the other hand, if the number of regions included in entity_id is two, the number of designated entities (num_entities_in_group) may be one. In this case, it indicates that of two regions included in one entity, an object of an image region indicated by the first region hides an object of an image region indicated by the second region. In addition, if the number of regions indicated by one entity is two or more (for example, region_count in the region item is 2 or more), or the number of entities is two or more, it may be defined that the regions of the first entity and all regions indicated by the second and subsequent regions are hidden. Furthermore, if the numbers of regions indicated by the entities designated in the group are equal (region_counts in all entities are equal), it may be defined so as to indicate that each region has a relationship in which a region designated by the first entity_id hides regions designated by the second or subsequent entity_id in the order of indicating the regions. Various region combination methods according to the number of regions may separately be controlled by the value of flags included in the definition of ForbidRelationRegionEntityGroupBox. Regions indicated by ForbidRelationRegionEntityGroup and regions indicated by entities included in ForbidRelationRegionEntityGroup can individually be associated with an image item. Also, different pieces of annotation information can be associated by the method defined in the region annotation. Note that since ForbidRelationRegionEntityGroup is a combination type indicating the association between regions, if each region indicated by the entity included in ForbidRelationRegionEntityGroup is associated with an image, ForbidRelationRegionEntityGroup may not be associated with the image.

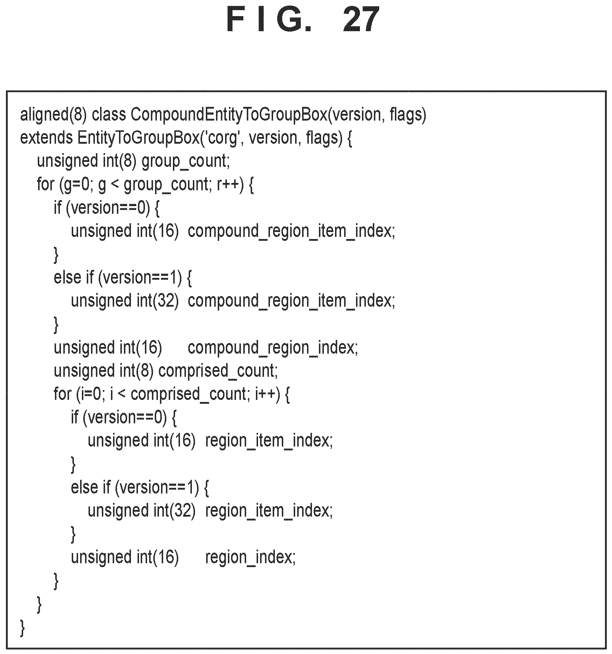

In the definition of an entity group according to each combination type described above, a method of making a definition according to the number of regions held by a region item as an input region using flags in each definition has been described. As another combined region describing method, a method of implementing this by defining the data structure of a different entity group without using control by the value of flags even if a plurality of regions are indicated by an entity group in one region item designated as an input region or a combined region will be described with reference to Fig. 27. In an example shown in Fig. 27, a combined region indicating an inclusion relationship between regions will be described as an example. Even other combination types can be defined by the same mechanism. The definition of CompoundEntityToGroupBox shown in Fig. 27 shows a data structure that can be stored in a GroupListBox ('grpl') box in the box 218 as the data structure of a combined region entity group.

The data structure shown in Fig. 27 is an example of extension of a compound region entity group (CompoundRegionEntityGroup) ('corg'). The compound region entity group of the extension (CompoundRegionEntityGroup) ('corg') has a configuration capable of describing the relationship of a plurality of compound region groups in one compound region entity group. In a region item, when describing a plurality of regions in one region item, these can be described by designating a value of 2 or more in region_count. Like this method, the definition enables to describe a plurality of regions even in the relationship between the regions. To identify the first input region (main region) for the relationship of each of the regions as many as the number (group_count) defined in the extended compound region entity group, the designation is made by the index (compound_region_item_index) of each input region item and the index (compound_region_index) in a list of regions defined by the input region item. Also, to identify second and subsequent input regions for the relationship of each region, the number (comprised_count) of input regions is designated for each region relationship. In addition, a region input for each relationship is designated by the index (region_item_index) of each input region item and the index (region _index) of a region defined by the input region item in the list.

Here, version is defined as 0 or 1. In a future extension, a new version value can be designated for the version. Here, flags is set to 0, and all flag values are reserved. Here, region_count is the number of relationships of regions defined by the compound region entity group. Here, group_count is the number of region groups defined by the compound region entity group. Here, compound_region_item_index is the index of a region item in a list of region items designated by the compound region entity group, and indicates a region item including one of first input regions (main regions) of a compound region. Here, compound_region_index is the index of a region in a region item indicated by a compound_region_item_index field that is one of compound regions. Here, comprised_count is the number of regions forming one compound region. Here, region_item_index is the index of a region item in a list of region items designated by the compound region entity group, and indicates a region item including one of second and subsequent input regions of a compound region. Here, region_index is the index of a region in a region item indicated by a region_item_index field that is one of compound regions.

When the data structure of the combined region entity group is defined in the above-described way, the combined region entity group can easily be formed regardless of the number of regions in a region item that is an input region. Also, if the same annotation needs to be added to a plurality of combined regions, a common annotation can be added, like an existing region item, even if the annotation is not added for each combined region entity group. The data structure can also be adapted to other combination types. In a combined region entity group having a parameter like RegionLogicalDerivation, the same definition can be done by adding the parameter to the data structure.

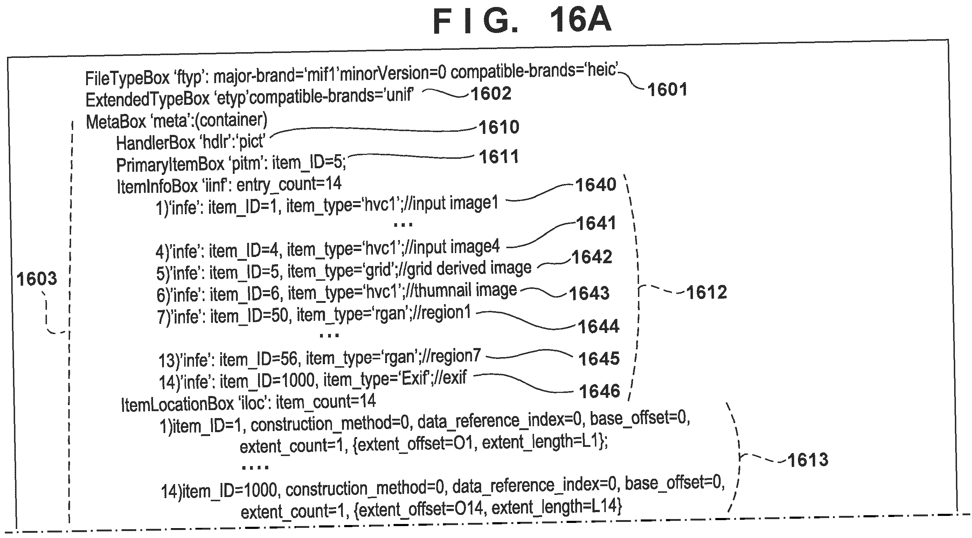

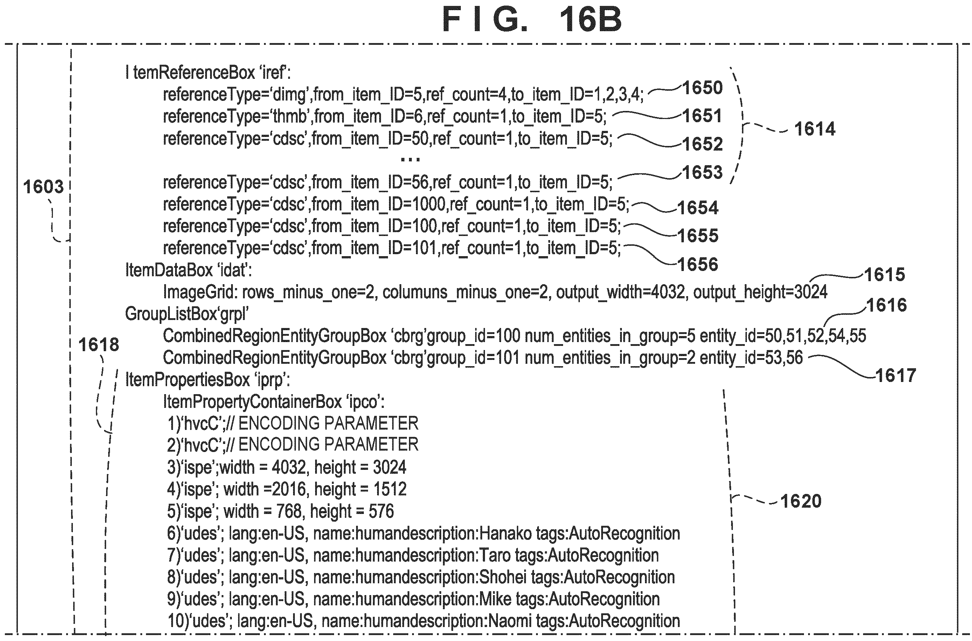

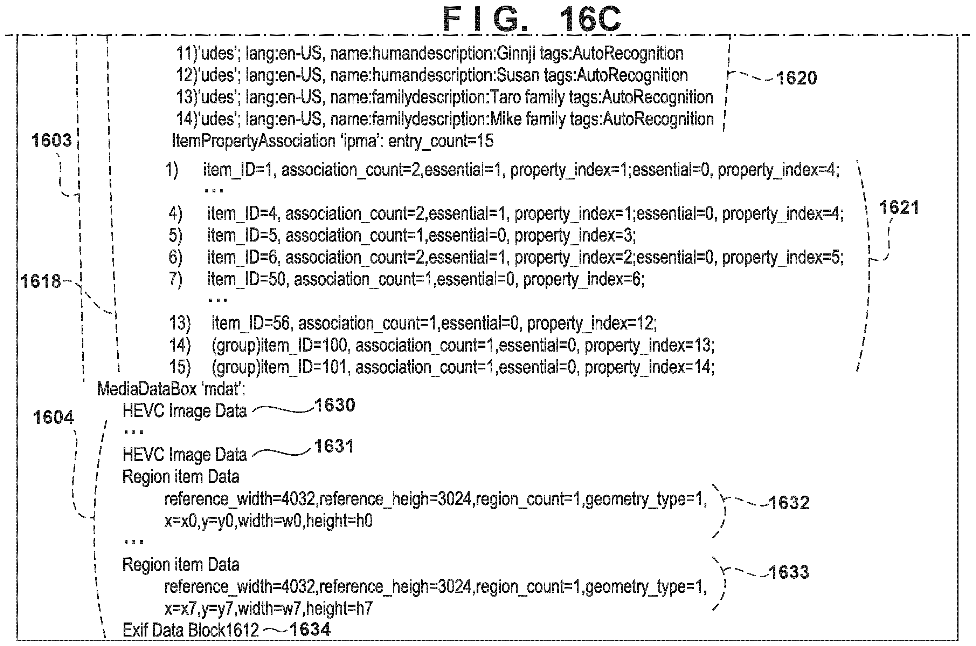

An example of an image file output by the image file storage apparatus 100 according to this embodiment will be described here with reference to Figs. 16A to 16C. Note that in this embodiment, the image file is configured such that regions obtained by combining region items are stored in the file by two CombinedRegionEntityGroup as a file data structure.

In the example shown in Figs. 16A to 16C, as indicated by a description 1604 corresponding to the box 204, descriptions 1630 and 1631 corresponding to the encoded data (HEVC Image Data) 241 to 242 of HEVC are stored. Furthermore, an image file that stores descriptions 1632 and 1633 corresponding to the region information (Region Item Data) 243 to 244 and a description 1634 corresponding to the Exif data block 245 is exemplarily shown. As indicated by the descriptions 1632 and 1633, the pieces of region information 243 to 244 comply with the definitions shown in Figs. 3A and 3B, and each specify a rectangular region for a reference space with an image size of 4,032 pixels × 3,024 pixels. Also, in the regions specified by the descriptions, coordinates (x0, y0) of a reference point and an image size (w0 × h0) and coordinates (x7, y7) of a reference point and an image size (w7 × h7) in the reference space of the region are designated.

A description 1601 corresponds to the box 201. As a type value major-brand of a brand definition complying with the HEIF file, 'mif1' is stored, and as a type value compatible-brands of a compatible brand definition, 'heic' is stored.

A description 1602 corresponds to the box 202, and as a type value compatible-brands of an extension brand definition complying with the HEIF file, 'unif' is stored. This indicates that the ID value at the file level is a uniquely identifiable value.

Next, a description 1603 corresponding to the box 203 shows various kinds of metadata information describing untimed data stored in the output file example.

A description 1610 corresponds to the box 211, and the handler type of designated MetaDataBox (meta) is 'pict'. A description 1611 corresponds to the box 212, 5 is stored as item_ID, and the ID of an image to be displayed as a first priority image is designated.

A description 1612 corresponds to the box 214, and indicates item information (an item ID (item_ID) and an item type (item_type)) for each item. Each item can be identified by item _ID, and what kind of item is identified by item_ID is shown. In the example shown in Figs. 16A to 16C, since 14 items are stored, entry_count is 14, 14 types of information are arranged in the description 1612, and an item ID and an item type are designated for each of these. In the image file shown in the figures, the first to fourth pieces of information corresponding to a description 1640 to description 1641 are HEVC-encoded image items of type hvc1. Also, the fifth information indicated by a description 1642 is a grid derived image item of item type grid. The sixth information indicated by a description 1643 is an HEVC-encoded image item of item type hvc1, which serves as a thumbnail image. The seventh to 13th pieces of information corresponding to a description 1644 to a description 1645 are region items of item type rgan indicting a region. 14th information corresponding to a description 1646 is a metadata item of item type Exif indicating a Exif data block.

A description 1613 corresponds to the box 213, and the pieces of information of the storage position and the data size of each item in the HEIF file are designated. For example, an encoded image item whose item_ID is 1 indicates that the data is located at a position where the offset is O1 in the file, and the size is L1 bytes, and the position of the data in mdatBox is specified.

A description 1614 corresponds to the box 215, and indicates the reference relationship (association) between items. Item reference indicated by a description 1650 designates dimg indicating that the reference type is derived image. Also, it is indicated that HEVC encoded image items of item_IDs 1 to 4 designated by to_item_ID are referred to by a grid derived image item of item_ID 5 designated by from_item_ID. The encoded image items of item_IDs 1 to 4 are thus designated as input images to the derived image item. Also, item reference indicated by a description 1651 designates thmb indicating a thumbnail relationship as the reference type. It is indicated that a grid derived image item of item_ID 5 designated by to_item_ID is referred to by an HEVC encoded image item of item_ID 6 designated by from_item_ID. This indicates that the HEVC encoded image item of item_ID 6 is the thumbnail image of the grid derived image item of item_ID 5. Item references indicated by descriptions 1652, 1653, 1654, 1655, and 1656 designate cdsc indicating a content description relationship as the reference type. The description 1652 indicates that a grid derived image item of item_ID 5 designated by to_item_ID is referred to by a region information item of item_ID 50 designated by from_item_ID. The region information item of item_ID 50 thus indicates a partial region in the grid derived image item of item_ID 5. Similarly, the description 1653 indicates that the grid derived image item of item_ID 5 designated by to_item_ID is referred to by a region information item of item_ID 56 designated by from_item_ID. The region information item of item_ID 56 thus indicates a partial region in the grid derived image item of item_ID 5. The description 1654 indicates that the grid derived image item of item_ID 5 designated by to_item_ID is referred to by an Exif data block item of item_ID 1000 designated by from_item_ID. This indicates that the Exif data block item of item_ID 1000 thus describes information at the time of image capturing of the grid derived image item of item_ID 5. In the description 1655, item_ID 100 designated in from_item_ID is interpreted as the group ID of the entity group by a unif brand designation in the etyp box of the description 1602. It is indicated that the grid derived image item of item_ID 5 designated by to_item_ID is referred to by group_ID 100 region information entity group designated by from_item_ID. A combined region indicated by the region information entity group of group_ID 100 thus indicates a partial region in the grid derived image item of item_ID 5. Note that the configuration that associates an entity group with an image item is not essential. That is, if an image item and a region item forming an entity group are associated, the combined region in the image can be identified without associating the entity group with the image item. Similarly, in the description 1656, item_ID 101 designated in from_item_ID is interpreted as the group ID of the entity group by a unif brand designation in the etyp box of the description 1602. It is indicated that the grid derived image item of item_ID 5 designated by to_item_ID is referred to by group_ID 101 region information entity group designated by from_item_ID. A combined region indicated by the region information entity group of group_ID 101 thus indicates a partial region in the grid derived image item of item_ID 5.

A description 1615 corresponds to the box 217, and the data structure of the grid derived image item of item ID 5 is designated. In the HEIF file according to this embodiment, 2 is designated in rows_minus_one of the grid derived image and 2 is designated in columuns_minus_one. This indicates that 2 × 2 input images are formed as grid derived images. Note that as the number of input images of item reference indicated by the description 1650, with regard to an item count "4" designated in ref_count and the number of grids, that is, 2 × 2 (4), values matching each other are designated. 4032 is designated in the number or output_width, and 3024 is designated in output_height. The image is formed as an image having a width of 4,032 pixels and a height of 3,024 pixels.

A description 1616 and a description 1617 correspond to the box 218, and entity groups are designated. In the HEIF file according to this embodiment, two CombinedRegionEntityGroup are designated, and the description 1616 and the description 1617 correspond to the boxes 231 and 232, respectively. In the description 1616, 100 is designated in group_id, and the IDs of five region information items of item_id 50, 51, 52, 54, and 55 are designated as entity_id. Hence, the regions indicated by item_id 50, 51, 52, 54, and 55 are combined as a combination type cbrg, and all regions included in any one of the five regions are identified as regions indicated by CombinedRegionEntityGroup. In the description 1617, 101 is designated in group_id, and the IDs of two region information items of item_id 53 and 56 are designated as entity_id. Hence, the regions indicated by item_id 53 and 56 are combined as a combination type cbrg, and all regions included in any one of the two regions are identified as regions indicated by CombinedRegionEntityGroup.

A description 1618 corresponds to the box 216, and includes a description 1620 corresponding to the box 221 and a description 1621 corresponding to the box 222.

The description 1620 lists pieces of attribute information usable in items or entity groups as entry data. As shown in Figure, the description 1620 includes not only the first and second entries indicating encoding parameters and the third, fourth, and fifth entries each indicating the display pixel size of an item but also the sixth to 14th entries indicating annotation description information. As the annotation description information, lang is American English (en-US) in all entries, "human" is set as name in the sixth to 12th entries, and "family" is set in the 13th and 14th entries. As the description, "Hanako", "Taro", "Shohei", "Mike", "Naomi", "Ginnji", and "Susan" representing the names of persons indicated by the regions are sequentially set in the sixth to 12th entries. Also, as the description, "Taro family" and "Mike family" indicating families are set in the 13th and 14th entries. In tags, "AutoRecognition" is set to add a tag indicating that a region is an automatically recognized region. In the entry data of the description 1621 corresponding to the box 222, the pieces of attribute information listed in the description 1620 are associated with items or entity groups stored in the HEIF file. In the example shown in Figs. 16A to 16C, common 'ispe' (property_index is 4) is associated with the image items of item_ID 1 to 4, and this indicates that the images have the same image size of 2,016 pixels × 1,512 pixels. Similarly, common 'hvcC' (property_index is 1) is associated with the image items of item_ID 1 to 4, and this indicates that the same encoding parameter is used. On the other hand, different item properties are associated with the items or entity groups of item_ID 5 to 15. 'ispe' (property_index is 3) is associated with a derived image item of item_ID 5, and this indicates that the image size is 4,032 pixels × 3,024 pixels.

'ispe' (property_index is 5) is associated with an image item of item_ID 6, and this indicates that it is an image having an image size of 768 pixels × 576 pixels. Similarly, 'hvcC' (property_index is 2) is associated with an image item of item_ID 6, and this indicates an encoding parameter. 'udes' (property_index is 6) is associated with a region information item of item_ID 50, and this indicates annotation information for the region. 'udes' (property_index is 12) is associated with a region information item of item_ID 56, and this indicates annotation information for the region. Addition of annotation information to a region is thus implemented by associating the 'udes' property. Also, 'udes' (property_index is 13) is associated with a region information entity group of item_ID (group_id) 100, and this indicates annotation information for a combined region. 'udes' (property_index is 14) is associated with a region information entity group of item_ID (group_id) 101, and this indicates annotation information for a combined region. Addition of annotation information to a combined region is thus implemented by associating the 'udes' property with an entity group. Note that since no item property is associated with the Exif data block item of item_ID 1000, corresponding entry information is not stored.

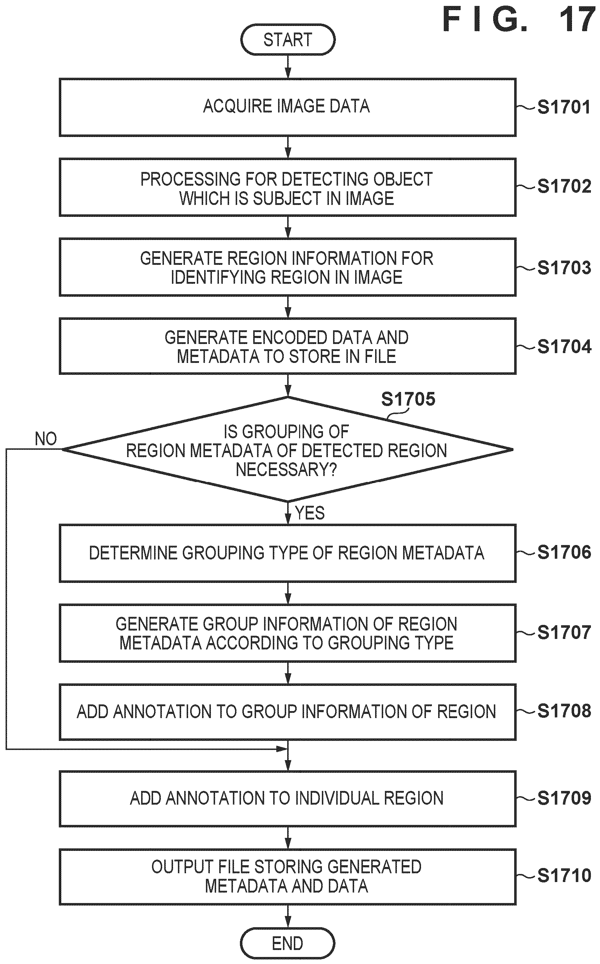

Generation processing of generating an HEIF file having a file structure in which regions in an image are identified by combining region information for identifying these, and annotation information can be stored in association with each region will be described next with reference to the flowchart of Fig. 17.

Note that processing according to the flowchart of Fig. 17 is processing executed by the CPU 101 executing various kinds of control processing using computer programs and data read out from the ROM 102 or the nonvolatile memory 110 to the RAM 103. Note that the generation processing according to the flowchart of Fig. 17 is started, for example, in response to detection by the CPU 101 that the user inputs an instruction associated with image capturing by operating the operation input unit 107. However, the event serving as the trigger for starting the processing according to the flowchart of Fig. 17 is not limited to a specific event.

In step S1701, the CPU 101 controls the image capturing unit 104 and the image processing unit 105 and acquires an image (image data) to be stored in an HEIF file. Note that the image acquisition method is not limited to a specific acquisition method. For example, an image may be acquired from the nonvolatile memory 110, or may be acquired from an external device via the communication unit 108.

In step S1702, under the control of the CPU 101, the recognition processing unit 114 performs detection processing for detecting an object captured as a subject in the image acquired in step S1701. The detection processing is processing of detecting, for example, an object such as a person or a substance from the image. Note that the method of detecting an object from the image is not limited to a specific method.

For example, by matching processing using the image of a specific person registered in advance, processing of checking whether the person is captured in the image acquired in step S1701 and detecting it may be performed.

Also, depending on the contents registered in advance, not only a specific person but also the attribute information of the person may be included, and detection processing of detecting an object from the image may be performed by further using the attribute information.

Also, the recognition processing unit 114 may detect association based on a plurality of detection results or may perform detection processing of a combined region. For example, when detecting a human body, the recognition processing unit 114 may individually detect a head, a body, a right hand, a left hand, a right leg, and a left leg and then detect a human body by combining these. The detection result changes depending on the recognition processing algorithm executed by the recognition processing unit 114. Also, instead of performing only detection by the recognition processing unit 114, the user may detect the region of each object while confirming the image using image editing software or the like.

In step S1703, under the control of the CPU 101, the generation unit 113 generates region information for the region of the object detected by the recognition processing unit 114 and stores the generated region information in the output buffer provided in the RAM 103.

In step S1704, under the control of the CPU 101, the encoding/decoding unit 111 generates encoded data of the image by performing encoding processing of encoding the image acquired in step S1701, and stores the encoded data in the output buffer. Also, under the control of the CPU 101, the metadata processing unit 112 generates metadata to be stored in the image file, and stores the generated metadata in the output buffer.

In step S1705, under the control of the CPU 101, the metadata processing unit 112 generates metadata when storing region information generated by the generation unit 113 for the region of the object detected by the recognition processing unit 114. At this time, the metadata processing unit 112 determines whether it is necessary to group region items of detected regions (the regions where objects are detected) and store these as a combined region. This may include data conversion processing such as optimization of the region information generated in step S1703. For example, if it is determined that the region items can efficiently be stored by storing these as a combined region to perform NOT, the region information is changed, and region information indicating an inverted region is generated.

As result of the determination, if it is determined that it is necessary to group region items of detected regions and store these as a combined region, the process advances to step S1706. On the other hand, if it is not determined that it is necessary to group region items of detected regions (the regions where objects are detected) and store these as a combined region, the process advances to step S1709.

In step S1706, the CPU 101 decides a grouping type when combining regions. This is, for example, deciding the grouping type of EntityToGroupBox described above.

In step S1707, the CPU 101 generates group information for grouping region information according to the grouping type decided in step S1706.

In step S1708, the CPU 101 generates metadata used to add region annotation information (annotation) to the group information generated in step S1707, and associates it with the group information. As described above, this is implemented by generating text description information using the udes property and associating it as an item property with the entity group.

In step S1709, the CPU 101 generates metadata used to add region annotation information to a region detected as an individual region, and associates it with the region information.

In step S1710, the CPU 101 generates an HEIF file storing the generated metadata and encoded data. More specifically, the final metadata of the HEIF file is configured based on the information that the metadata processing unit 112 stores in the output buffer. Then, the information of the box 201 associated with the HEIF file, the information of the box 203 that stores the final metadata, and the information of the box 204 that stores the image, the region information, and the like are combined. The CPU 101 writes the HEIF file generated by combination from the RAM 103 to the nonvolatile memory 110 and stores it. Note that the output destination of the HEIF file is not limited to the nonvolatile memory 110 and, for example, the HEIF file may be transmitted to an external device via the communication unit 108.

As described above, the image file storage apparatus 100 according to this embodiment performs object detection processing for an image to be stored in an image file, and generates region information identifying an object that is a subject in the image. The image file storage apparatus 100 then generates metadata for identifying the generated region information as a combined region, thereby making individual regions and the combined region identifiable. Annotation information is added as metadata to each region that is identifiable, thereby allowing to add a region annotation to each of the regions and the combined region.

Note that in this embodiment, a mode in which an image to be stored in an image file is obtained by image capturing by the image capturing unit 104 has been described, but the present invention is not limited to this. A series of images may be images stored in the ROM 102 or the nonvolatile memory 110 in advance or images received via the communication unit 108, as a matter of course. In this case, the image may include an HEIF file in which one still image is stored or may include a still image file such as JPEG. Alternatively, the image may be an image encoded into an HEIF file in which a plurality of still images are stored, or may be a RAW image that is not encoded.

A mode when reproducing an HEIF file will be described next. Here, it can easily be understood that an HEIF file can be used in an arbitrary apparatus that is not limited to the image file storage apparatus 100 that has generated the HEIF file. When using, a processor such as the CPU of the apparatus reads out the metadata of the HEIF file of the processing target, thereby allowing to reproduce/change encoded data stored in the HEIF file.

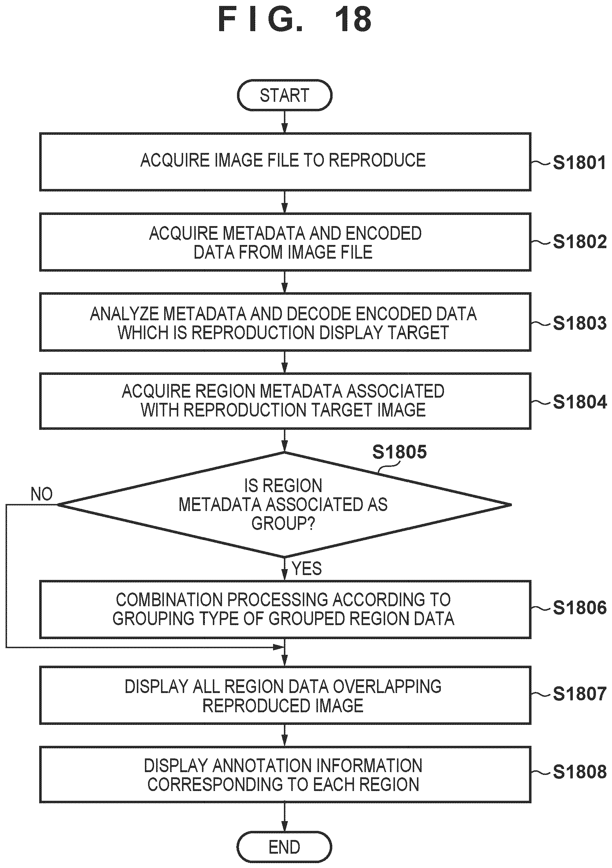

As a mode of image file reproduction processing, reproduction processing associated with reproduction (display) of an HEIF file in the image file storage apparatus 100 will be described below with reference to the flowchart of Fig. 18.

Note that processing according to the flowchart of Fig. 18 is processing executed by the CPU 101 executing various kinds of control processing using computer programs and data read out from the ROM 102 or the nonvolatile memory 110 to the RAM 103. The reproduction processing according to the flowchart of Fig. 18 is started, for example, in response to detection by the CPU 101 that the user performs an operation input associated with an HEIF file reproduction instruction by operating the operation input unit 107 in a state in which the image file storage apparatus 100 is set in a reproduction mode. However, the event serving as the trigger for starting the processing according to the flowchart of Fig. 18 is not limited to a specific event.

In step S1801, the CPU 101 acquires an image file (HEIF file) as the target of a reproduction instruction. The image file acquisition method is not limited to a specific acquisition method. For example, an image file may be acquired from the nonvolatile memory 110, or may be acquired from an external device via the communication unit 108.

In step S1802, under the control of the CPU 101, the metadata processing unit 112 acquires metadata and encoded data from the HEIF file acquired in step S1801, and analyzes the metadata, thereby acquiring the configuration of the HEIF file.

In step S1803, the CPU 101 specifies a representative item based on the information of the box 212 of the metadata acquired in step S1802, and causes the encoding/decoding unit 111 to decode the encoded data 241 indicated by the representative item. The encoding/decoding unit 111 thus acquires corresponding encoded data (encoded data 241) from the metadata associated with an image item designated as a representative image, and stores a decoded image obtained by decoding the encoded data in a buffer on the RAM 103.

In step S1804, under the control of the CPU 101, the metadata processing unit 112 acquires region metadata associated with a reproduction target image designated as the representative image.

In step S1805, under the control of the CPU 101, the metadata processing unit 112 determines whether the region metadata acquired in step S1804 is associated as a group. "Whether the region metadata acquired in step S1804 is associated as a group" can be determined by analyzing the box 218 and the box 215.

As the result of the determination, if the region metadata acquired in step S1804 is associated as a group (if grouped region information associated with reproduction image data is stored), the process advances to step S1806.

On the other hand, if the region metadata acquired in step S1804 is not associated as a group (if region metadata associated with the reproduction target image is not grouped), the process advances to step S1807.

In step S1806, under the control of the CPU 101, the generation unit 113 generates region information according to the grouping type of the grouped region information, and stores the generated region information in the buffer on the RAM 103.

In step S1807, the CPU 101 superimposes the associated region information and the combined region information generated in step S1806 on the decoded image (representative image) stored in the buffer on the RAM 103, and displays on the display unit 106.

In step S1808, if region annotation information corresponding to each region is added, the CPU 101 displays the region annotation information (annotation) such that the association with the region information can be identified. Note that in this embodiment, a method of displaying region annotation information and region information together with a representative image in a superimposed manner has been described. However, display of region annotation information and region information may be an option. That is, whether to display these may be decided based on an instruction of a UI operation, or the like.

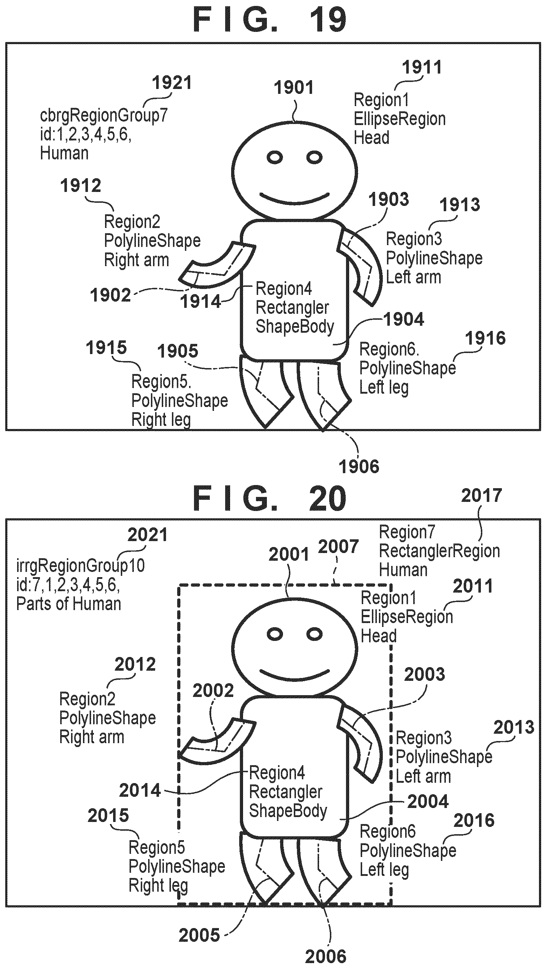

Figs. 19, 20, and 21 show examples of display of region information and region annotation information displayed together with a representative image in steps S1807 and S1808. Images shown in Figs. 19, 20, and 21 indicate examples of UI screens displayed in steps S1807 and S1808.

A hatched region indicated by 1901 indicates a region detected as a head region of a human body. Also, 1911 indicates region annotation information associated with the region 1901. The region shape is ellipse, and Head is associated as the region annotation information.

A broken polyline indicated by 1902 indicates a region detected as a right arm region of the human body. Also, 1912 indicates region annotation information associated with the region 1902. The region shape is Polyline, and Right arm is associated as the region annotation information.

A broken polyline indicated by 1903 indicates a region detected as a left arm region of the human body. Also, 1913 indicates region annotation information associated with the region 1903. The region shape is Polyline, and Left arm is associated as the region annotation information.

A grid region indicated by 1904 indicates a region detected as a body region of the human body. Also, 1914 indicates region annotation information associated with the region 1904. The region shape is Rectangular, and Body is associated as the region annotation information.

A broken polyline indicated by 1905 indicates a region detected as a right leg region of the human body. Also, 1915 indicates region annotation information associated with the region 1905. The region shape is Polyline, and Right leg is associated as the region annotation information.

A broken polyline indicated by 1906 indicates a region detected as a left leg region of the human body. Also, 1916 indicates region annotation information associated with the region 1906. The region shape is Polyline, and Left leg is associated as the region annotation information.

The regions 1901 to 1906 are combined as a combined region. **In** this case, it can be identified as one region by grouping by a cbrg region entity group, region annotation information associated with the combined region is indicated by 1921, and Human is associated as region annotation information with cbrgRegionGroup7 that is a region obtained by combining Region1 to Region6. This makes it possible to individually detect the regions as parts and implement a combined region expression without associating the combined region of these regions as a separate region. Furthermore, since the combined region can be identified, a region annotation can be associated with the combined region as well.

Next, in the UI screen shown in Fig. 20, regions (individual regions) 2001 to 2006 indicating parts are the same as the regions 1901 to 1906 shown in Fig. 19. Fig. 20 shows not a method of generating a combined region by combining parts, but an example in which region data 2007 for separately identifying a region indicating a human body indicated as a combined region is generated. Region annotation information is associated with the human body region, and as indicated by 2017, the region shape is Rectangular, and Human is associated as the region annotation information. The regions of parts and a region indicating the whole can thus be identified as separate regions, and region annotation information can individually be associated, but the association between each part and the whole region cannot be shown. For this reason, InclusionRelationRegionEntityGroup indicating the inclusion relationship between regions makes the association between the regions identifiable as a combined region. The inclusion relationship is shown as the combined region indicating that the regions 2001 to 2006 are included in the region 2007. It can be identified as a combined region by grouping by an irrg region entity group, and region annotation information associated with the combined region is indicated by 2021. As for the combined region, Parts of Human is associated as region annotation information with irrgRegionGroup10 as a region including Region1 to Region6 in Region7. It is therefore possible to individually detect a region of each part, separately detect a region indicating the whole, and identify as a combined region indicating the association between regions obtained by combining these. Region annotation information can be associated with the combined region as well.

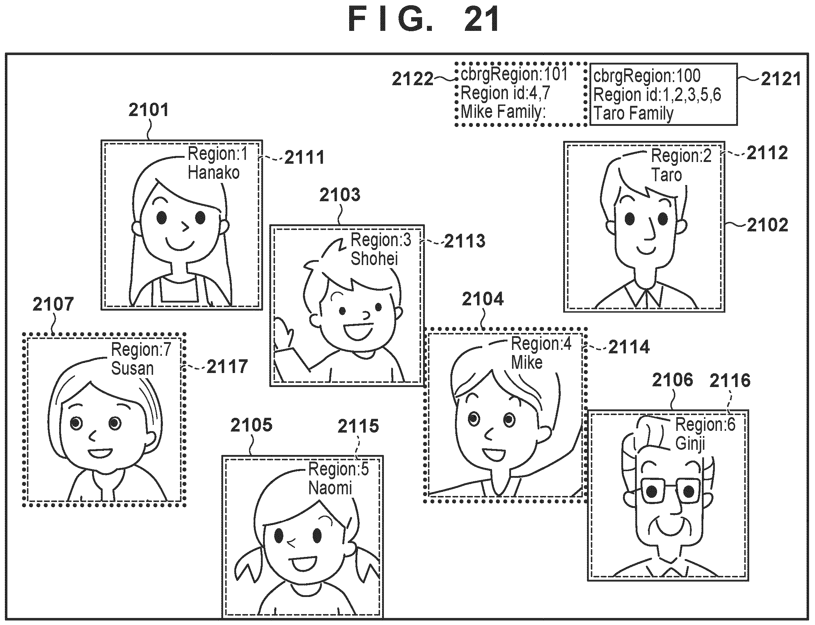

Fig. 21 is a view showing another example in which the cbrg entity group is adapted. The UI screen shown in Fig. 21 shows an example in which the adaptation example shown in Figs. 16A to 16C is displayed on the screen.

A region 2101 is a region indicated by a region item indicated by item_ID 50 in Figs. 16A to 16C. 2111 indicates region annotation information associated with the region 2101, and shows a description "Hanako" indicated by a udes item property that is the sixth entry in the ipco box associated with item_ID 50 in Figs. 16A to 16C.

A region 2102 is a region indicated by a region item indicated by item_ID 51 that is not shown in Figs. 16A to 16C. 2112 indicates region annotation information associated with the region 2102, and shows a description "Taro" indicated by a udes item property that is the seventh entry in the ipco box in Figs. 16A to 16C, which is associated with item_ID 51.

A region 2103 is a region indicated by a region item indicated by item_ID 52 that is not shown in Figs. 16A to 16C. 2113 indicates region annotation information associated with the region 2103, and shows a description "Shohei" indicated by a udes item property that is the eighth entry in the ipco box in Figs. 16A to 16C, which is associated with item_ID 52.

A region 2104 is a region indicated by a region item indicated by item_ID 53 that is not shown in Figs. 16A to 16C. 2114 indicates region annotation information associated with the region 2104, and shows a description "Mike" indicated by a udes item property that is the ninth entry in the ipco box in Figs. 16A to 16C, which is associated with item_ID 53.

A region 2105 is a region indicated by a region item indicated by item_ID 54 that is not shown in Figs. 16A to 16C. 2115 indicates region annotation information associated with the region 2105, and shows a description "Naomi" indicated by a udes item property that is the 10th entry in the ipco box in Figs. 16A to 16C, which is associated with item_ID 54.

A region 2106 is a region indicated by a region item indicated by item_ID 55 that is not shown in Figs. 16A to 16C. 2116 indicates region annotation information associated with the region 2106, and shows a description "Ginnji" indicated by a udes item property that is the 11th entry in the ipco box in Figs. 16A to 16C, which is associated with item_ID 55.

A region 2107 is a region indicated by a region item indicated by item_ID 56 shown in Figs. 16A to 16C. 2117 indicates region annotation information associated with the region 2107, and shows a description "Susan" indicated by a udes item property that is the 12th entry in the ipco box associated with item_ID 56 in Figs. 16A to 16C.

Also, as a cbrg combined region formed by combing these regions, two cbrg entity groups in the grpl box are stored in Figs. 16A to 16C, and region annotation information associated with the combined region indicated by a group ID 100 of the cbrg entity group is indicated by 2122.

As for region annotation information 2121, the regions 2101, 2102, 2103, 2105, and 2106 are combined to be identified as one region, and the region annotation information is associated with this. On the UI screen, these regions are shown as solid line regions, and region annotation information is displayed by 2121. As indicated by the 14th entry in the ipma box shown in Figs. 16A to 16C, a udes property that is the 13th entry in the ipco box is associated with the cbrg entity group that is the entity group of group ID 100. As the region annotation information, a description "Taro family" indicated by the udes property is displayed.

Similarly, as for region annotation information 2122, the regions 2104 and 2107 are combined and identified as one region, and the region annotation information is associated with this. On the UI screen information, these regions are shown as dotted line regions, and region annotation information is displayed by 2122. As indicated by the 15th entry in the ipma box shown in Figs. 16A to 16C, a udes property that is the 14th entry in the ipco box is associated with the cbrg entity group that is the entity group of group ID 101. As the region annotation information, a description "Mike family" indicated by the udes property is displayed.

According to the above-described embodiment, when storing one or more pieces of region information for identifying substances that are associated with a part of an image and captured in the image in an image file in association with the image, combination type information for combining region information and combined region information for identifying a combined region according to the combination type information are stored, thereby efficiently performing flexible region designation. That is, until now, to express a complex shape as region information, each region needs to be expressed as bit mask data, and the data size of the region information is large. However, according to this embodiment, a complex region can be designated as lightweight region information, without using bit mask data, by combining a plurality of pieces of region information. In addition, since a region can be combined in accordance with a type and identified, the association between individually designated regions can be shown. According to this, it is possible to efficiently show the information between regions, which is difficult to show the relationship so far, or the association between regions, which cannot be obtained without analysis of an enormous amount of region annotation information.

Note that in this embodiment, as for the combined region information according to a combination type, which is stored in an image file, the combination type is designated using grouping type information or a parameter for regions as one entity group. When the grouped entity group is associated with an image, a subject in the image can be identified by combining a plurality of regions. Also, region annotation information can be associated with the combined region. However, the grouping type is merely an example. Other combination types can also be defined, and any combination type configured to combine regions to handle can be used. When grouping regions, another grouped combined region can be also designated in the group. This enables more flexible region designation. Also, when handing individual regions as a group, the individual regions can also belong to different groups. Thus, one subject object can belong to a plurality of region groups and can be identified, and a region annotation can be added to each region. Note that the 4-character code for identifying the grouping type of a combined region shown in the embodiment is merely an example, and a grouping type having an arbitrary 4-character code reserved for each grouping type can be used.

### [Second Embodiment]

**In** the following embodiments including this embodiment, differences from the first embodiment will be described, and configurations are assumed to be the same as in the first embodiment unless it is specifically stated otherwise. **In** the first embodiment, as a method of identifying region information as a combined region, a method of grouping as an entity group together with grouping type information has been described. However, the method is not limited to this.

In this embodiment, a method of identifying a combined region will be described using the structure of a derived item that handles derived information defined as an item. The derived item is a mechanism configured to make another expression by performing an operation for an item using metadata. For example, a derived image item expresses a different image expression by performing an operation for one or more input images like a grid image shown in the first embodiment. The grid image is a derived image that forms an image compounded as one image by arranging a plurality of input images as sub-images on a grid. In addition, image overlay and an identity derived image are defined. In ISO/IEC23008-12 2nd Edition FDIS, in a region item, an identity derived region item is defined as a region item after a transformative item property is adapted. The identity derived region item is defined as a mechanism configured to perform conversion into a region before association with an image item. Since the conversion operation by the transformative property is defined as an operation after association with a normal image item, it is defined as a mechanism configured to convert a region item first and then associate it with an image item. In this embodiment, a method of implementing this by defining a derived region item type capable of expressing a combined region as a derived region item will be described.

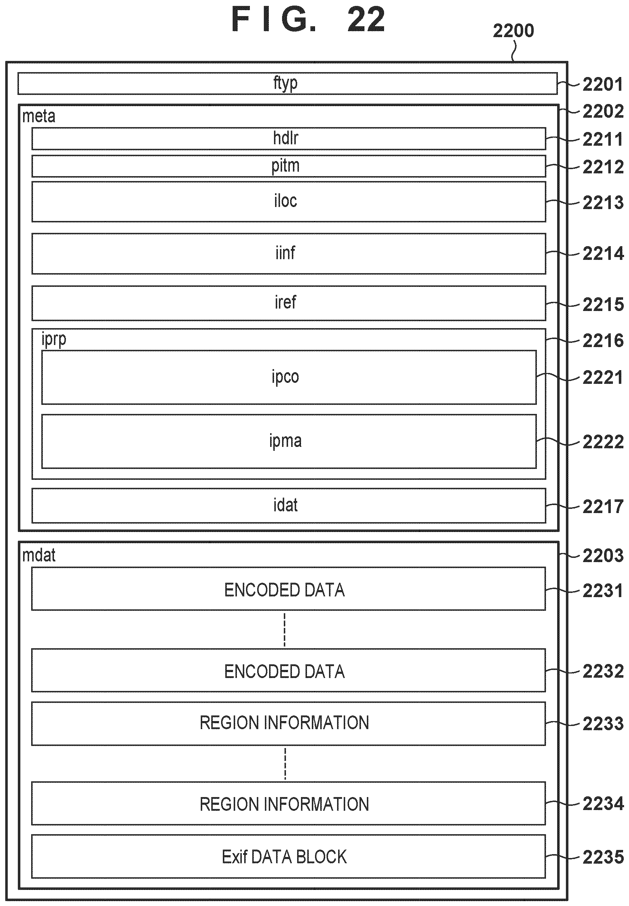

This embodiment is different from the first embodiment in that a generated HEIF file has a structure shown in Fig. 22. The block diagram of Fig. 1, the RegionItem data structure shown in Figs. 3A and 3B, and the Udes property shown in Fig. 5 are common to the first embodiment. The flowchart of Fig. 17, the flowchart of Fig. 18, and the UIs shown in Figs. 19, 20, and 21 are common except that a derived region item is used in place of an entity group. The data structure of an HEIF file configured to identify a combined region according to a combination type using a derived region item will be described below with reference to Fig. 22.

As shown in Fig. 22, an HEIF file 2200 substantially includes following three boxes (storage areas). A first box 2201 (FileTypeBox ('ftyp')) is common to the box 201 described in the first embodiment. The HEIF file according to this embodiment does not include the box 202 (ExtendedTypeBox ('etyp')) that is needed in the first embodiment but may include it.

In a second box 2202 (MetaBox ('meta')), a plurality of types of information associated with an image are separately stored in different boxes, as will be described below in detail.

A third box 2203 (MediaDataBox ('mdat')) is common to the box 204 described in the first embodiment.

Note that if the HEIF file stores a moving image, audio, or an image sequence, a point that MovieBox ('moov') (not shown) may be stored separately is common to the first embodiment.

A box 2211 (HandlerReferenceBox ('hdlr')) stores a declaration of a hander type used to analyze the structure of the box 2202. The configuration of the box 2211 is common to the configuration of the box 211 described in the first embodiment.

A box 2212 (PrimaryItemBox ('pitm')) specifies an identifier (item ID) of an image, which is a representative item of image items stored in the HEIF file 2200. The configuration of the box 2212 is common to the configuration of the box 212 described in the first embodiment.

A box 2213 (ItemLocationBox ('iloc')) stores information indicating the storage locations of information items including an image item in the HEIF file 2200. The box 2213 typically describes the storage location of an image item as a byte offset from the top of the HEIF file 2200 and a data length from the top. That is, the positions of encoded data 2231 to 2232, region information 2233 to 2234, and an Exif data block 2235 stored in the box 2203 can be specified by the information in the box 2213. For a derived item, the information in the box 2213 indicates that no data exists in the box 2203. In this case, it is indicated that there is no data structure, or the data of a derived item is stored in a box 2217 in the box 2202.

A box 2214 (ItemInfoBox ('iinf)) defines pieces of basic information (item information) such as an item ID and an item type indicating the type of an item for all items included in the HEIF file 2200. In the item information, not only image items such as an encoded image item and a derived image item but also a region item indicating a region in the image, an Exif information item indicating an Exif data block, and the like are designated. Also, information concerning a derived region item indicating a combined region is defined. As the derived region item indicating a combined region, combination type information is provided as the item type of an item designated as each derived region item. For example, a combination type RegionCombinedDerivation is a derived region item indicated by an item type 'cbrg'. When 'cbrg' is designated as the item type, it is designated that the item is a region item to which a RegionCombinedDerivation operation is adapted. Also, information about a region item that is an input forming a combined region is provided by a box 2215 shown next. This enables combination according to a combination type of a region item and a region item, or a combination indicating the association between region items as the input of a derived region item. Note that if the number of region items input as a derived region item is one, the derived region item may use an item type 'iden'. In this case, a region item can be derived using a separately defined Transformative item property. An identity derived region item is a derived region item having an item_type value 'iden', and the derived region item does not have an item main body. Details of the definition of the derived region item for each combination type of a 'cbrg' derived region item or another derived region item will be described later.

A box 2215 (ItemReferenceBox ('iref)) stores information that describes association between the items included in the HEIF file 2200. In a mode in which an image item is a captured image, the box 2215 is used to describe the association between the image item and an item of image capturing information thereof (Exif data or the like). In a mode in which a plurality of image items have a relationship of derived images, it is used to describe the association between the image items. In a mode in which a region in an image item is indicated, it is used to describe the association between the image item and a region item. In a mode in which a region is designated by combining region items, it is used to describe the association between the region item and the derived region item.

According to association of items, an item reference type is designated, and the type of item reference can be identified. Also, the reference relationship between items is described by describing item IDs designated in the box 2214 in from_item_ID and to_item_ID. The association between items in a derived region item is indicated by an item reference type 'drgn', and the ID of a designated item is designated as the type of a derived region item in from_item_ID in the box 2214. The ID of one or more region items as the input of a derived region item is designated in to_item_ID. When an operation according to the type of the derived region item is applied to the region and the reference space of the region item as the input of the derived region item, the reference space and the region defined by the derived region item are obtained. Details of the operation executed to obtain the reference space and the region are identified by the item type. Note that reference_count of 'drgn' item reference of an 'iden' derived region item equals 1.

A box 2216 (ItemPropertiesBox ('iprp')) stores various kinds of attribute information (item properties) concerning an information item included in the HEIF file 2200. More specifically, the box 2216 includes a box 2221 (ItemPropertyContainerBox ('ipco')) that describes attribute information, and a box 2222 (ItemPropertyAssociation ('ipma')) that indicates the association between the attribute information and each item.

The box 2221 may store, for example, attribute information such as entry data indicating a HEVC parameter set that is necessary for decoding of an HEVC image item, and entry data indicating the width and height of an image item on a pixel basis. It is also possible to designate attribute information capable of designating arbitrary text information as an item property. UserDescriptionProperty ('udes') shown in Fig. 5 is an example of attribute information capable of storing text information. Wenn the udes property is associated with a region item or a derived region item, region annotation information can be associated as a text description with a specific region indicated by the region item or the derived region item associated with the image item.

It is also possible to designate, as attribute information that can be designated as an item property, TransformativeProperty intended to convert an image and display it when outputting the image. This may store, for example, data indicating rotation information for rotating an image and displaying it, data indicating cutout information for cropping (cutting out) an image and displaying it, or the like. The TransformativeProperty may be adapted to a region item.

The box 2222 stores, for each item, entry data indicating association with attribute information stored in the box 2221 using the ID (item ID) of an information item. Note that if there is no attribute information to be associated with an item, like an Exif data block information item, entry data indicating association is not stored.

The box 2217 (ItemDataBox ('idat')) stores data concerning an item included in the HEIF file 2200. In the box 2217, for example, a data structure for describing a derived image item is stored. Here, for example, if the item type indicated by the box 2214 is the item of 'grid', the data structure of a grid derived image item that reconstructs an input image in a predetermined grid order and defines it is designated. For an input image of a derived image item, an item reference of dimg reference type is designated using the box 2215. Similarly, even for a derived region item that designates an item data structure, a data structure for describing the derived region item is stored in the box 2217. Note that if the derived item is, for example, an identity derived image item 'iden' that has no data structure, any data structure is not stored in the box 2217. Similarly, even for a derived region item, if the derived region item is of a type that does not designate a data structure, any data structure is not stored in the box 2217. On the other hand, for the sake of future extension, even for a derived region item that does not have a data structure such as a specific parameter, a data structure indicating parameters indicating a version and a flag may be stored. Hence, in a case where the definition is updated, there is disadvantage in which a parameter can easily be added.

Next, a definition of setting a region in any image items stored in the HEIF file 2200 using the region information 2233 to 2234 formed in accordance with the definition of the region information described in the first embodiment and associating a region annotation with the region to store will be described.

A region annotation is formed by metadata associated with one or more regions in an image item or another image item. Also, when a region item that is an input is derivation-converted by a derived region item according to a combination type, the region item can be handled as a derived region item formed by combining regions in accordance with the derived region item type. The derivation-converted region can uniquely be identified by the item ID of the derived region item.

In an image file storage apparatus 100 according to this embodiment, pieces of information associated with the region information 2233 to 2234 and the derived region item are added to the following boxes in the box 2202, thereby allowing to associate a region annotation with a region or combined regions in a specific image item.

First, in the HEIF file 2200 according to this embodiment, since the encoded data 2231 to 2232 and the region information 2233 to 2234 are stored in the box 2203, an item type is set for each data in the box 2214 to discriminate these. As for the item type, in a case of, for example, the encoded data 2231, 'hvc1' is set, and in a case of the region information 2233, 'rgan' is set. The storage locations of the region information 2233 to 2234, which are stored in the box 2203, in the HEIF file 2200 are stored in the box 2213, like the encoded data 2231 to 2232. Also, since the region information 2233 to 2234 are information for relatively specifying regions in the reference space, as described above, an image item to set regions needs to be specified. Information concerning for which image item one piece of region information 2233 sets a region is stored in the box 2215. That is, since the box 2215 describes association between items set in the box 2214, for example, information for identifying an image item associated with the encoded data 2231, for which a region is set using the region information 2233 for a region item concerning the region information 2233, is stored in the box. Also, when a region item is associated with a derived image item formed as a derived image, a region in the derived image can be set. When handling a region item as a region by performing the conversion operation of a derived region item, the derived region item type as the conversion operation of the derived region item is decided, and item_type to be set in the box 2214 is decided. To handle regions designated to region items as logically added regions, cbrg is designated as item_type. Also, as for the ID of a region item that is the input of a derived region item, the association between items is described using the box 2215. More specifically, the item ID of an item indicated by an item reference type 'drgn' and designated as a derived region item is designated to from_item_ID. Furthermore, the item ID of a region item as an input is designated to to_item_ID. If a plurality of region items are input, the IDs can be designated by listing these in to_item_ID. Pieces of information for forming the derived region item are thus designated. The logically added regions can thus be designated as one derived region item. Furthermore, to associate an image item and a derived region item, information indicating for which image item the derived region item sets a region is stored in the box 2215.

On the other hand, for a region set for a specific image item, a region annotation for the region can be set by associating any or all of the following data with a region item or a derived region item.

First, there exists a region annotation using an item property. The udes property stored in the box 2221 in the box 2216 is associated with a region item or a derived region item by the box 2222. When the udes property is associated with the region item or the derived region item, region annotation information can be associated as a text description.

Second, there exists a region annotation using a metadata item. A metadata item such as Exif that stores metadata in mdat is associated with a region item or a derived region item by a reference type cdsc in the box 2215.

Third, there exists a region annotation using another image item or entity group. A region item or a derived region item is associated with another image item or entity group by a reference type eroi. This can provide a different image expression or the like to a specific region. A region annotation can be set for a specific region in an image by the association.

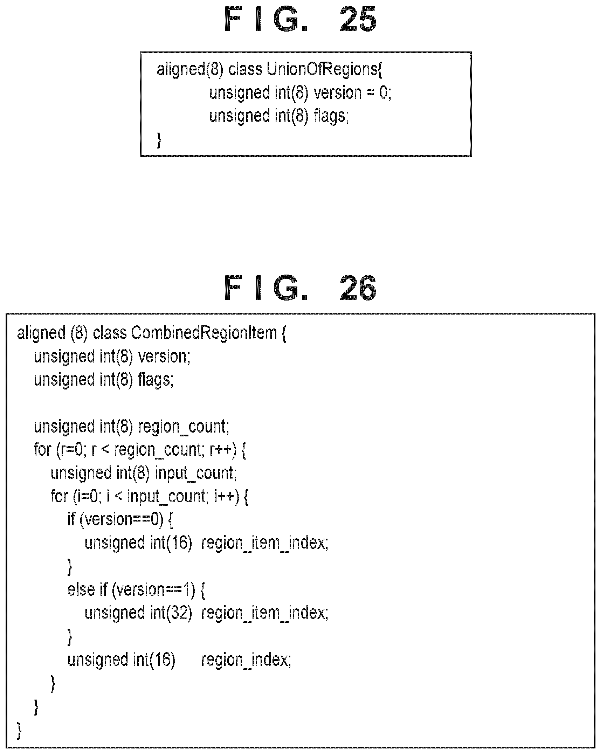

Next, the definition of a method of designating a combined region of region items that can be stored in the HEIF file 200 will be described. As a derived region item that can be stored in the HEIF file 200, region derivation of RegionCombineDerivation can be defined. The item main body of RegionCombineDerivation is empty, and structure data is not defined. On the other hand, as described above, for future extension, even for a derived region item that does not have a data structure such as a specific parameter, a data structure indicating a parameter indicating a version and a flag may be stored. In this case, the storage location of the data structure can be indicated by information (a byte offset, a data length, or the like) indicating the storage position in a file of the HEIF file 2200 in the description associated with the derived region item in the box 2213 (ItemLocationBox ('iloc')). As the storage location, normally, the data structure held by the derived region item is described in the box 2217 (ItemDataBox ('idat')). As the data structure of the derived region item, a data structure having only a version parameter and a flag parameter as shown in Fig. 25 is stored in the box. When updating the definition to be described below, there is disadvantage in which parameter addition, switching by version, or the like can easily be done. On the other hand, if only the initial version is used, empty data is stored, and wasteful data of 16 bits occurs.

A type RegionCombineDerivation of such a derived region item can be defined as follows. Note that it can easily be understood that the name of the derived region item and the 4CC of the item type for identifying the derived region item may be another name and different 4CC. For example, UnionRegionDerivation may be used as another name indicating a combination and may be identified by 'unrg', or the like.

An item whose item_type value is 'cbrg' defines a derived region item configured to create a combined region by combining one or more (or two or more) input regions by OR. The input regions are displayed as a list in SingleItemTypeReferenceBox of type 'drgn' of the derived region item in ItemReferenceBox. In an input region, a region item or a derived region item is designated. In SingleItemTypeReferenceBox of type 'drgn', the value of from_item_ID identifies a derived region item of type 'cbrg', and the value of to_item_ID identifies an input region item. A combined (or union) derived region item is associated with an image item in which a region is defined using type 'cdsc' item reference from the combined (or union) derived region item to the image item.

A region generated from the derived region item is a union of all regions of each input region item after application to the image item to be referred to. More flexible region designation can be performed by designating the derived region item as an input region. When a region is formed by OR of these input regions, all regions indicated by any of the regions indicated by the input regions are identified as regions indicated by the RegionCombineDerivation derived region item.

A plurality of RegionCombineDerivation derived region items having different item_id values can be designated in the same file.

The number of regions indicated by one region item or derived region item designated in an input region is recommended to be one (for example, region_count in the region item is 1). In this case, the number of designated input regions (ref_count in the box 2215) is recommended to be two or more. On the other hand, if the number of regions indicated by one input region is two or more (for example, region_count in the region item is 2 or more), the regions may be combined by OR of all regions together with other regions. In this case, the number of designated input regions may be one. As another method, if the numbers of regions indicated by the region item designated in the input regions of the derived region item or the derived region item are equal (region_counts in all input regions are equal), the regions may be combined in the order of input of the regions. Various region combination methods according to the number of regions may separately be controlled by the value of flags included in the definition of an item information entry in the box 2214. Alternatively, flags stored in the data structure shown in Fig. 25 may be used. Regions indicated by the RegionCombineDerivation derived region item and regions indicated by the input region item can individually be associated with an image item, and the regions in the image can be identified. Also, different pieces of region annotation information can be associated by the method defined in the region annotation.

As a derived region item that can be stored in the HEIF file 200, region derivation of RegionMultiplyDerivation can be defined. The item main body of RegionMultiplyDerivation is empty, and structure data is not defined. A type RegionMultiplyDerivation of such a derived region item can be defined as follows. Note that it can easily be understood that the name of the derived region item and the 4CC of the item type for identifying the derived region item may be another name and different 4CC. For example, RegionIntersectionDerivation may be used as another name indicating a combination and may be identified by 'isrg', or the like.

An item whose item_type value is 'mprg' defines a derived region item configured to create a combined region by combining one or more input regions by AND. The input regions are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'mprg', and the value of to_item_ID identifies an input region item. An intersection derived region item is associated with an image item in which a region is defined using type 'cdsc' item reference from the intersection derived region item to the image item.

A region generated from the derived region item is an intersection of all regions of each input region item after application to the image item to be referred to. As an input region, a region item or a derived region item is designated. More flexible region designation can be performed by designating the derived region item as an input region. When a region is formed by AND of these input regions, a common region included in all regions indicated by the input regions is identified as a region indicated by the RegionMultiplyDerivation derived region item.

A plurality of RegionMultiplyDerivation derived region items having different item_id values can be designated in the same file.

The number of regions indicated by one region item or derived region item designated in an input region is recommended to be one (for example, region_count in the region item is 1). In this case, the number of designated input regions (ref_count in the box 2215) is recommended to be two or more. On the other hand, if the number of regions indicated by one input region is two or more (for example, region_count in the region item is 2 or more), the regions may be combined by AND of all regions together with other regions. In this case, the number of designated input regions may be one. As another method, if the numbers of regions indicated by the region item designated in the input regions of the derived region item or the derived region item are equal (region_counts in all input regions are equal), the regions may be combined in the order of input of the regions. Various region combination methods according to the number of regions may separately be controlled by the value of flags included in the definition of an item information entry in the box 2214. Regions indicated by the RegionMultiplyDerivation derived region item and regions indicated by the input region item can individually be associated with an image item, and the regions in the image can be identified. Also, different pieces of region annotation information can be associated by the method defined in the region annotation.

As a derived region item that can be stored in the HEIF file 200, region derivation of RegionInverseDerivation can be defined. The item main body of RegionInverseDerivation is empty, and structure data is not defined. A type RegionInverseDerivation of such a derived region item can be defined as follows. Note that it can easily be understood that the name of the derived region item and the 4CC of the item type for identifying the derived region item may be another name and different 4CC. For example, RegionNegationDerivation may be used as another name indicating a combination and may be identified by 'ngrg', or the like.

An item whose item_type value is 'ivrg' defines a derived region item configured to create a combined region by combining one or more input regions by NOT or NOR. The input regions are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'ivrg', and the value of to_item_ID identifies an input region item. An inverted (or inverse or negation) derived region item is associated with an image item in which a region is defined using type 'cdsc' item reference from the inverted (or inverse or negation)derived region item to the image item.

A region generated from the derived region item is an inverted region of all regions of each input region item after application to the image item to be referred to. As an input region, a region item or a derived region item is designated. More flexible region designation can be performed by designating the derived region item as an input region.

When a region is formed by NOT or NOR of these input regions, a region that is not included in any of the regions indicated by the input regions is identified as a region indicated by the RegionInverseDerivation derived region item.

A plurality of RegionInverseDerivation derived region items having different item_id values can be designated in the same file.

The number of regions indicated by one region item or derived region item designated in an input region is recommended to be one (for example, region_count in the region item is 1). In this case, if the number of designated input regions (ref_count in the box 2215) is one, a region obtained by NOT of the region is designated as a combined region. That is, a region other than the region indicated by the input region is the target region. On the other hand, if the number of input regions is two or more, a region obtained by NOR of the regions indicated by the input regions is designated as a combined region. That is, a region that is indicated by all input regions and not designated in any region is the target region.

On the other hand, if the number of regions indicated by one input region is two or more (for example, region_count in the region item is 2 or more), the regions may be combined by NOR of all regions together with regions indicated by other input regions. As another method, if the numbers of regions indicated by the region item designated in the input regions of the derived region item or the derived region item are equal (region_counts in all input regions are equal), the regions may be combined in the order of input of the regions. Various region combination methods according to the number of regions may separately be controlled by the value of flags included in the definition of an item information entry in the box 2214. Regions indicated by the RegionInverseDerivation derived region item and regions indicated by the input region item can individually be associated with an image item, and the regions in the image can be identified. Also, different pieces of region annotation information can be associated by the method defined in the region annotation.

Note that if the number of region items as input regions is one, NOT or negative logic may be designated by defining InverseRegionProperty shown in Fig. 14 and associating it with the region item. In this case, NOT or NOR may be designated using iden region derivation. InverseRegionProperty ('ivrg') shown in Fig. 14 is an example of TransformativeProperty attribute information capable of designating NOT or negative logic of regions. InverseRegionProperty shown in Fig. 14 includes a 4-character code 'ivrg' indicated by a definition 1401, and InverseRegionProperty is identified using the 4-character code. The ivrg property is a property formed by only the 4-character code, version information, and flags and includes no other parameters.

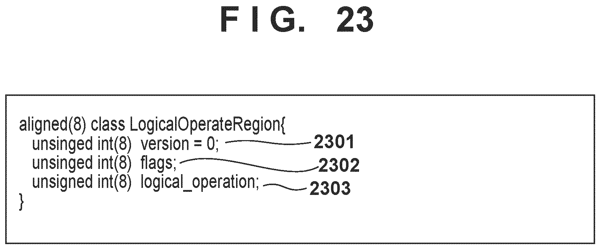

Fig. 23 shows the data structure of RegionLogicalDerivation as a derived region item that can be stored in the HEIF file 200, and region derivation by a logical operation can be defined. The data structure of RegionLogicalDerivation is the data structure of a derived region item stored in the box 2217, and includes version indicated by a definition 2301, flags indicated by a definition 2302, and logical_operation indicated by a definition 2303, as shown in Fig. 23. A type RegionLogicalDerivation of such a derived region item can be defined as follows. Note that it can easily be understood that the name of the derived region item and the 4CC of the item type for identifying the derived region item may be another name and different 4CC.

An item whose item_type value is 'lorg' defines a derived region item configured to create a combined region by combining one or more input regions by a logical operation. The input regions are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'lorg', and the value of to_item_ID identifies an input region item. A logic (or logical or logical operation) derived region item is associated with an image item in which a region is defined using type 'cdsc' item reference from the logic (or logical or logical operation) derived region item to the image item.

A region generated from the derived region item is a region obtained by adapting a designated logical operation to each input region item after application to the image item to be referred to. As an input region, a region item or a derived region item is designated. More flexible region designation can be performed by designating the derived region item as an input region. A region is formed by a logical operation of these input regions. The operator of the logical operation is provided by a logical_operation parameter of the definition 2303. That is, a region obtained as a result of performing a logical operation for regions indicated by the input region using an operation method indicated by the logical_operation parameter is identified as a region indicated by the RegionLogicalDerivation derived region item.

A plurality of RegionCombineDerivation derived region items having different item_id values can be designated in the same file.
logical_operation indicates the type of a logical operation, and is an unsigned integer indicating a logical operator adaptive to an input region as derived region conversion. A value 0 indicates a logical combination of regions by an OR operation. A value 1 indicates a logical combination of regions by an AND operation. A value 2 indicates a logical combination of regions by NOT or NOR. A value 3 indicates a logical combination of regions by exclusive OR. A value 4 indicates a logical combination of regions by NAND. A value 5 indicates a logical combination of regions by exclusive NOR. Other values are reserved.

As for the number of regions indicated by one region item designated to an input region or a derived region item is handled in the same way as described above, and a method can be defined. Also, various region combination methods according to the number of regions may separately be controlled by the value of the definition 2302 (flags) included in the definition of RegionLogicalDerivation. This can decide a behavior by the combination of the value of logical_operation and the value of flags.

Regions indicated by RegionLogicalDerivation and regions indicated by the input region item can individually be associated with an image item, and the regions in the image can be identified. Also, different pieces of region annotation information can be associated by the method defined in the region annotation.

Note that in this embodiment, a method of providing the operator of the logical operation by the parameter of logical _operation included in the data structure of RegionLogicalDerivation has been described, but this may be controlled using flags. Note that if the number of region items as the input regions is one, to designate a combined region by a logical operation, it may be associated with the region item using LogicalOperateRegionProperty shown in Fig. 15. The lorg property is TransformativeProperty, and a logical operation designated by logical_operation is applied to the associated region item. Note that the region item may be a derived region item. In this case, the logical operation may be designated using iden region derivation.

Similarly, to designate the combination of region information by another logical operation, an item type that is the derivation operation type of each derived region item may be defined. For example, exclusive OR, NAND, exclusive NOR, or the like can be designated. Also, if the number of region items as the input regions is one (ref_count in the box 2215), and one region item indicates a plurality of regions (for example, region_count in the region item is 2 or more), an item property according to the logical operation may be defined to designate a combined region. In this case, the definition can be also made by performing iden region derivation.

A derived region item type that logically combines regions designated as a derived region item has been described above. A region derivation operation type for showing association of each input region included in a derived region item will be described next.

As a derived region item that can be stored in the HEIF file 200, region derivation of RegionInclusionRelationDerivation can be defined. The item main body of RegionInclusionRelationDerivation is empty, and structure data is not defined. A type RegionInclusionRelationDerivation of such a derived region item can be defined as follows. Note that it can easily be understood that the name of the derived region item and the 4CC of the item type for identifying the derived region item may be another name and different 4CC. For example, CompoundRegionDerivation may be used as another name indicating a combination and may be identified by 'corg', or the like.

An item whose item_type value is 'irrg' defines a derived region item that designates the association between regions indicating the inclusion relationship of one or more input regions. The input regions are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'irrg', and the value of to_item_ID identifies an input region item. An inclusion relationship (or compound or mixed) derived region item is associated with an image item in which a region is defined using type 'cdsc' item reference from the inclusion relationship (or compound or mixed) derived region item to the image item.

A region generated from the derived region item indicates the relationship between regions that an input region item designated first in input region items after application to the image item to be referred to includes a second or subsequent designated input region item. As an input region, a region item or a derived region item is designated. More flexible region designation can be performed by designating the derived region item as an input region. A region is identified as a region in which a second or subsequent designated input region is included in a region indicated by an input region designated first. Note that in this embodiment, as the definition of RegionInclusionRelationDerivation, a derived region indicating the inclusion relationship that the second or subsequent input region is included in the first input region is defined. However, flexible designation may be enabled using the data structure of the derived region item. More specifically, a parameter may be defined such that which input region includes which input region or whether a plurality of input regions includes another input region can be identified. For example, designation is performed such that a parent/child relationship indicating an inclusion relationship can be identified by a parameter for each input region using ref_count.

A plurality of RegionInclusionRelationDerivation derived region items having different item_id values can be designated in the same file.

The number of regions indicated by one region item or derived region item designated as an input region is recommended to be one (for example, region_count in the region item is 1). In this case, the number of designated input regions (ref_count in the box 2215) is recommended to be two or more. On the other hand, if the number of regions indicated by one input region is two or more (for example, region_count in the region item is 2 or more), and the input region is the first input region, it may be defined that the region designated first as region information includes subsequent regions and all regions indicated by the second and subsequent input regions. In this case, the number of designated input regions may be one. Alternatively, it may be defined that the region indicated by the first input region is handled as one region, and the second and subsequent input regions are included. In this case, the number of designated input regions (ref_count in the box 2215) is recommended to be two or more. As another method, if the numbers of regions indicated by the region item designated in the input regions of the derived region item or the derived region item are equal (region_counts in all input regions are equal), an association may be indicated such that each region is included in the first region in the order of input of the regions. Various region combination methods according to the number of regions may separately be controlled by the value of flags included in the definition of an item information entry in the box 2214. Regions indicated by the RegionInclusionRelationDerivation derived region item and regions indicated by the input region item can individually be associated with an image item. Also, different pieces of region annotation information can be associated by the method defined in the region annotation. Note that in this embodiment, a derived region item for indicating the relationship between regions is defined, and the relationship between region items as input regions is shown. However, instead of defining as a derived region item, the it may be described simply using item reference between region items. In this case, for example, it is described as item reference from a region item designated first in a derived region item to another region item.

As a derived region item that can be stored in the HEIF file 200, region derivation of RegionTouchRelationDerivation can be defined. The item main body of RegionTouchRelationDerivation is empty, and structure data is not defined. A type RegionTouchRelationDerivation of such a derived region item can be defined as follows. Note that it can easily be understood that the name of the derived region item and the 4CC of the item type for identifying the derived region item may be another name and different 4CC.

An item whose item_type value is 'tcrg' defines a derived region item that designates the association between regions indicating that one or more input regions hold a contact relationship. The number of input regions is two, and these are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'tcrg', and the value of to_item_ID identifies an input region item. A contact relationship (or touch or common boundary) derived region item is associated with an image item in which a region is defined using type 'cdsc' item reference from the contact relationship (or touch or common boundary) derived region item to the image item.

A region generated from the derived region item indicates the relationship between regions that regions designated in each input region item after application to the image item to be referred to hold the contact relationship. As an input region, a region item or a derived region item is designated. More flexible region designation can be performed by designating the derived region item as an input region. Two regions in an image associated by the derived region item identify that subject objects hold the contact relationship. This does not simply indicate that the regions are in contact or overlap each other but indicates that the subject objects in the image hold the contact relationship.

A plurality of RegionTouchRelationDerivation derived region items having different item_id values can be designated in the same file.

The number of regions indicated by one region item or derived region item designated as an input region is recommended to be one (for example, region_count in the region item is 1). On the other hand, if the number of regions indicated by one input region is two (for example, region_count in the region item is 2), the number of designated input regions (ref_count in the box 2215) may be one. In this case, it is indicated that two regions included in one input region hold the contact relationship. In addition, if the number of regions indicated by one input region is two or more (for example, region_count in the region item is 2 or more), or the number of input regions is two or more, it may be defined that all regions of the first input region and all regions indicated by the second input region hold the contact relationship. Furthermore, if the numbers of regions indicated by the region item designated in the input regions or the derived region item are equal (region_counts in all input regions are equal), it may be defined that each region designated in the first input region and a region designated by the second or subsequent input region hold the contact relationship in the order of indicating the regions. Various region combination methods according to the number of regions may separately be controlled by the value of flags included in the definition of an item information entry in the box 2214. Regions indicated by the RegionTouchRelationDerivation derived region item and regions indicated by the input region item can individually be associated with an image item. Also, different pieces of region annotation information can be associated by the method defined in the region annotation. Note that in this embodiment, a derived region item type indicating a contact relationship has been described. However, a type indicating non-contact may be used. Also, both the contact relationship and a non-contact relationship may be defined by defining flags or an additional parameter in the data structure of the RegionTouchRelationDerivation derived region item. Note that in this embodiment, a derived region item for indicating the relationship between regions is defined, and the relationship between region items as input regions is shown. However, instead of defining as a derived region item, the it may be described simply using item reference between region items. In this case, for example, it may be described as item reference from an item designated as an input region item in a derived region item to another input region item, or the item reference may mutually be described.

As a derived region item that can be stored in the HEIF file 200, region derivation of RegionDepthOrderRelationDerivation can be defined. The data structure of RegionDepthOrderRelationDerivation is not shown but includes the same parameters as the entity group shown in Fig. 12. A type RegionTouchRelationDerivation of such a derived region item can be defined as follows. Note that it can easily be understood that the name of the derived region item and the 4CC of the item type for identifying the derived region item may be another name and different 4CC.

An item whose item_type value is 'dorg' defines a derived region item that designates the association between regions by the forward/backward relationship of foreground/background of one or more input regions. Input regions of RegionDepthOrderRelationDerivation are displayed as a list in SingleItemTypeReferenceBox of type 'drgn' of the derived region item in ItemReferenceBox in the order of a direction indicated by depth_direction. In SingleItemTypeReferenceBox of type 'drgn', the value of from_item_ID identifies a derived region item of type 'dorg', and the value of to_item_ID identifies an input region item. A forward/backward relationship (or depth or foreground/background) derived region item is associated with an image item in which a region is defined using type 'cdsc' item reference from the forward/backward relationship (or depth or foreground/background) derived region item to the image item.

A region generated from the derived region item indicates the relationship between regions that regions designated in each input region item after application to the image item to be referred to hold the forward/backward relationship. As an input region, a region item or a derived region item is designated. More flexible region designation can be performed by designating the derived region item as an input region.

depth_direction indicates the direction of depth (foreground/background), and is an unsigned integer indicating a direction in the depth direction of an input region of a derived region. A value 0 indicates that listed input regions are listed from the foreground to the background. A value 1 indicates that listed input regions are listed from the background to the foreground. Other values are reserved.

A plurality of RegionDepthOrderRelationDerivation derived region items having different item_id values can be designated in the same file.

The number of regions indicated by one region item or derived region item designated in an input region is recommended to be one (for example, region_count in the region item is 1). In addition, the number of region items or derived region items as input regions is recommended to be two or more. On the other hand, if the number of regions indicated by one input region is two or more (for example, region_count in the region item is 2 or more), the number of designated input regions (ref_count in the iref box) may be one. In this case, it indicates that a plurality of regions included in one input region are designated sequentially in a direction indicated by depth_direction in the storage order. As another method, a plurality of regions included in one input region may be defined as regions at the same position, that is, at the same depth. If a plurality of regions are included in one input region, the number of input regions may be one. Alternatively, if the numbers of regions indicated by input regions are equal, it may be defined such that the regions are arranged in a direction indicated by depth_direction in the order of designating the regions in the region count order. Various region combination methods according to the number of regions may separately be controlled by defining flags or an additional parameter in the data structure of the RegionDepthOrderRelationDerivation derived region item. In addition, an additional parameter may be defined and designated to indicate whether the individual regions have the same depth or the next depth. Note that in this embodiment, a derived region item for indicating the relationship between regions is defined, and the relationship between region items as input regions is shown. However, instead of defining as a derived region item, the it may be described simply using item reference between region items. In this case, for example, it is described as item reference from a region item designated first in a derived region item to another region item. In this case, the arrangement order in the depth can be identified in the order of designating item reference.

As a derived region item that can be stored in the HEIF file 200, region derivation of RegionForbidRelationDerivation can be defined. The item main body of RegionForbidRelationDerivation is empty, and structure data is not defined. A type RegionForbidRelationDerivation of such a derived region item can be defined as follows. Note that it can easily be understood that the name of the derived region item and the 4CC of the item type for identifying the derived region item may be another name and different 4CC. For example, OclusionDerivation may be used as another name indicating a combination and may be identified by 'corg', or the like.

An item whose item_type value is 'fbrg' defines a derived region item that designates the association between regions indicating that a second input region is partially or wholly hidden by a first input region. The number of input regions is two, and these are displayed as a list in SingleItemTypeReferenceBox of type 'drgn' of the derived region item in ItemReferenceBox. In SingleItemTypeReferenceBox of type 'drgn', the value of from_item_ID identifies a derived region item of type 'fbrg', and the value of to_item_ID identifies an input region item. A hiding relationship (or occlusion or distubance) derived region item is associated with an image item in which a region is defined using type 'cdsc' item reference from the hiding relationship (or occlusion or distubance) derived region item to the image item.

A region generated from the derived region item indicates the relationship between regions that regions designated in each input region item after application to the image item to be referred to hold the hiding relationship. As an input region, a region item or a derived region item is designated. More flexible region designation can be performed by designating the derived region item as an input region. Two regions in an image associated by the derived region item identify that one region hides an object indicated by the other region. For example, if all objects indicated by the other region are hidden by an object indicated by the one region, the hidden objects do not appear as subject in the image. That is, this indicates that a hidden region is set based on information that can be estimated from another image or the like, and it is hidden by an object indicated by another region.

A plurality of Region Forbid Relation Derivation derived region items having different item_id values can be designated in the same file.

The number of regions indicated by one region item or derived region item designated as an input region is recommended to be one (for example, region_count in the region item is 1). On the other hand, if the number of regions indicated by one input region is two (for example, region_count in the region item is 2), the number of designated input regions (ref_count in the box 2215) may be one. In this case, it indicates that an object indicated by the first region of two regions included in one input region hides an object indicated by the second region. In addition, if the number of regions indicated by one input region is two or more (for example, region_count in the region item is 2 or more) or the number of input regions is two or more, it may indicate that a region indicated by the first input region hides an object in a region designated by the second or subsequent input region.

Various region combination methods according to the number of regions may separately be controlled by the value of flags included in the definition of an item information entry in the box 2214. Regions indicated by the RegionForbidRelationDerivation derived region item and regions indicated by the input region item can individually be associated with an image item. Also, different pieces of region annotation information can be associated by the method defined in the region annotation. Note that in this embodiment, a derived region item for indicating the relationship between regions is defined, and the relationship between region items as input regions is shown. However, instead of defining as a derived region item, it may be described simply using item reference between region items. In this case, for example, it is described as item reference from a region item designated first in a derived region item to another region item.

In the definition of a derived region item according to each combination type described above, a method of making a definition according to the number of regions held by a region item as an input region using flags in each definition has been described. As another combined region describing method, a method of implementing this by defining the data structure of a different derived region item regardless of control by the value of flags even if a plurality of regions are indicated by one region item or derived region item designated in an input region will be described with reference to Fig. 26. In an example shown in Fig. 26, a combined region by OR will be described as an example. Even other combination types can be defined by the same mechanism. The definition of CombinedRegionItem shown in Fig. 26 shows a data structure that can be stored in an idat box as the data structure of a derived region item.

The data structure shown in Fig. 26 is an example of extension of a combined region item. The combined derived region item of the extension has a configuration capable of describing a plurality of combined regions in one combined derived region item. In a region item, when describing a plurality of regions in one region item, these can be described by designating a value of 2 or more in region_count. Like this method, the definition enables to describe a plurality of regions even in a combined region. For each region of the number (region_count) defined by the extended combined derived region item, the number of input regions (input_count) forming the combined region is given. Each input region item is designated by the index (region_item_index) of a region item defining the input order to the combined region and the index (region_index) in a list of regions defined by the input region item.

Here, version is defined as 0 or 1. In a future extension, a new version value can be designated for the version. Here, flags is set to 0, and all flag values are reserved. Here, region_count is the number of regions defined by the combined region item. Here, input_count is the number of regions that are input regions of each combined region defined in the combined region item. Here, region_item_index is the index of an input region item in a list of input region items designated by SingleItemTypeReferenceBox of the type 'drgn' of the derived region item, and indicates one of input regions that form one region of a combined region defined by the derived region item. Here, region_index is the index of a region in an input region item notified by a region_item_index field that is an input region forming one region of the combined region.

When the data structure of the derived region item is defined in the above-described way, the derived region item can easily be formed regardless of the number of regions forming a region item that is an input region. Also, if the same annotation needs to be added to a plurality of combined regions, a common annotation can be added, like an existing region item, even if the annotation is not added for each derived region item.

The data structure can also be adapted to other combination types. In a derived region item having a parameter like RegionLogicalDerivation, the same definition can be done by adding the parameter to the data structure.

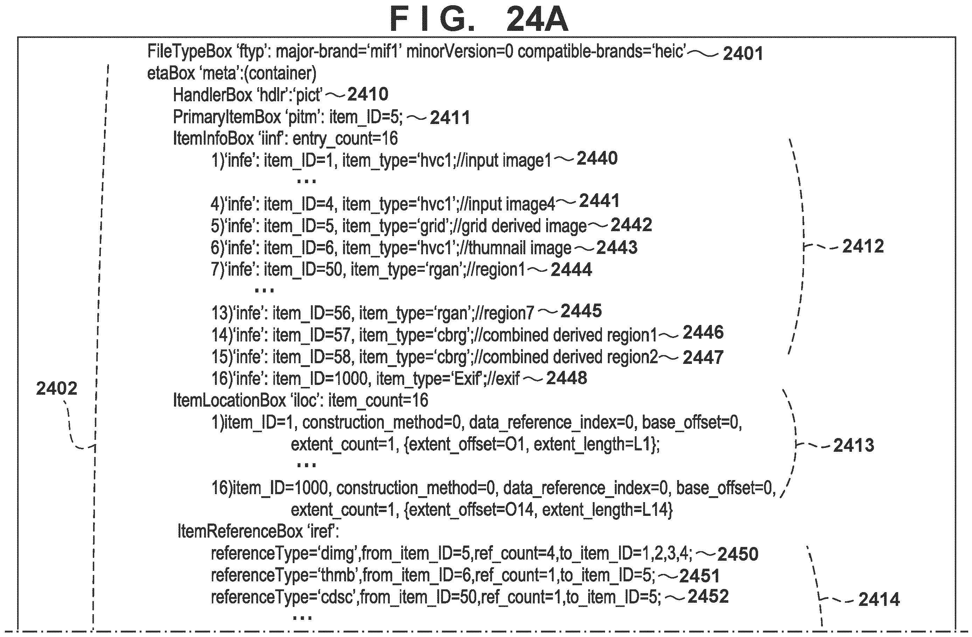

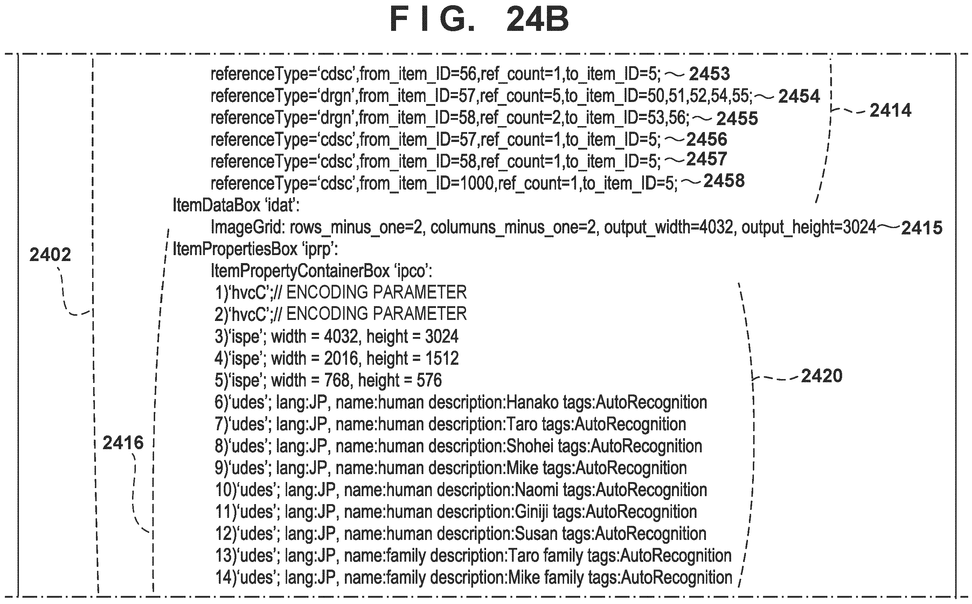

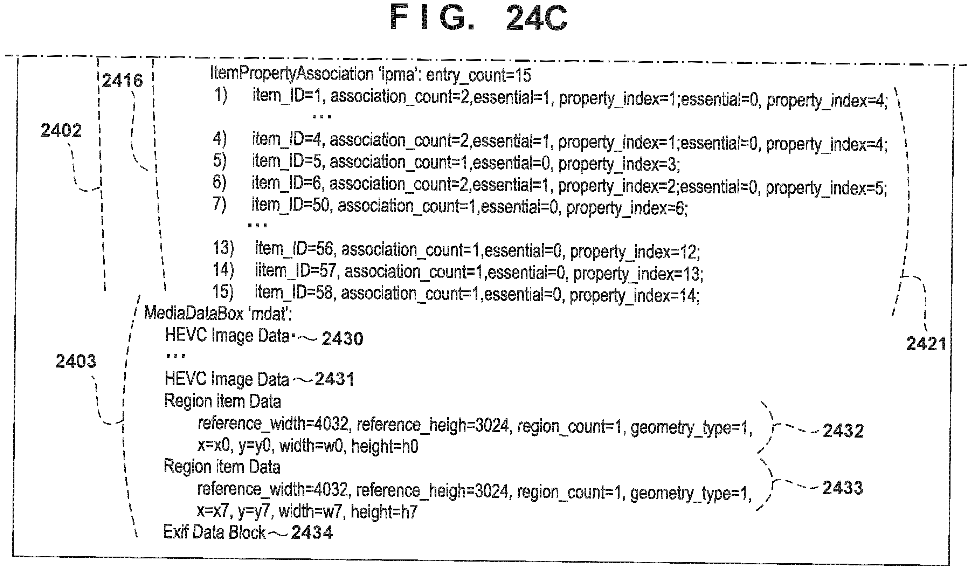

An example of an image file output by the image file storage apparatus 100 according to this embodiment will be described here with reference to Figs. 24A to 24C. Note that in this embodiment, the image file is configured such that regions obtained by combining region items by two RegionCombineDerivation derived region items are stored in the file as a file data structure.

In the example shown in Figs. 24A to 24C, as indicated by a description 2403 corresponding to the box 2203, descriptions 2430 and 2431 corresponding to the encoded data (HEVC Image Data) 2231 to 2232 of HEVC are stored. Furthermore, an image file that stores descriptions 2432 and 2433 corresponding to the region information (Region Item Data) 2233 to 2234 and a description 2434 corresponding to the Exif data block 2235 is exemplarily shown. As indicated by the descriptions 2432 and 2433, the pieces of region information 2233 to 2234 comply with the definitions shown in Figs. 3A and 3B, and each specify a rectangular region for a reference space with an image size of 4,032 pixels × 3,024 pixels. Also, for the regions specified by the descriptions, coordinates (x0, y0) of a reference point and an image size (w0 × h0) and coordinates (x7, y7) of a reference point and an image size (w7 × h7) in the reference space of the region are designated.

A description 2401 corresponds to the box 2201. As a type value major-brand of a brand definition complying with the HEIF file, 'mif1' is stored, and as a type value compatible-brands of a compatible brand definition, 'heic' is stored.

A description 2402 corresponding to the box 2202 shows various kinds of information of metadata describing untimed data stored in the output file example. A description 2410 corresponds to the box 2211, and the handler type of designated MetaDataBox (meta) is 'pict'. A description 2411 corresponds to the box 2212, 5 is stored as item _ID, and the ID of an image to be displayed as a first priority image is designated.

A description 2412 corresponds to the box 2214, and indicates item information (an item ID (item_ID) and an item type (item_type)) for each item. Each item can be identified by item _ID, and what kind of item is identified by item_ID is shown. In the example shown in Figs. 24A to 24C, since 16 items are stored, entry_count is 16, 16 types of information are arranged in the description 2412, and an item ID and an item type are designated for each of these. In the image file shown in figures, the first to fourth pieces of information corresponding to a description 2440 to a description 2441 are HEVC-encoded image items of type hvc1. Also, in the fifth information indicated by a description 2442, a grid derived image item of item type grid is designated. The sixth information indicated by a description 2443 is an HEVC-encoded image item of item type hvc1, which serves as a thumbnail image. The seventh to 13th pieces of information corresponding to a description 2444 to a description 2445 are region items of item type rgan indicating a region. Each of 14th and 15th information corresponding to a description 2446 and a description 2447 is a derived region item of item type cbrg indicating region derivation of RegionCombineDerivation. The cbrg region derived items designated by the description 2446 and the description 2447 can identify combined regions using an item ID 57 and an item ID 58, respectively.

In 16th information corresponding to a description 2448, a metadata item of item type Exif indicating an Exif data block is designated.

A description 2413 corresponds to the box 2213, and the pieces of information of the storage position and the data size of each item in the HEIF file are designated. For example, an encoded image item whose item_ID is 1 indicates that the data is located at a position where the offset is O1 in the file, and the size is L1 bytes, and the position of the data in the box 2203 is specified.

A description 2414 corresponds to the box 2215, and indicates the reference relationship (association) between items. Item reference indicated by a description 2450 designates dimg indicating that the reference type is derived image. Also, it is indicated that HEVC encoded image items of item_IDs 1 to 4 designated by to_item_ID are referred to by a grid derived image item of item_ID 5 designated by from_item_ID. The encoded image items of item_IDs 1 to 4 are thus designated as input images to the derived image item.

Item reference indicated by a description 2451 designates thmb indicating a thumbnail relationship as the reference type. It is indicated that a grid derived image item of item_ID 5 designated by to_item_ID is referred to by an HEVC encoded image item of item_ID 6 designated by from_item_ID. This indicates that the HEVC encoded image item of item_ID 6 is the thumbnail image of the grid derived image item of item_ID 5.

Item references indicated by descriptions 2452, 2453, 2456, 2457, and 2458 designate cdsc indicating a content description relationship as the reference type. The description 2452 indicates that a grid derived image item of item_ID 5 designated by to_item_ID is referred to by a region information item of item_ID 50 designated by from_item_ID. The region information item of item_ID 50 thus indicates a partial region in the grid derived image item of item_ID 5. Similarly, the description 2453 indicates that the grid derived image item of item_ID 5 designated by to_item_ID is referred to by a region information item of item_ID 56 designated by from_item_ID. The region information item of item_ID 56 thus indicates a partial region in the grid derived image item of item_ID 5. The description 2456 indicates that the grid derived image item of item_ID 5 designated by to_item_ID is referred to by a cbrg derived region item of item_ID 57 designated by from_item_ID. A combined region indicated by the cbrg derived region item of item_ID 57 thus indicates a partial region in the grid derived image item of item_ID 5. Similarly, the description 2457 indicates that the grid derived image item of item_ID 5 designated by to_item_ID is referred to by a cbrg derived region item of item_ID 58 designated by from_item_ID. A combined region indicated by the cbrg derived region item of item_ID 58 thus indicates a partial region in the grid derived image item of item_ID 5. The description 2458 indicates that the grid derived image item of item_ID 5 designated by to_item_ID is referred to by an Exif data block item of item_ID 1000 designated by from_item_ID. This indicates that the Exif data block item of item_ID 1000 thus describes information at the time of image capturing of the grid derived image item of item_ID 5.

Item references indicated by descriptions 2454 and 2455 designate drgn indicating that the reference type is a derived region. The description 2454 indicates that region information items of item_IDs 50, 51, 52, 54, and 55 designated by to_item_ID are referred to by the cbrg derived region item of item_ID 57 designated by from_item_ID. The region information items of item_IDs 50, 51, 52, 54, and 55 are thus designated as input regions to the derived region item. Hence, regions indicated by the region information items of item_IDs 50, 51, 52, 54, and 55 are combined as a combination type cbrg, and all regions included in any of the five regions are designated as regions indicated by the cbrg derived region item. The description 2455 indicates that region information items of item_IDs 53 and 56 designated by to_item_ID are referred to by the cbrg derived region item of item_ID 58 designated by from_item_ID. The region information items of item_IDs 53 and 56 are thus designated as input regions to the derived region item. Hence, regions indicated by the region information items of item_IDs 53 and 56 are combined as a combination type cbrg, and all regions included in any of the two regions are designated as regions indicated by the cbrg derived region item.

A description 2415 corresponds to the box 2217, and the data structure of the grid derived image item of item ID 5 is designated. In the HEIF file according to this embodiment, 2 is designated in rows_minus_one of the grid derived image and 2 is designated in columuns_minus_one. This indicates that 2 × 2 input images are formed as grid derived images. Note that as the number of input images of item reference indicated by the description 2450, an item count "4" designated in ref_count and the number of grids, that is, 2 × 2 (4), which are values matching each other, are designated. 4032 is designated in the number or output_width, and 3024 is designated in output_height. The image is formed as an image having a width of 4,032 pixels and a height of 3,024 pixels. Note that since the cbrg derived region item described in this embodiment does not have a data structure, there is no data structure stored in the box 2217. However, in a case of a derived region item that stores a data structure, like a RegionLogicalDerivation derived region item, the data structure is stored in the box 2217 of the description 2415.

A description 2416 corresponds to the box 2216, and includes a description 2420 corresponding to the box 2221 and a description 2421 corresponding to the box 2222. The description 2420 lists pieces of attribute information usable in items or entity groups as entry data. As shown in figure, the description 2420 includes not only the first and second entries indicating encoding parameters and the third, fourth, and fifth entries each indicating the display pixel size of an item but also the sixth to 14th entries indicating annotation description information. As the annotation description information, lang is American English (en-US) in all entries, "human" is set as name in the sixth to 12th entries, and "family" is set in the 13th and 14th entries. As the description, "Hanako", "Taro", "Shohei", "Mike", "Naomi", "Ginnji", and "Susan" representing the names of persons indicated by the regions are sequentially set in the sixth to 12th entries. Also, as the description, "Taro family" and "Mike family" indicating families are set in the 13th and 14th entries. In tags, "AutoRecognition" is set to add a tag indicating that a region is an automatically recognized region.

In the entry data of the description 2421 corresponding to the box 2222, the pieces of attribute information listed in the description 2420 are associated with items or entity groups stored in the HEIF file. In the example shown in Figs. 24A to 24C, common 'ispe' (property_index is 4) is associated with the image items of item_ID 1 to 4, and this indicates that the images have the same image size of 2,016 pixels × 1,512 pixels. Similarly, common 'hvcC' (property_index is 1) is associated with the image items of item_ID 1 to 4, and this indicates that the same encoding parameter is used. On the other hand, different item properties are associated with the items or entity groups of item_ID 5 to 15. 'ispe' (property_index is 3) is associated with a derived image item of item_ID 5, and this indicates that the image size is 4,032 pixels × 3,024 pixels.

'ispe' (property_index is 5) is associated with an image item of item_ID 6, and this indicates that it is an image having an image size of 768 pixels × 576 pixels. Similarly, 'hvcC' (property_index is 2) is associated with an image item of item_ID 6, and this indicates an encoding parameter. 'udes' (property_index is 6) is associated with a region information item of item_ID 50, and this indicates region annotation information for the region. 'udes' (property_index is 12) is associated with a region information item of item_ID 56, and this indicates region annotation information for the region. Addition of region annotation information to a region is thus implemented by associating the 'udes' property. Also, 'udes' (property_index is 13) is associated with a derived region item of item_ID 57, and this indicates region annotation information for a combined region. 'udes' (property_index is 14) is associated with a derived region item of item_ID 58, and this indicates region annotation information for a combined region. Addition of region annotation information to a combined region is thus implemented by associating the 'udes' property with an entity group. Note that since no item property is associated with the Exif data block item of item_ID 1000, corresponding entry information is not stored.

In the above-described embodiment, as for the combined region information according to a combination type, which is stored in an image file, the combination type is designated using region derivation for an input region as derivation conversion type information or a derived region using a parameter. When, when the derived region item is associated with an image, a subject in the image can be identified by combining a plurality of regions. Also, region annotation information can be associated with the combined region. Here, the type of derivation conversion is merely an example. Other combination types can also be defined, and any derivation conversion configured to handle regions in combination can be used. When performing derivation conversion of a region, other derived regions can also be designated for an input region. This enables more flexible region designation. Also, when handling individual regions as a derived region as an input region, input regions to different derived regions can be used for the individual regions. According to this, one subject object can belong to a plurality of derived regions and can be identified, and a region annotation can be added to each region. Note that the 4-character code for identifying the derived region item type of a combined region shown in the embodiment is merely an example, and a derived region item type having an arbitrary 4-character code reserved for each derived region item type can be used.

### [Third Embodiment]

In the above-described embodiments, as a method of identifying region information as a combined region in accordance with a type, a method using an entity group and a method using a derived region have been described. However, the present invention is not limited to these. In this embodiment, as a method of identifying a combined region, a method of improving the data structure itself of region information defined as an item will be described.

More specifically, flags 302 in the definition of region information shown in Figs. 3A and 3B or a separate additional parameter is defined, and a value capable of identifying a combination type described in the above-described embodiment is defined. For example, when flags is used, if flags&2 is effective, a combined region of cbrg type is designated. In this case, it is impossible to combine a plurality of region items. However, a plurality of regions (region_count is 2 or more) can be defined in one region item, and a region obtained by combining these can be designated. For a combination type that separately needs a parameter, the parameter can be associated using an item property.

As described above, according to this embodiment, in a case where one or more pieces of region information for identifying substances that are captured in an image and associated with a part of the image are stored in an image file in association with the image, combination type information for combining region information and combined region information for identifying a combined region according to the combination type information are stored, thereby efficiently allowing to perform flexible region designation. In this case, region annotation information cannot be associated with individual regions, but one region can flexibly be designated as one region item.

### [Fourth Embodiment]

In the above-described embodiments, a method of identifying region information in a two-dimensional image as a combined region in accordance with a type and associating it with the two-dimensional image have been described. However, the present invention is not limited to this. That is, this can be implemented by defining region information having a three-dimensional shape for a three-dimensional graphic image and combining the methods described in the above-described embodiments.

According to this, not only for a two-dimensional image but also for a three-dimensional image formed by point group data, mesh data, or the like, three-dimensional region information can individually be identified, and the regions can be combined in accordance with a type and identified.

As described above, according to this embodiment, in a case where one or more pieces of three-dimensional region information for identifying three-dimensional substances that are expressed by the three-dimensional image and associated with a part of the three-dimensional image are stored in an image file in association with the three-dimensional image, combination type information for combining three-dimensional region information and combined region information for identifying a combined region according to the combination type information are stored, thereby efficiently allowing to perform flexible region designation.

### [Fifth Embodiment]

In the above-described embodiments, a still image is mainly used as an image, and region information is associated with the still image and identified. A method of identifying regions as a combined region in accordance with a type and associating it with the still image has been described. However, the present invention is not limited to this.

That is, region information is defined for a moving image or an image sequence, and a combined region according to a type can be designated similarly using a metadata structure for storing a moving image. In the moving image or the image sequence, a region corresponding to a subject object that a recognition processing unit 114 detects from the image may move in the image along with the elapse of time. For this reason, regions may overlap in the image at a certain point of time, and a region may appear or disappear (occlusion by another region, an object outside an image or a frame, or the like).

As a storage method, metadata concerning a moving image or an image sequence is described using a moov box that is a metadata structure defined by ISOBMFF. This indicates, in a trak box designated in the moov box, a time-designated sequence of media data belonging to presentation of the moving image. For example, a sequence of a video frame, a sequence of a sub-part of a video frame, a sequence of an audio sample, or a sequence of time-designated metadata sample is described. Each time unit of data is called a sample in each track. This may be a frame of a video, audio, or time-designated metadata, a sub-part of a frame, or an image in an image sequence. Samples are defined as all media data associated with the same presentation time in a track.

Region information is stored in an mdat box that stores encoded data of a moving image. Metadata of a timed sequence describing region information is configured as a track that is called a metadata track and stores timed metadata. When a metadata track is associated with a track of a moving image using a tref box, a region in the moving image can be indicated. As for a plurality of combined regions, a plurality of region metadata tracks are described, these tracks are put into a track group, and combined regions according to the track group type can be designated. Also, region annotation information can be associated using a track group description box. If regions concerning a plurality of different objects are designated in one region metadata track, the regions can be identified by IDs or the like in region information stored in the mdat box, and put into a group using a sample group structure. The sample group can similarly designate group type information, and region annotation information can be added to a combined region according to a group type using a sample group description box.

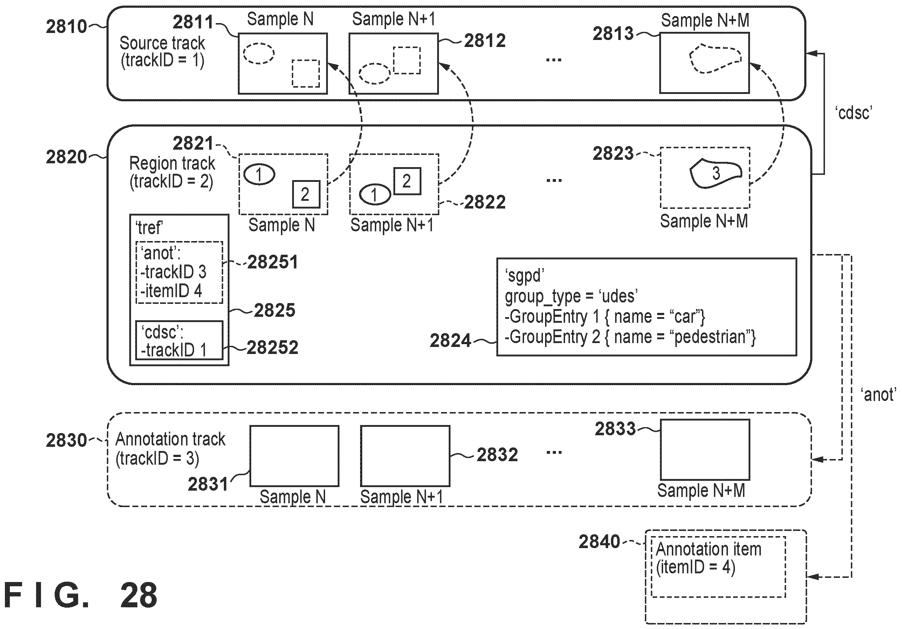

Also, a sample for describing a combined region can be defined and stored as the same or individual metadata tracks. A method of defining region information for a moving image or an image sequence, designating a combined region according to a type using a metadata structure for storing a moving image, and storing it in a file will be described here with reference to Figs. 28, 29, 30, and 31.

Fig. 28 shows an example of presentation including region information stored in a media file. Here, mapping between a region and an annotation associated with it is included in a sample of a region track in accordance with several embodiments. Media data formed by a time-designated sequence of an image or moving image frame is stored in a track 2810 called a source track. In this source track, the time designation units of the time-designated sequence are encapsulated into samples (2811, 2812, and 2813). For example, the source track can be a video track (for example, a track including a handler box of handler type 'vide'), or an image sequence track (for example, a track including a handler box of handler type 'pict'). Region information may be designated in a part of the samples 2811, 2812, and 2813, and an annotation associated with the region may be designated. A region is detected by an image analysis algorithm or selected by a user. The geometry, that is, the position and/or shape of each region in the samples 2811, 2812, or 2813 of the source track 2810 is described in a region track 2820, and this can be regarded as a metadata track. This is, for example, a track including a handler box of handler type 'meta'.

The metadata track 2820 is formed by, for example, a sample entry having a coding name, or a 4-character sample entry type 'rgan' dedicated to a "region annotation" track or a "region" track. The metadata track 2820 is called a "region track". In the region track, a sample defines one or more regions of an image included in a sample of an associated image sequence or video track (also called a source track).

In the region track 2820, as indicated by 28252, a region is defined using track reference of type 'cdsc' from the region track to the source track and associated with the source track 2810 of track_ID 1 including a sample.

The region track 2820 shown in Fig. 28 is formed by a sample 2821 that describes two regions whose region identifiers equal 1 and 2. These regions move between continuous samples. For example, the positions and, in some cases, shapes of regions 1 and 2 change in a sample 2822. After that, the regions having region identifiers 1 and 2 disappear, and a new region whose region identifier equals 3 appears, like a sample 2823. A region identifier and the position and shape information of a corresponding region are generated by a generation unit 113 in accordance with the information of a subject object that the recognition processing unit 114 detects from an image. Note that when generating region information or the like, not only the detection result of the subject object by the recognition processing unit 114 but also, according to the information of a region designated by the user operating an operation input unit 107, the generation is made. The generated region identifier and region information are stored in a file as metadata by a metadata processing unit 112. In the region track, an annotation called a region annotation exists, and it is sometimes associated with one or more samples such as the samples 2821, 2822, and 2823 in the region track. The region annotation may be an item as indicated by 2840, for example, an image item or a metadata item, another track 2830, samples 2831, 2832, and 2833 in the other track 2830, or a simple label or text, like an example indicated by 2824. The simple annotation indicated by 2824 is provided as SampleGroupDescriptionEntry in SampleGroupDescriptionBox or an item property (not shown) of the region track 2820 itself. In 2824, SampleGroupDescriptionBox can have an arbitrary value of grouping_type indicating the type of a property described by SampleGroupDescriptionEntry. In 2824, an annotation is formed by a user description of a text format as a grouping_type value represented by a 4-character code 'udes'. If the annotation of a region is formed by another track like the annotation track 2830, the track is a metadata track, a video track, an audio track, a 3D video track, or an image sequence track in accordance with the type of the annotation. In the region track 2820, as indicated by 28251, the region annotation track 2830 is associated using a track reference type 'anot'. Using the same mechanism (28251), the region track 2820 can refer to an annotation item as indicated by 2840. In this case, like the example shown in the first embodiment, a 'unif' brand needs to be set in the media file. Each region in the sample 2821, 2822, or 2823 of the region track 2820 is associated with a region identifier. Using the same region identifier between continuous samples, the same moving region can be identified between the continuous samples. The scope (uniquely identifiable range) of a region identifier may be persistent across a plurality of samples in the region track, or the scope of the region identifier may cover the whole media file. When the range is limited to the region track, the file can easily be edited. As a detailed example, when creating a new region track, the region identifier of another region track need not be analyzed to detect the possibility of conflict, and an arbitrary region identifier can be used in a region track created anew. On the other hand, if the scope of the region identifier covers the whole media file, a combination of regions or the relationship between regions may easily be described. This will be described later in detail concerning a combined region or the relationship between regions. If a designation of the scope of the region identifier exists in the media file (the whole media file or a plurality of samples in a region track), a client or a reader is guaranteed to identify the same region by the same region identifies of different samples. If the scope of the region identifier is not shown in the media file, the content creator uses the same region identifier between the samples or not, and a client or a reader is not guaranteed to identify the same moving region between different samples using the same region identifier.

Information that designates the scope of the region identifier in the region track can be stored in the sample entry of the region track using a flag indicating whether the scope of the region identifier is persistent for all samples associated with the sample entry. For example, RegionSampleEntry that describes a sample of a region track or one of sub-boxes such as RegionTrackConfigBox is used. Alternatively, in some cases, in the sample entry, the scope of the region identifier to the region track is designated by, for example, a track header box as a specific flag value. Storage of identification information in a case where the scope of the region identifier covers the entire media file is identified using a level box structure at a level higher than the track (For example, as an 'ftyp' or 'styp' brand, the same scope is held, or the same source track is described, or a description is done in a track group of the region track in an entity group). HEIF specifications define the payload of a sample in the region track. The data (or payload) of the sample of the region track describes the shape, the position, the size of the region, or the like.

These pieces of region information define the shapes, positions, and sizes of the regions in a reference space mapped in the samples 2811, 2812, and 2813 of the source track 2810 associated with the region track 2820. For example, the shape of a region may be a point, a polyline, a rectangle, a polygon, a binary mask, or the like, and this is shown in the payload of the sample by a geometry_type parameter. In the HEIF specifications, a means for associating an annotation with a region in a sample of the region track is also defined. For example, a sample-to-region-id-mapping ('regm') sample group can be used (not shown).

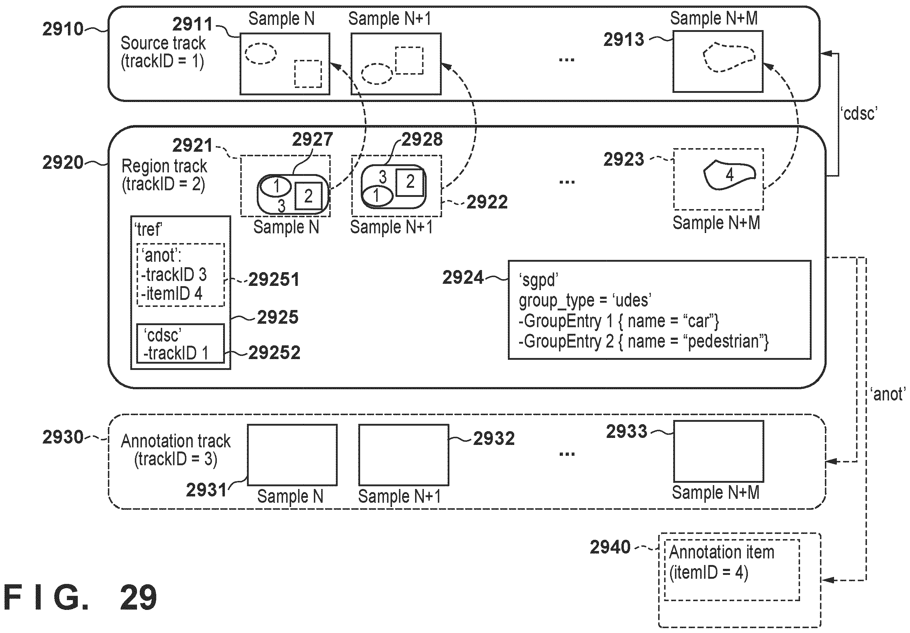

Fig. 29 shows an example of a region track 2920. For example, samples 2921 and 2922 include regions 1 and 2, and a union of the two regions as third regions 2927 and 2928. This is an example of the combination of regions. As the combination method, combination types such as OR, AND, and NOT shown in the first and second embodiments can similarly be adapted. In the embodiment, the region track 2920 is extended to support a region generated from an operation on a region. To make it clear and concise, a region generated as a result of an operation or conversion into one or more regions will be referred to as a "combined region" or a "derived region". Also, to make it clear and concise, a region used in conversion or an operation will be referred to as an "input" region, a "simple" region, or a "basic" region. In this embodiment, a region track is defined as a metadata track of 'rgan' sample entry type, which includes a sample defining one or more regions in an image of an associated image sequence or a video track. These one or more regions can be simple regions (or basic regions), or can be also combined regions (or derived regions). It is also possible to further combine a simple region (or basic region) and a combined region (or derived region) or use combined regions (or derived regions) in combination. Each region in a sample of a region track is associated with a region identifier independently of its type. Thus, an annotation can be associated with the region by the region identifier using an existing mechanism predetermined by HEIF or the like. The combined region or the derived region is discriminated from the simple region or the basic region in the sample of the region track by a specific value of geometry_type.

As the method of describing a combined region of one or more regions in an image of an image sequence or a video track, several methods will be further described. As the first designation method, a shape type (geometry_type) directly indicates the type of combination or derivation.

For these types, combination types such as OR, AND, and NOT shown in the first and second embodiments can be designated without limitations. Next, the specific integer value of geometry_type is reserved to represent one or another type combination such that interoperability can be made between a media file writer (or a storage module or a package module) and a reader (or an analysis module or a media player). The payload (or data) of the sample from the region track can be extended as follows.

```
aligned (8) class RegionSample {
 unsigned int field_size = ((RegionTrackConfigBox.flags & field_length_size) ==
 field_length_size) ? 32 : 16;
 // this is a temporary, non-parsable variable
 unsigned int(32) region_count;
 for (r=0; r < region_count; r++) {
 unsigned int(32) region_identifier;
 unsigned int(8) geometry_type;
 if (geometry_type == 0) {
 // point
 signed int(field_size) x;
 signed int(field_size) y;
 }
 else if (geometry_type == 1) {
 // rectangle
 signed int(field_size) x;
 signed int(field_size) y;
 unsigned int(field_size) width;
 unsigned int(field_size) height;
 }
 /* the shape type of other basic regions is the same as in Figs. 3A and 3B and will
 be omitted */
 else if (geometry_type == 6) {
 // union of regions
 unsigned int (8) num_regions;
 (for int n=0; n < num_regions, n++) {
 unsigned int(32) region_id; // regions that are part of the union
 }
 }
 else if (geometry_type == 7) {
 // intersection of regions
 unsigned int (8) num_regions;
 (for int n=0; n < num_regions, n++) {
 unsigned int(32) region_id; // regions that are part of the Intersection
 }
 else if (geometry_type == 8) {
 // negation of regions
 unsigned int (8) num_regions;
 (for int n=0; n < num_regions, n++) {
 unsigned int(32) region_id; // regions that are part of the negation
 }
 /* thereafter, the same designation can be done even for other combination types
 */
 }
```

Note that the value of geometry_type of each combined region in the above RegionSample need only be a specifiable value.

Here, num_regions indicates the number of input regions to derivation or combination. Here, region_id 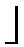 indicates region_identifier of the input region to derivation or combination. In a case of a combined region or a derived region, data concerning shape information (the shape, the position, the size, and the like) does not exist (omittable). The shape information of the combined region or the derived region can be estimated from the input region, as needed. For example, if all input regions have a geometry type designated as a rectangular shape and are arranged in a grid to form a rectangular boundary box, or if input regions are formed as peripheral regions periodically arranged around a center region, the shape can easily be estimated.

The input region and the combined region are sometimes interleaved in the payload of the sample when, for example, object detection or recognition is executed in one pass. That is, the designation order of a shape type that is a basic region designated in one sample and a shape type that is a combined region can be an arbitrary designation order. Also, the combined region is sometimes defined at the end of the payload of the sample when, for example, object detection or recognition is executed in a plurality of passes. As an option, a most significant bit designated to 1 can be added before the integer value of geometry_type corresponding to the combination of regions, or it can be defined in a reservation range corresponding to a large value of 8-bit integer values that can be designated by geometry_type. For example, the reservation range of a value designating the combination of regions can be a range from 11110001 to 11111111 (in binary notation), that is, from 241 to 255 (in decimal notation). Hence, 15 types can be used as combination, and 241 types can be used as other geometry types that are basic regions describing the shape of a region. The range can be adapted such that more values can be assigned to a combination as needed.

As the second designation method, geometry_type indicates that a region is a combined region or a derived region using a specific integer value (for example, 0xFF), and the combination type information of the combined region or the derived region is designated using combination_type. For the types that can be designated to combination_type, combination types such as OR, AND, and NOT shown in the first and second embodiments can be designated without limitations, as described above. In this embodiment, the sample payload is updated as follows.

```
 aligned (8) class RegionSample {
 unsigned int field_size = ((RegionTrackConfigBox.flags & field_length_size) ==
 field_length_size) ? 32 : 16;
 // this is a temporary, non-parsable variable
 unsigned int(32) region_count;
 for (r=0; r < region_count; r++) {
 unsigned int(32) region_identifier;
 unsigned int(8) geometry_type;
 if (geometry_type == 0) {
 // point
 signed int(field_size) x;
 signed int(field_size) y;
 }
 else if (geometry_type == 1) {
 // rectangle
 signed int(field_size) x;
 signed int(field_size) y;
 unsigned int(field_size) width;
 unsigned int(field_size) height;
 }
 /* the shape type of other basic regions is the same as in Figs. 3A and 3B and will
 be omitted */
 else if (geometry_type == 0xFF) { /* reserved value for generic combination */
 unsigned int (8) combination_type;
 unsigned int (8) num_regions;
 for (int n=0; n < num_regions, n++) {
 unsigned int(32) region_id; // regions that are part of the combination
 }
```

Here, combination_type indicates a type of derivation of a region or the combination of regions (example: OR, AND, NOT, inclusion relationship, contact relationship, and the like). Here, num_regions indicates the number of input regions to derivation or combination. Here, region_id indicates region_identifier of the input region to derivation or combination. As an option, in the first designation method or the second designation method, additional information such as a parameter or a flag can be included in the sample entry of the region track 'rgan'. As the additional information, for example, "combination_present" is defined as a flag value that can be designated in RegionTrackConfigBox predetermined in the HEIF specifications. If this value is set to a specific value, it indicates that region combination or derivation may be included in the region track. If the value is not set to the specific value, it indicates that only a basic region or a simple region is included in the region track.

```
 aligned(8) class RegionTrackConfigBox () extends FullBox ('rgaC', version=0,
 flags) {
 unsigned int((field_length_size + 1) * 16) reference_width;
 unsigned int((field_length_size + 1) * 16) reference_height;
 unsigned int(1) combination_present;
 unsigned int(7) reserved;
 }
```

Here, if combination_present is set, it indicates that a combination of regions may be included in the sample referenced by the sample entry including this box. If combination_present is not set, a parser or a reader can identify that a combination of regions is not included in the sample that refers to the sample entry including this box. When this information is held at the sample entry level, the parser or the reader can determine that a certain region combination exists from the top of the file. In a case of a legacy player that does not support region combination, the region track is not processed, or processing is performed while neglecting a part of the sample having geometry_type corresponding to the region combination, so recognition or interpretation may be impossible. In this case, when a region is designated from a simple region or a basic region (without interleaving the simple region and the combined region) and stored, and the combined region is stored at the end of the sample, processing can be interrupted when the combined region appears, and only the simple region or the basic region can be processed. Alternatively, all the simple regions or basic regions can be processed.

As the third designation method, using the designation of a flag value in a case where combination_present of region combination or derivation is included in the region track, combination_type is indicated at the same level as region_identifier in the payload of the sample of the region track, like the second designation method.

```
 aligned (8) class RegionSample {
 unsigned int field_size = ((RegionTrackConfigBox.flags & field_length_size) ==
 field length_size) ? 32 : 16;
 // this is a temporary, non-parsable variable
 unsigned int(32) region_count;
 for (r=0; r < region_count; r++) {
 unsigned int(32) region_identifier;
 unsigned int(8) geometry_type;
 if (RegionTrackConfigBox.combination_present ==1) {
 unsigned int (8) combination_type;
     }
     if (geometry_type == 0) {
     // point
 signed int(field_size) x;
 signed int(field_size) y;
 }
 else if (geometry_type == 1) {
 // rectangle
 signed int(field_size) x;
 signed int(field_size) y;
 unsigned int(field_size) width;
 unsigned int(field_size) height;
 }
 /* the shape type of other basic regions is the same as in Figs. 3A and 3B and will
 be omitted */
 else if (geometry_type == 0xFF) { /* reserved value for generic combination */
 unsigned int (8) num_regions;
 for (int n=0; n < num_regions, n++) {
 unsigned int(32) region_id; // regions that are part of the combination
 }
```

Here, combination_type indicates a derivation type of a region or a combination of regions (example: OR, AND, and NOT). For example, a specific value such as 0 indicates that the combination is "no combination" or "absent". Hence, if the sample entry indicates that there is no combined or derived region, designation of combination_type can be avoided. Next, geometry_type uses a general-purpose value (for example, 0xFF). Information that describes a combined or derived region in the payload of the sample of the region track is simply formed by a list of region_identifier of input regions associated with combination or derivation.

The above-described several designation methods and optional methods according to this embodiment are effective when one region track is included in a media file. On the other hand, there are several disadvantages particularly if decision of region or object recognition is done in a plurality of passes. For example, the sample payload and, sometimes, the corresponding sample size, and a chunk offset in the sample description of the region track need to be updated. Also, it is impossible to process a combination of regions across different region tracks. On the other hand, in the method according to this embodiment, the number of region tracks 2920 can be suppressed small, and there is possibility that the number of region tracks can be one in a normal use case. These indicate tradeoff between the description cost and the number of designations in the target use method. When combination or derivation of a region described in a sample can be designated, and a region identifier is held, an integrated method for associating an annotation with a region can be provided independently of the type such as simple, basic, or combined or derived (see Fig. 28). Furthermore, an aspect on the time base of combination can be processed. If there is no combination declared in the sample payload, this means that no region combination exists in the sample.

As for the method of extending the definition of RegionSample as described above, the same extension definition is possible even in the method by the definition of RegionItem shown in the third embodiment.

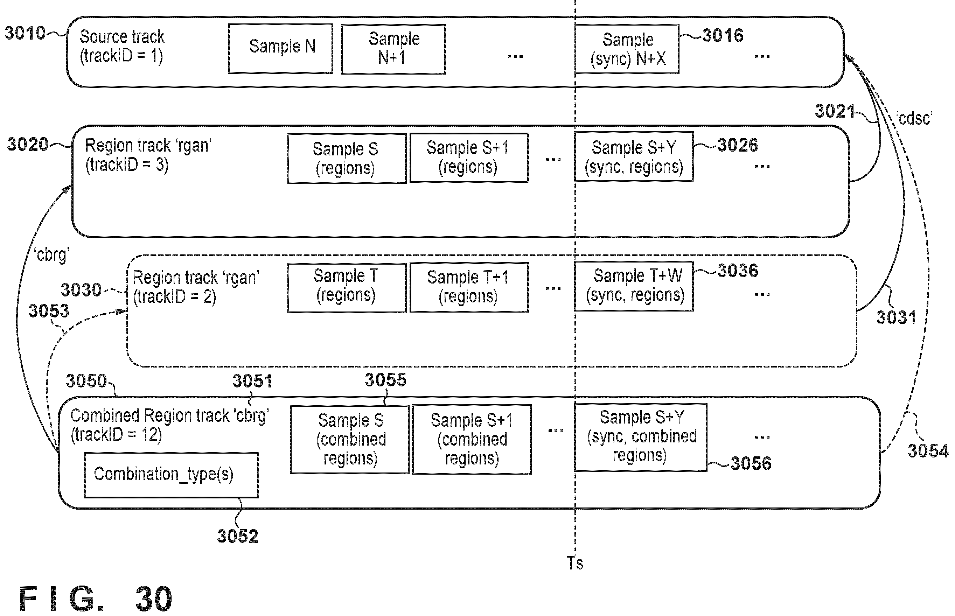

Fig. 30 shows another example in this embodiment. In this embodiment, some of the above-described disadvantages, particularly, the necessity of updating the payload of the sample of the region track is improved.

In this embodiment, a combined region or a derived region is defined in a specific track 3050. The track is newly defined as CombinedRegionTrack 3050, and includes a specific sample entry 3051. As a method of providing a region combination type 3052 of the region, the track sometimes uses a specific box in the sample entry.

CombinedRegionTrack is a metadata track having an arbitrary 4-character code and reserved for the description of a sample entry 'cbrg' or "Combined Regions".

This is a kind of region track, and its sample includes, as an input region, a region defined by one or more region tracks 3020 and/or 3030, and defines one or more regions that are combined regions or derived regions. Using track reference of type 'cbrg' (3053) from the combined region track 3050 to one or more region tracks 3020 and/or 3030, the combined region track 3050 is associated with a region track that defines an input region to a combined region or a derived region. The combined region track can be associated with a source track 3010 by track reference of type 'cdsc' 3054. If 3054 does not exist, the source track can be acquired via the 'cbrg' track reference type 3053, and for at least one region track referred to by the 'cbrg' track reference type 3053, a track reference type 'cdsc' 3021 or 3031 can be traced. If 3054 exists, the source track can directly be identified from the combined region track 3050. Like the region track 3020 or 3030, the combined region track 3050 can associate a region annotation with each combined region or derived region defined in the sample of the associated source track. For the region track, the region annotation may be an item (example: an image item or a metadata item), a sample in another track (see an annotation track 2930 in Fig. 28), or SampleGroupDescriptionEntry. Each region in the sample of the combined region track is associated with a region identifier. A range that can uniquely be identified by the region identifier of the combined region is indicated by a persistent_region_ids flag in one sample entry of the combined region track or a sub-box thereof. By using the region identifier, an annotation can be associated with the combined region in the sample via an association map defined by a sample-to-region-id-mapping sample group. In this case, the value of the region identifier in the sample and the value of the region identifier in the sample group are in the same value space. Since the combined region in the combined region track can be calculated from the input region, a description of the shape, the position, the size, and the like may be absent. If the shape, the position, the size, and the like of the entire combined region are held at the time of file generation, these may be included in the payload of the sample of the combined region track. The sample of the combined region track needs to be temporally synchronized or aligned with a corresponding sample of the region track referred to via the cbrg' track reference 3053. Note that the combined region track may be mixed in the combined region and a basic region or a simple region in the sample. For example, it is a case where repetitive object detection or recognition is executed, and an additional simple region or basic region is defined by the repetition. Designating these new regions in the combined region track may be easier than editing an existing region track. The combined region and the basic region can be discriminated using geometry_type described in the above embodiment and the modification thereof. For a synchronous sample 3016 of the source track or for each synchronous sample 3026 or 3036 of the region track, a synchronous sample 3056 temporally aligned with the synchronous sample preferably exists in the combined region track 3050 (an example of time Ts in Fig. 30). When defining the combination type 3052 of the combined region track, several options exist in accordance with whether a combination of single type is included or whether a combination or derivation of a region of different type is mixed.

In the first method, a combined region or a derived region of a single combination type is included in the combined region track 3050. In this case, the combination type is designated in the sample entry or one of the sub-boxes thereof (that is, the 'stsd' box or one of the sub-boxes thereof). This can avoid repetition of the combination type in each region in each sample of the combined region track (3055, 3056, or the like). This can be done in RegionTrackConfigBox of a new version, a new configuration box unique to the combined region track, or a new box included in the sample entry of type 'cbrg' (for example, in addition to RegionTrackConfigBox defined as version 0 in the HEIF specifications).

To extend RegionTrackConfigBox and indicate the combination type 3052 of the combined region track 3050, the following description is possible. aligned(8) class RegionTrackConfigBox () extends FullBox ('rgaC', version, flags)

```
 {
 unsigned int((field_length_size + 1) * 16) reference_width;
 unsigned int((field_length_size + 1) * 16) reference_height;
 if (version > 0 ) unsigned int (8) combination_type;
 }
 aligned(8) class CombinedRegionSampleEntry extends MetadataSampleEntry
 ('cbrg'){
 RegionTrackConfigBox config; // mandatory with version=1
 }
```

If combination _type 3052 is included in the new configuration box unique to the combined region track 3050, the box can be defined as follows. aligned(8) class CombinedRegionTrackConfigBox () extends FullBox ('cbrC', version, flags) {

```
 unsigned int (8) combination_type;
 // optional parameters, can be controlled by flags or version fields of the box
 unsigned int((field_length_size + 1) * 16) reference_width;
 unsigned int((field_length_size + 1) * 16) reference_height;
 }
 aligned(8) class CombinedRegionSampleEntry extends MetadataSampleEntry
 ('cbrg'){
 CombinedRegionTrackConfigBox config;
 }
```

In CombinedRegionSampleEntry, in a general use method, combination of regions by OR that is a combination type that may particularly be used, or the like is defined as a default combination type of the combined region track, thereby omitting the configuration box. That is, if the default combination type is used, designation is unnecessary. If a combination type other than the default value is used as combination_type, a configuration box needs to exist in the sample entry describing the sample of the combined region track.

Parameters reference_width and reference_height are options in CombinedRegionTrackConfigBox because it may be the same as the region track to be referred to particularly if the same reference space is shared, or only one region track exists. If the same reference space does not exist in the region track to be referred to, these parameters may be designated in CombinedRegionTrackConfigBox by an encapsulating module such that the reader can correctly arrange the combined region on a source image.

If combination_type 3052 is in the new box included in the sample entry of type 'cbrg', definition can be done as follows. (A name and a 4-character code used below are merely examples, and an arbitrary reservation name and 4-character code can be used unless these conflict with others that are already used). aligned(8) class CombinedRegionSampleEntry extends MetadataSampleEntry ('cbrg'){

```
 RegionTrackConfigBox config; // with version = 0
 RegionCombinationTypeBox combination_type;
 }
        RegionCombinationTypeBox is defined, for example, as follows.
 aligned(8) class RegionCombinationTypeBox () extends FullBox ('rcbt', version,
 flags) {
 unsigned int (8) combination_type;
 // optional parameters
 unsigned int(8) num_input_regions;
 unsigned int(8) combination_shape;
 // possibly other parameters avoiding repetition in the samples
 }
```

For the combination type designation 3052, an optional parameter may be included regardless of the above-described means particularly in a case where a fixed number of regions are used in a combination or a single shape is formed. As the optional parameter, a parameter indicating how many input regions are used as the fixed number of input regions (example: num_input_regions parameter) or a parameter indicating shape information in a case where a single shape is repeated (example: combination_shape parameter) can be provided to prevent repetition in a sample 3055 or 3056 of the combined region track 3050. As a value used for the shape information that is a parameter designated here, the value defined as the value of geometry_type of the sample of the region track can be reused (for example, 1 indicates a rectangle, 2 indicates an ellipse, etc.) If the values of these parameters are designated to 0, these are reserved to indicate that a specific combination shape is not used and it may optionally exist in the sample 3055 or 3056 of the compose region track 3050. In a case of num_input_regions, it is necessary to interpret that the number of input regions may change for each combined region, and the number of input regions is shown in the sample 3055 or 3056 of the combined region track 3050. Next, in the first method, the sample of the combined region track can be expressed as follows in accordance with a parameter existing in the sample entry or a sub-box thereof. aligned (8) class RegionCombinationSample {

```
 unsigned int(8) combined_region_count;
 for (r=0; r < combined_region_count; r++) {
 unsigned int(8) combined_region_identifier;
 /* if not provided at sample entry level (or sub-box)*/
 unsigned int (8) num_input_regions;
 for (n=0; n < num_ input _regions, n++) {
 unsigned int(32) input_region_identifier; // region that are part of the union
 }
 // optionally shape, position, size information may be described for the combined
 region, if not provided at sample entry level (or sub-box)
 }
 }
```

num_input_regions indicates the number of input regions used in the combined region. If usable, this can be acquired from the sample entry or one of the sub-boxes thereof, and otherwise, this is declared in the sample.

In the second method, a combined region track like 3050 includes combined regions or derived regions of several types. In this case, the combination type 3052 may be declared in advance in the sample entry or a sub-box (a configuration box, a dedicated box, or the like) of the sample entry and referred to by the sample. If the combination type of 3052 is declared in the sample entry in advance and referred to by the sample, the sample entry can be defined as follows.

```
 aligned(8) class CombinedRegionSampleEntry extends MetadataSampleEntry
 ('cbrg'){
 unsigned int (8) num_combination_types;
 unsigned int (8) combination_type[num_combination_types]
 // possibly additional parameters describing combinations that are common to
 several samples
 }
        
```

Here, num_combination_types indicates the number of combination types used in the sample that refers to the sample entry.

Here, combination_type indicates a list of combination types used in the sample that refers to the sample entry. The combination type is mapped to a reserved value, like, for example, an 8-bit integer value. For example, the value is defined as 1 for a union of regions, 2 for an intersection, and the like, and a value 0 may be reserved. The values of these combination types are used as follows in the sample 3055 or 3056.

```
 aligned (8) class CombinedRegionSample {
 unsigned int(8) combined_region_count;
 for (r=0; r < combined_region_count; r++) {
 unsigned int(8) combined_region_identifier;
 unsigned int(8) combination_idx;
 unsigned int(8) num_input_regions;
 for (i=0; i < num_input_regions; i++) {
 unsigned int(8) input _region_identifier;
 }
 }
 }
```

Here, combined_region_count indicates the number of combined regions in the sample. The number needs to be at least 1 (If it is 0, declaration in the sample is unnecessary). Here, combined_region_identifier indicates the region identifier of a combined region. The region identifier can be used as an arbitrary region identifier to, for example, express association of an annotation, recombination, or the relationship with another region. Here, combination_idx indicates, in a list, the index of the combination type declared in the sample entry referred to by the sample. A value 0 is reserved. As the value, a value defined in advance, for example, an integer value for interoperability (1 for a union, 2 for an intersection, or the like) needs to be used.

num_input_regions indicates the number of regions used in a combined region. Here, input_region_identifier indicates the region identifier of a region used in the combined region.

If the combination type 3052 is declared in advance in a sub-box of the sample entry, such as a configuration box, and referred to by the sample, the sample entry and the configuration box can be defined as follows.

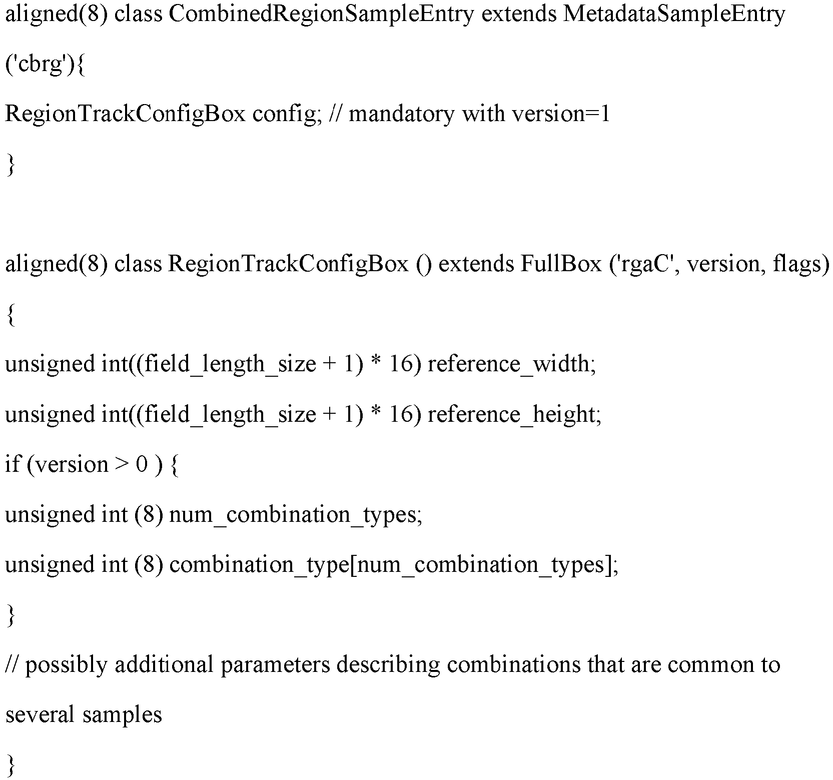

Here, the num_combination_types and combination_type parameters have the same meaning as the above-described configuration. In this describing method, RegionTrackBox of a new version is used, but a specific configuration box may be also used as follows.

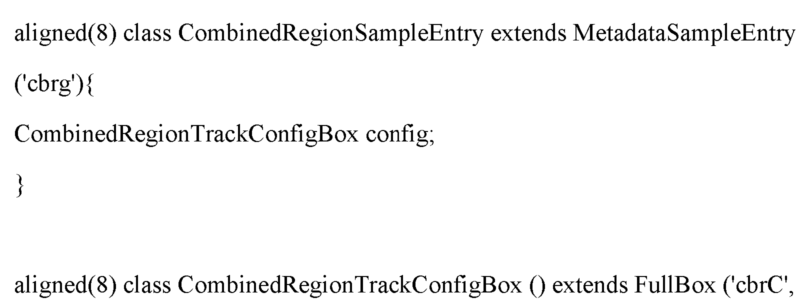

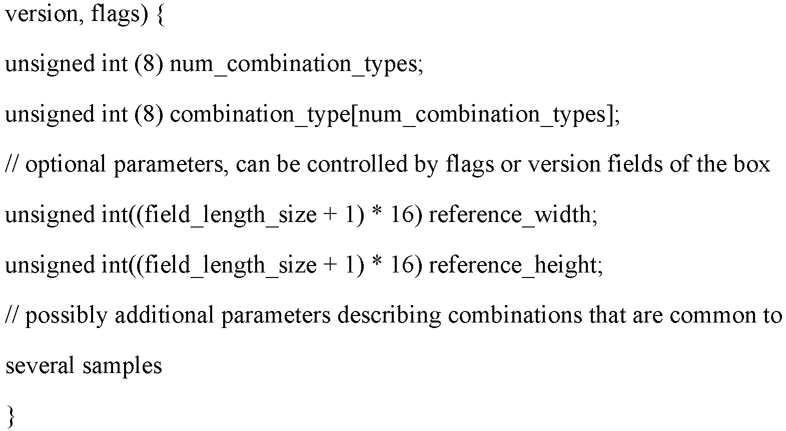

Here, the num_combination_types and combination_type parameters have the same meaning as the above-described configuration. Here, identification concerning the reference space is indicated by an option, for example, in a case where it cannot be estimated from a reference region track. For example, if there is only one region track, or all region tracks to be referred to have the same reference space, parameters associated with the reference space can be omitted.

Reference of the combination type in the sample is performed via the combination_idx parameter that provides an index defined in advance in the list, as in the above-described method. In this method, the reference is done in the configuration box of the sample entry referred to by the sample.

If the combination type 3052 is declared in advance in a sub-box of the sample entry, such as a dedicated box, and referred to by the sample, the sample entry and the dedicated box can be defined as follows.

```
 aligned(8) class CombinedRegionSampleEntry extends MetadataSampleEntry
 ('cbrg'){
 RegionTrackConfigBox config; // with version = 0
 RegionCombinationTypeBox combination_types;
 }
```

RegionCombinationTypeBox can be defined, for example, as follows.

```
aligned(8) class RegionCombinationTypeBox () extends FullBox ('rcbt', version,
 flags) {
 unsigned int (8) num_combination_types;
 unsigned int (8) combination_type[num_combination_types];
 // optional parameterss
 unsigned int(8) num_input_regions;
 unsigned int(8) combination_shape;
 // possibly other parameters avoiding repetition in the samples
 }
```

Here, the num_combination_types and combination_type parameters are the same as those described above. As additional data concerning the combination type 3052, an optional parameter common to several samples may be also included regardless of the above-described means in a case where, for example, a fixed number of regions are used in a combination or a single shape is formed. As the optional parameter, a parameter indicating how many input regions are used as the fixed number of input regions (example: num_input_regions parameter) or a parameter indicating shape information in a case where a single shape is repeated (example: combination_shape parameter) can be provided to prevent repetition in a sample 3055 or 3056 of the combined region track 3050. As a value used for the shape information that is a parameter designated here, the value defined as the value of geometry_type of the sample of the region track can be reused (for example, 1 indicates a rectangle, 2 indicates an ellipse, etc.) If the values of these parameters are designated to 0, these are reserved to indicate that a specific combination shape is not used and it may optionally exist in the sample 3055 or 3056 of the compose region track 3050. In a case of num_input_regions, it is necessary to interpret that the number of input regions may change for each combined region, and the number of input regions is shown in the sample 3055 or 3056 of the combined region track 3050.

As the third method, the combination type 3052 in a combined region track like 3050 can be described in the payload of the sample 3055 or 3056 regardless of the number of combination types in use. For example, one or more regions can be defined as follows in the sample of the combined region track.

```
aligned (8) class RegionCombinationSample {
 unsigned int(8) combined_region_count;
 for (r=0; r < combined_region_count; r++) {
 unsigned int(8) combined_region_identifier;
 unsigned int(8) combination_type;
 unsigned int (8) num_input_regions;
 for (n=0; n < num_ input _regions, n++) {
 unsigned int(32) input_region_identifier; // region that are part of the union
 }
 // optionally shape, position, size information may be described for the combined
 region.
 }
 }
```

Here, combined_region_count indicates the number of combined regions in the sample. The number needs to be at least 1 (If it is 0, declaration in the sample is unnecessary). Here, combined_region_identifier indicates the region identifier of a combined region. The region identifier can be used as an arbitrary region identifier such as association of an annotation, recombination, or expression of the relationship with another region. Here, combination_type indicates a combination type. A value 0 is sometimes reserved to, for example, indicate that the region is a basic region (no combination exists). As the value, a value defined in advance, for example, an integer value for interoperability (1 for a union, 2 for an intersection, or the like) needs to be used. num_input_regions indicates the number of regions used in a combined region. Here, input_region_identifier indicates the region identifier of an input region used in the combined region.

In this definition, repetition between samples is necessary. On the other hand, different combination types can be handled in the same sample, and since the sample is self-contained, a flexible description is possible. In this method, however, what kind of combination is being used cannot be determined before the sample is processed.

In several specific use methods, under conditions that the number of combined regions does not change along with the elapse of time (for example, in a case of whole presentation or a fragment of a movie), the combination type is a predetermined type, and the same number of input regions are combined, the sample of the combined region track can be a simple payload as follows.

```
 aligned (8) class RegionCombinationSample {
 for (n=0; n < num_ input _regions, n++) {
 unsigned int(32) input_region_identifier; // region that are part of the union
 }
 }
```

Here, num_input_regions indicates the number of regions used in the combined region, and this can be acquired from the sample entry or one of the sub-boxes thereof. Here, input_region_identifier indicates the region identifier of a region used in the combined region.

In this specific use method, static information (that is, this does not change over time) can be described at the sample entry level (the 'stsd' box or one of the sub-boxes thereof).

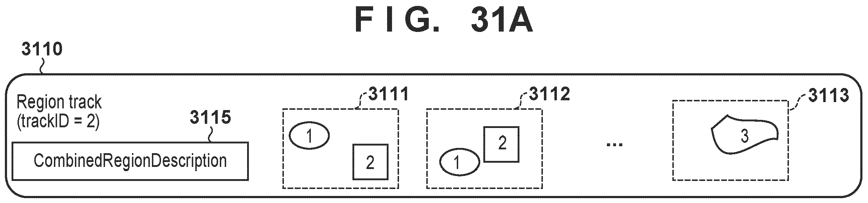

Fig. 31A shows a region track 3110, for example, an example of a 'rgan' track, and the description of a combined region 3115 is included in the metadata portion. The region track includes a sample 3111, 3112, or 3113 that provides the description of a region. Here, association with a source track is not shown. The description of the combined region 3115 is sometimes shown as a sample group having dedicated grouping_type. For example, in a case of information about a combined region, 'crif is shown to identify the sample group type. The sample group is defined in SampleToGroupBox (the 'sbgp' portion of 3115) in which grouping_type equals 'crif'. By grouping, samples in which regions are combined to form one or more combined regions can be put into a group. In associated SampleGroupDescriptionBox ('sgpd' of 3115) in which grouping_type is 'crif', one or more specific SampleGroupDescriptionEntry for providing the description of these combined regions are included. For example, the 'sgpd' entry can be defined as follows.

```
 class CombinedRegionGroupEntry() extends
 SampleGroupDescriptionEntry('crif') {
 unsigned int(32) entry_count;
 for (i=1; i<= entry_count; i++) {
 unsigned int(8) regionID;
 unsigned int(8) combination_type;
 unsigned int (8) num_input_regions;
 for (n=0; n < num_ input _regions, n++) {
 unsigned int(32) input_region_identifier; // region that are part of the union
 }
 }
```

Here, entry_count is an integer indicating the number of combined regions in the entry. Here, regionID is an integer that designates the region identifier of the combined region. Here, combination_type is an integer that designates the combination type. A value 0 is a reserved value, and as the value, a value defined in advance, for example, an integer value for interoperability (1 for a union, 2 for an intersection, or the like) needs to be used. This parameter can be optional if the combination type is a default combination such as a union of regions or is designated in another place such as a track configuration or the description of a sample ('stbl' or 'stsd' or a sub-box thereof). Here, num_input_regions is an integer that designates the number of input regions used in the combined region. Here, input_region_identifier indicates the region identifier of an input region used in the combined region. This designates the value of one region identifier in the sample of the region track.

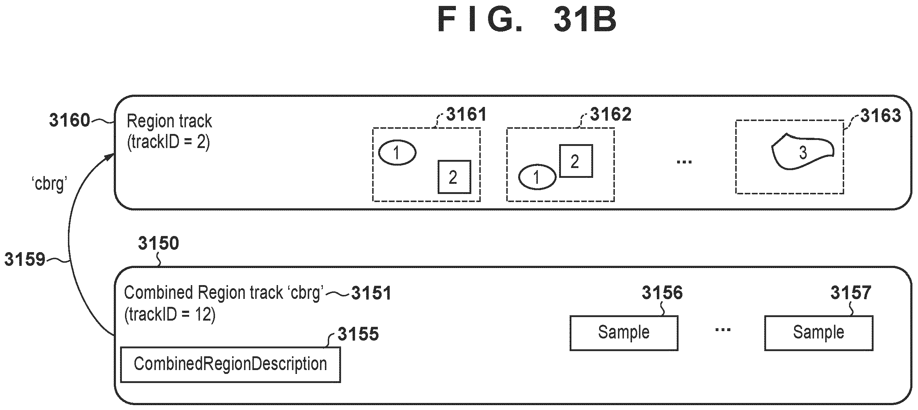

According to this embodiment, the mechanism of annotation association is extended, and not only the region identifier included in the sample of the region track but also regionID included in the sample group description entry can be considered as a region identifier. If a plurality of region tracks are included in the media file, there is a region track capable of including a sample group that describes the combination of regions between the samples of the region track. In this example, the combined region declared in the metadata portion 3115 of the region track uses only the input region from the region track. That is, region combination is only regions included in the track. Fig. 31B shows an example in which the description of the combined region 3155 is included in the metadata portion of a combined region track 3150. The combined region track is indicated by, for example, a sample entry type 'cbrg' 3151 in the 'stsd' box. The track 3150 refers to a region track 3160, and a sample thereof includes a region sample 3161, 3162, or 3163 that defines a region, a simple region, or a basic region. Although not illustrated, the association between the region track and the source track can similarly be designated.

As for description of a combined region, for example, the combination of regions 1 and 2 of the samples 3161 and 3162 may be indicated as a sample group having dedicated grouping_type such as 'crif' that is information about a combined region of a combined region track. The sample group is defined by SampleToGroupBox ('cbgp' of 3155) in which grouping_type is 'crif'. By the grouping, a sample such as 3156 or 3157 can be grouped from a combined region track (even if a sample is an empty sample) having the same combined region such as a region indicated by the same combination type, the same number of input regions, and the same region identifier.

For example, if two regions having persistent identifiers are declared as a union of regions having region identifier 3 from time t1 to t2, the samples 3156 and 3157 between t1 and t2 form a part of the same sample group. The two regions may be regions of the same region tracks or different region tracks. The sample group of the combined region can be mapped on the description entry of the combined region. If not being mapped, the combination of the regions of the sample group is absent. The combined region description entry can be defined as an entry of the 'sgpd' box as follows (if the scope of the region identifier is global to the file).

```
 class CombinedRegionGroupEntry() extends
 SampleGroupDescriptionEntry('crif) {
 unsigned int(32) entry_count;
 for (i=1; i<= entry_count; i++) {
 unsigned int(8) regionID;
 unsigned int(8) combination_type;
 unsigned int (8) num_input_regions;
 for (n=0; n < num_ input _regions, n++) {
 unsigned int(32) input_region_identifier; // region that are part of the union
 }
 }
```

Here, entry_count is an integer indicating the number of combined regions in the entry. Here, regionID is an integer that designates the region identifier of the combined region. Here, combination_type is an integer that designates the combination type. A value 0 is a reserved value, and as the value, a value defined in advance, for example, an integer value for interoperability (1 for a union, 2 for an intersection, or the like) needs to be used. This parameter can be optional if the combination type is a default combination such as a union of regions or is designated in another place such as a track configuration or the description of a sample ('stbl' or 'stsd' or a sub-box thereof). Here, num_input_regions is an integer that designates the number of input regions used in the combined region. Here, input_region_identifier indicates the region identifier of a region used in the region track to be referred to. This designates the value of one region identifier in one sample of the region track.

In this embodiment, the combined region declared by a metadata portion 3152 of the combined region track uses input regions from one or more region tracks to be referred to. That is, regions can be combined both across tracks and from a single region track. If the scope is global to a media file, the input region is indicated by a region identifier (input_region_identifier parameter). If the scope of the region identifier is at a track level, it can be indicated via a pair of input_region_identifier and trackID or via a pair of input_region_identifier and track_ref_idx. Here, track_ref_idx is the index of an entry in a track reference box of type 'cbrg' 3159 that associates the combined region 3150 with one or more region tracks 3160.

In the modification, the combination_type parameter may not be included in "CombinedRegionGroupEntry". In this case, the parameter may be provided by grouping_type_parameter of SampleToGroupBox in which grouping_type equals 'crif'. This means that there may exist 'sbgp' boxes and 'sgpd' boxes as many as the number of combination types in use. Since SampleToGroupBox 'sbgp' may be absent, this is not suitable when default sample grouping is applied to describe the region combination of 3152 or 3115 applied to all samples of a track or a track fragment. According to the embodiment corresponding to Fig. 31A or 31B, the region combination can be declared after a track construction (at least a part of the description of a data portion and a sample of a track in the 'mdat' box), and the sample payload need not be edited.

In a track that provides the description of a derived region or a combined region (the combined region track 3150 shown in Fig. 31B, the combined region track 3050 shown in Fig. 30, or an extended region track shown in Fig. 29), a 'regm' sample group can exist in this track. For the sample group, region_identifier corresponding to the region identifier of the combined region or the input region can be considered. As for the persistence of the region identifier, if it is set in the flag of the sample entry, it can be applied to both the basic region and the combined region (example: the sample entry type of 'rgan' or 'cbrg', or a 4-character code used for a region track or a combined region track). To more finely control the persistence of the region identifier and discriminate between the persistence of a simple region and the persistence of a combined region, an additional flag value can be defined as follows in the sample entry of a region track or a combined region track (example: the sample entry type of 'rgan' or 'cbrg', or a 4-character code used for a region track or a combined region track).

0x000004 persistent_combined_region_ids indicates the range of the region identifier of a combined region that exists in the sample to refer to the sample entry. When setting, it designates that the scope of the combined region identifier is persistent to the sample. That is, identical region identifiers of combined regions in different samples mapped on the sample entry identify the same combined region. Otherwise, the scope of the region identifier of the combined region is a sample. If an individual flag value is used, a value 0x000002 persistent_region_ids is applied only to a simple region or a basic region.

Note that the sample group mechanism of the combined region described with reference to Fig. 31A or 31B can be also used to express the relationship between regions. The information of the relationship between regions can be indicated by extending CombinedRegionGroupEntry in addition to the designation of the combination type or in place of the designation of the combination type. For example, the relationship information between regions is indicated as an integer value in the list of values defined in advance. It can also be expressed by a 4-character code, but the number of bits necessary for the description is large. For example, in a case of an inclusion relationship, a value defined in advance is designated as 0. This means that the first region in the list indicated by region_identifier includes another region in the list. Also, 1 indicates a contact relationship indicating a common boundary between regions. Also, 2 indicates a depth relationship. 3 can indicate the relationship between regions described in the first and second embodiments, such as an occlusion relationship (for example, the first region hides the second region).

To identify a combined region and identify the relationship between regions, different grouping_type values are preferably used. For example, 'crif' is a type for a combined region, and to indicate the region relationship, another 4-character code such as 'rrel' is reserved to indicate the region relationship. The entry of the description of the relationship between regions of SampleGroupDescriptionBox'sgpd' is as follows.

```
 class RegionRelationshipGroupEntry() extends
 SampleGroupDescriptionEntry('rrel') {
 unsigned int(32) entry_count;
 for (i=1; i<= entry_count; i++) {
 unsigned int(8) relation_type;
 unsigned int (8) num_input_regions;
 for (n=0; n < num_ input _regions, n++) {
 unsigned int(32) input_region_identifier; // region that are part of the union
 }
 }
```

Here, entry_count is an integer indicating the number of relationships described in the entry. Note that no region identifier needs to be defined for the relationship between regions. Next, the following parameters are formed by designating the region identifier of a region having a certain relationship. In the embodiment associated with Fig. 31B, in accordance with the range of a region identifier, if the range is global to a media file, it is indicated by a region identifier (input_region_identifier parameter). If the range of a region identifier is at the track level, a region can be indicated via a pair of input_region_identifier and trackID or as a pair of input_region_identifier and track_ref_idx. Here, track_ref_idx is the index of an entry in a track reference box of type 'cbrg' indicated by 3159 that associates the combined region track 3150 with one or more region tracks 3160. In addition, such identification information can be designated as a grouping_type_parameter in SampleToGroupBox for the description of the combined region 'crif' or as grouping_type_parameter in SampleToGroupBox for the description of the region relationship 'rrel'. In this case, the parameter relation_type does not exist in CombinedRegionGroupEntry or RegionRelationshipGroupEntry.

As described above, it is possible to individually identify region information not only in a still image but also in a moving image and further combine these regions in accordance with a type and identify these. Note that it is obvious that even for a three-dimensional moving image, it can be implemented by combining the above-described embodiments.

Also, the numerical values, processing timings, processing orders, the subject of processing, data (information) configuration/acquisition method/transmission destination/transmission source/storage location, and the like used in the above-described embodiments are merely examples used to make a detailed description, and the present invention is not intended to be limited to the examples.

Some or all of the above-described embodiments may appropriately be used in combination. Some or all of the above-described embodiments may selectively be used.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-104896 filed June 29, 2022, and Japanese Patent Application No. 2022-176531 filed November 2, 2022, which are hereby incorporated by reference herein.

## Claims

1. An information processing apparatus for generating a media file, **characterized by** comprising:
acquisition means for acquiring an image;
first generation means for generating at least one piece of region information that describes at least one piece of shape information for identifying a substance included in the image;
second generation means for generating association information that associates the image with the region information;
third generation means for generating combination type information that combines the region information;
fourth generation means for generating combined region information for identifying a region combined in accordance with the combination type information; and
storage means for storing, in a media file, the at least one piece of region information, the association information, the combination type information, the combined region information, and the image.

2. An information processing apparatus for processing a media file, **characterized by** comprising:
acquisition means for acquiring a media file including an image, at least one piece of region information that describes at least one piece of shape information for identifying a substance included in the image, association information that associates the image with the region information, combination type information that combines the region information, and combined region information for identifying a region combined in accordance with the combination type information; and
processing means for processing the image using the information of the media file.

3. The information processing apparatus according to claim 1 or 2, **characterized in that** the image is one of a still image, a moving image, a three-dimensional still image, and a three-dimensional moving image.

4. The information processing apparatus according to any one of claims 1 to 3, **characterized in that** the combined region information is information that can be identified independently of the region information.

5. The information processing apparatus according to any one of claims 1 to 4, **characterized in that** the combined region information is information that groups the at least one piece of region information and identifies.

6. The information processing apparatus according to any one of claims 1 to 4, **characterized in that** the combined region information is information that derives the at least one piece of region information as a derived region and identifies.

7. The information processing apparatus according to any one of claims 1 to 4, **characterized in that** the combined region information is information that generates a combination of the at least one piece of region information using the same data structure as the region information and identifies.

8. The information processing apparatus according to any one of claims 1 to 4, **characterized in that** the combined region information is information that identifies as a track that describes a combination of the at least one piece of region information.

9. The information processing apparatus according to any one of claims 1 to 4, **characterized in that** the combined region information is information that generates as a sample that describes a combination of the at least one piece of region information and identifies.

10. The information processing apparatus according to any one of claims 1 to 9, **characterized in that** the combination type information is information that identifies, as a combined region, one of a region obtained by performing composition (OR) of regions indicated by at least two pieces of region information, a region obtained by performing inversion (NOT) of a region indicated by at least one piece of region information, a region obtained by performing NOR of regions indicated by at least two pieces of region information, and a region obtained by performing a logical operation of a region indicated by at least one piece of region information.

11. The information processing apparatus according to any one of claims 1 to 9, **characterized in that** the combination type information is one of information capable of identifying an inclusion relationship between regions indicated by at least two pieces of region information, information capable of identifying a relationship that as a constituent element of one region of regions indicated by at least two pieces of region information, another region is included, information capable of identifying an arrangement order of a forward/backward relationship of foreground/background of regions indicated by at least two pieces of region information, information capable of identifying that in at least two pieces of region information, a region of a substance indicated by one region information is a region hidden by a region of a substance indicated by the other region information, and information capable of identifying a contact relationship between, a region of a substance indicated by one region information of at least two pieces of region information and a region of a substance indicated by the other region information, and the combination type information is information that identifies association between the regions.

12. The information processing apparatus according to any one of claims 1 to 11, **characterized in that** the region information and the combined region information are pieces of information with which annotation information can individually be associated.

13. The information processing apparatus according to any one of claims 1 to 12, **characterized in that** region information of a region combined in accordance with the combination type information is information that combined region information separately combined can be designated as region information.

14. An information processing method for generating a media file, which is performed by an information processing apparatus, **characterized by** comprising:
an acquisition step of acquiring an image by acquisition means of information processing apparatus;
a first generation step of generating, by first generation means of the information processing apparatus, at least one piece of region information that describes at least one piece of shape information for identifying a substance included in the image;
a second generation step of generating, by second generation means of the information processing apparatus, association information that associates the image with the region information;
a third generation step of generating, by third generation means of the information processing apparatus, combination type information that combines the region information;
a fourth generation step of generating, by fourth generation means of the information processing apparatus, combined region information for identifying a region combined in accordance with the combination type information; and
a storage step of storing, in a media file, the at least one piece of region information, the association information, the combination type information, the combined region information, and the image by storage means of the information processing apparatus.

15. An information processing method for processing a media file, which is performed by an information processing apparatus, **characterized by** comprising:
an acquisition step of acquiring, by acquisition means of the information processing apparatus, a media file including an image, at least one piece of region information that describes at least one piece of shape information for identifying a substance included in the image, association information that associates the image with the region information, combination type information that combines the region information, and combined region information for identifying a region combined in accordance with the combination type information; and
a processing step of processing, by processing means of the information processing apparatus, the image using the information of the media file.

16. The information processing method according to claim 14 or 15, **characterized in that** the image is one of a still image, a moving image, a three-dimensional still image, and a three-dimensional moving image.

17. The information processing method according to any one of claims 14 to 16, **characterized in that** the combined region information is information that can be identified independently of the region information.

18. The information processing method according to any one of claims 14 to 17, **characterized in that** the combination type information is information that identifies, as a combined region, one of a region obtained by performing composition (OR) of regions indicated by at least two pieces of region information, a region obtained by performing inversion (NOT) of a region indicated by at least one piece of region information, a region obtained by performing NOR of regions indicated by at least two pieces of region information, and a region obtained by performing a logical operation of a region indicated by at least one piece of region information.

19. The information processing method according to any one of claims 14 to 17, **characterized in that** the combination type information is one of information capable of identifying an inclusion relationship between regions indicated by at least two pieces of region information, information capable of identifying a relationship that as a constituent element of one region of regions indicated by at least two pieces of region information, another region is included, information capable of identifying an arrangement order of a forward/backward relationship of foreground/background of regions indicated by at least two pieces of region information, information capable of identifying that in at least two pieces of region information, a region of a substance indicated by one region information is a region hidden by a region of a substance indicated by the other region information, and information capable of identifying a contact relationship between, a region of a substance indicated by one region information of at least two pieces of region information and a region of a substance indicated by the other region information, and the combination type information is information that identifies association between the regions.

20. The information processing method according to any one of claims 14 to 19, **characterized in that** the region information and the combined region information are pieces of information with which annotation information can individually be associated.

21. The information processing method according to any one of claims 14 to 20, **characterized in that** region information of a region combined in accordance with the combination type information is information that combined region information separately combined can be designated as region information.

22. A computer program configured to cause a computer to function as each means of an information processing apparatus defined in any one of claims 1 to 13.
